(19) Europäisches Patentamt
European Patent Office
Office européen des brevets

(11) **EP 2 013 297 B1**

(12) **EUROPÄISCHE PATENTSCHRIFT**

(45) Veröffentlichungstag und Bekanntmachung des Hinweises auf die Patenterteilung:
**10.07.2013 Patentblatt 2013/28**

(21) Anmeldenummer: **07728219.2**

(22) Anmeldetag: **18.04.2007**

(51) Int Cl.:
**C09D 5/08** (2006.01)    **C08F 226/06** (2006.01)
**C08F 230/02** (2006.01)    **C09D 139/04** (2006.01)

(86) Internationale Anmeldenummer:
**PCT/EP2007/053757**

(87) Internationale Veröffentlichungsnummer:
**WO 2007/125038 (08.11.2007 Gazette 2007/45)**

(54) **VERFAHREN ZUM AUFBRINGEN KORROSIONSSCHUTZSCHICHTEN AUF METALLISCHE OBERFLÄCHEN**

METHOD FOR THE APPLICATION OF CORROSION-RESISTANT LAYERS TO METALLIC SURFACES

PROCÉDÉ D'APPLICATION DE COUCHES ANTICORROSION SUR DES SURFACES MÉTALLIQUES

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **26.04.2006 EP 06113119**

(43) Veröffentlichungstag der Anmeldung:
**14.01.2009 Patentblatt 2009/03**

(73) Patentinhaber: **BASF SE**
**67056 Ludwigshafen (DE)**

(72) Erfinder:
• **VANDERMEULEN, Guido**
**68549 Ilvesheim (DE)**
• **GÖTHLICH, Alexander**
**68163 Mannheim (DE)**
• **HICKL, Markus**
**48145 Münster (DE)**
• **DORNBUSCH, Michael**
**48167 Münster (DE)**
• **FERNANDEZ GONZALEZ, Monica**
**67227 Frankenthal (DE)**
• **ROSCHMANN, Konrad**
**67069 Ludwigshafen-Edigheim (DE)**
• **BERGMANN, Hermann**
**098652 Singapore (SG)**

(56) Entgegenhaltungen:
EP-A- 0 699 632        EP-A- 0 776 992
EP-A1- 0 933 409       WO-A-2005/078025
WO-A1-2007/010035      US-A- 4 177 179
US-A- 5 483 004

## Beschreibung

Die vorliegende Erfindung betrifft ein Verfahren zum Aufbringen von Korrosionsschutzschichten, insbesondere von integrierten Vorbehandlungsschichten oder von Schichten für den atmosphärischen Korrosionsschutz, auf metallische Oberflächen, bei dem man Copolymere einsetzt, welche als monomere Bausteine Stickstoffheterocyclen aufweisende Monomere, saure Gruppen aufweisende Monomere sowie vinylaromatische Monomere aufweisen. Sie betrifft weiterhin die besagten Copolymere sowie Zubereitungen zum Aufbringen von Korrosionsschutzschichten.

Metallische Gegenstände, Bauteile, Bauwerke oder Metallkonstruktionen aus üblichen metallischen Werkstoffen müssen im Regelfalle vor Korrosion geschützt werden. Eine wesentliche Rolle im Korrosionsschutz nehmen hierbei Beschichtungen ein, mit denen die metallische Oberfläche vor dem Einfluss korrosiver Medien abgeschirmt wird. Geeignete Beschichtungssysteme zum Korrosionsschutz enthalten üblicherweise eines oder mehrere Bindemittel, Korrosionsschutzpigmente, gegebenenfalls organische Korrosionsinhibitoren sowie weitere Zusatzstoffe und Additive.

Zum Aufbringen von Korrosionsschutzschichten können verschiedene Techniken zum Einsatz kommen.

Zur Herstellung dünnwandiger, metallischer Werkstücke wie beispielsweise Automobilkarosserien, Geräte- oder Fassadenverkleidungen werden geeignete Metallbleche mittels geeigneter Techniken ausgeformt und gefügt. Das Rohmaterial hierzu sind üblicherweise lange Metallbänder, die durch Walzen des Metalls hergestellt und zum Lagern und Transportieren zu Rollen (sogenannten "Coils") aufgewickelt werden.

Während die Korrosionsschutzbehandlung in der Vergangenheit im Wesentlichen am fertigen metallischen Werkstück, beispielsweise einer zusammengeschweißten Automobilkarosserie vorgenommen wurde, wird in neuerer Zeit die Korrosionsschutzbehandlung in zunehmendem Maße am Bandmetall selbst mittels "Coil-Coating" vorgenommen.

Unter "Coil-Coating" versteht man das kontinuierliche Beschichten von Metallbändern, beispielsweise Aluminium- oder Stahlbändern mit geeigneten Beschichtungsstoffen auf einer Coil-Coating-Anlage.

Im Zuge eines Coil-Coating-Prozesses werden die Metallbänder in der Regel zunächst gereinigt, sofern erforderlich. Die eigentliche Korrosionsschuzubehandlung ist bei einem konventionellen Coil-Coating-Prozess zweistufig:

• Zunächst wird eine dünne Vorbehandlungsschicht (< 1 $\mu$m) aufgetragen. Diese Schicht soll die Korrosionsbeständigkeit steigern und dient der Verbesserung der Haftung nachfolgender Lackschichten an der Metalloberfläche. Hierzu sind Cr(VI)-haltige, Cr(III)-haltige sowie auch chromatfreie Vorbehandlungsbäder bekannt.

• Hiernach wird eine Grundierung ("Primer") aufgebracht. Die Trockenschichtdicke liegt üblicherweise bei etwa 5 - 8 $\mu$m. Hierzu werden in der Regel geeignete Einbrennlacke und/oder fotochemisch härtende Lacke eingesetzt.

Auf das so vorbehandelte Metallband können je nach Verwendungszweck eine oder mehrerer Decklackschichten ("Topcoat") aufgebracht werden. Dies kann noch auf der Coil-Coating-Anlage und/oder auch erst zu einem späteren Zeitpunkt erfolgen.

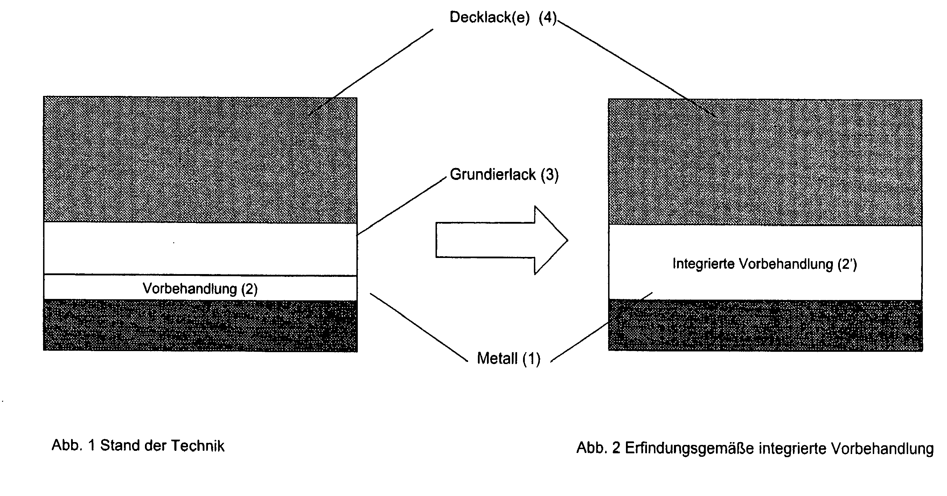

Der Schichtaufbau eines in dieser Weise beschichteten Metallbandes ist schematisch in Abbildung 1 dargestellt. Auf das Metall (1) sind eine konventionelle Vorbehandlungsschicht (2), eine Grundierung (3) sowie eine oder auch mehrere verschiedene Decklackschichten (4) aufgebracht. Die zweistufige Beschichtung der Metallbänder mit der Vorbehandlungsschicht (2) und einer Grundierung (3) ist sehr aufwändig. Weiterhin steigt im Markt zunehmend die Nachfrage nach Cr(VI)-freien Systemen zum Korrosionsschutz. Es hat daher erstrebenswert, anstelle der Vorbehandlungsschicht (2) und des organischen Grundlackes (3) eine einzige integrierte Vorbehandlungsschicht (2') aufzubringen, die die Funktionen beider Schichten übernimmt. Ein solcher Schichtaufbau ist beispielhaft und schematisch in Abbildung 2 gezeigt. Die Herstellung eines beschichteten Metallbandes wird durch einen solchen Einstufenprozess deutlich vereinfacht.

Bei immobilen metallischen Konstruktionen wie beispielsweise Gebäuden, Brücken, Strommasten, Öltanks, Pipelines, Kraftwerken oder chemischen Anlagen können die Korrosionsschutzbeschichtungen naturgemäß nicht wie beschrieben aufgebracht werden, sondern werden üblicherweise an Ort und Stelle aufgestrichen oder aufgespritzt. Die Trocknung und Härtung derartiger Korrosionsschutzbeschichtungen erfolgt unter atmosphärischen Bedingungen also bei Umgebungstemperatur sowie in Gegenwart von Luft und üblicher Luftfeuchtigkeit. Diese Art von Korrosionsschutz wird auch als atmosphärischer Korrosionsschutz bezeichnet, häufig je nach Art der Korrosionsbelastung als leichter, mittlerer oder schwerer Korrosionsschutz.

WO 2004/81128 offenbart die Verwendung von Polymeren, welche mehr als 45 bis 100 Gew. % Vinylimidazol umfassen, zum Passivieren von Metalloberflächen. Die Polymere können darüber hinaus bis zu 50 Gew. % N-Vinyllactame, Vinylheteroaromaten, Vinylester oder $C_1$ bis $C_{10}$-(Meth)acrylate sowie 0 bis 5 Gew. % Säuregruppen aufweisende monoethylenisch ungesättigte Monomere umfassen.

EP-A 1 288 338 offenbart Copolymere aus Maleinsäure bzw. Maleinsäureanhydrid und Olefinen. Die Maleinsäureeinheiten können nachträglich in einer polymeranalogen Reaktion durch Umsetzen mit 1-(3-Aminopropyl)imidazol mit Imidazol-Einheiten funktionalisiert werden. Die Polymere können als Korrosionsinhibitoren in wässrigen Systemen eingesetzt werden.

JA-70 37034 offenbart Copolymere aus 2 bis 40 Gew. % Imidazolgruppen aufweisenden Monomeren, 3 bis 50 Gew. % Carboxylgruppen aufweisenden Monomeren sowie 2 bis 50 Gew. % OH-Gruppen aufweisenden Monomeren. Daneben können noch andere Monomere, beispielsweise Acrylate, vorhanden sein. Die Polymere können zum Beschichten, insbesondere in Elektrotauchlacken eingesetzt werden.

WO 93/07190 offenbart Copolymere aus 1 bis 20 Gew. % Vinylimidazol und/oder Dimethylaminopropylmethacrylamid, 0 bis 50 Gew. % OH-Gruppen aufweisenden Monomeren, 0 bis 50 Gew. % Carboxylgruppen aufweisenden Monomeren sowie 30 bis 85 Gew. % von anderen ethylenisch ungesättigten Monomeren. Die Copolymere können beispielsweise als Bindemittel in Autoreparaturlacken eingesetzt werden.

JP-A 2001-215712 offenbart Copolymere aus sauren, basischen Monomeren sowie darüber hinaus Monomeren auf Basis von Alkyl- bzw. Aryl- Ammonium- oder Phsphoniumsalzen. Konkret offenbart werden ein Copolymer aus 70 Gew. % N-Vinylimidazol, 10 Gew. % Methacrylsäure und 20 Gew. % Vinylbenzyltributylphosphoniumchlorid sowie ein Copolymer aus 50 Gew. % Vinylimidazol, 40 Gew. % Vinylbenzylphosphonsäure sowie 20 Gew. % Vinylbenzyltriethylammoniumchlorid. Vinylaromatische Kohlenwasserstoffe als Comonomere sind nicht offenbart.

DE-A 25 47 970 offenbart Copolymere als Bindemittel für Anstrichfarben, welche 0,5 bis 5 Gew. % Vinylimidazol sowie darüber hinaus (Meth)acrylsäureester, Styrol, Vinylester oder Ethylen enthalten.

DE 1 223 247 offenbart wasserlösliche Copolymere zur Leimung von Papier, welche 5 bis 95 Gew. % Vinylimidazol sowie 95 bis 5 Gew. % andere Comonomere, z.B. Acrylsäure umfassen.

EP 0 699 632 A1 betrifft die Verwendung von Copolymeren zur Verhinderung von Korrosion und Belägen in hochenthalpische Fluide führenden Systemen, wobei das hochenthalpische Fluid mit einer wirksamen Menge wenigstens eines Copolymeren in Kontakt gebracht wird. Solche Copolymere sind durch Umsetzung von wenigstens einem vinylisch ungesättigten Monomeren, welches wenigstens eine Carboxylgruppe aufweist mit wenigstens einem vinylisch ungesättigten Monomeren, welches wenigstens eine tertiäre Aminogruppe aufinreist, erhältlich.

US 5,483,004 betrifft ein Acrylatcopolymer enthaltend Aminogruppen, Carboxylgruppen und gegebenenfalls Hydroxylgruppen, wobei ein solches Acrylatcopolymer hergestellt wird durch radikalische Lösungspolymerisation bei Temperaturen von 80 ° bis 150 °C, unter Verwendung wenigstens eines ethylenisch ungesättigten Monomers mit einer tertiären Aminogruppe. Eingesetzt werden von 1 bis 20 Gew.% Vinylimidazol und / oder Dimethylaminopropylmethacrylamid, 0 bis 50 Gew.% eines oder mehrerer Monomere enthaltend Hydroxylgruppen, 0 bis 50 Gew.% eines oder mehrerer Monomere enthaltend Carboxylgruppen und 30 bis 85 Gew.% mindestens eines weiteren ethylenisch ungesättigten copolymerisierbaren Monomeren. Das Acrylatcopolymer wird dann mit Carbonsäureanhydriden umgesetzt, wobei die Menge an Carbonsäureanhydriden so gewählt wird, dass das resultierende Copolymer eine gewünschte Säurezahl aufweist. Weiterhin beschreibt die US 5,483,004 Beschichtungsmittel auf Lösungsmittelbasis, umfassend Acrylatcopolymere als Bindemittel. Weiterhin beschrieben werden Anwendungen wie Autoreparaturlackierungen oder Klarlackzusammensetzungen.

Keine der zitierten Schriften offenbart aber die eingangs definierten Copolymere sowie Verfahren zum Aufbringen von Korrosionsschutzschichten unter Verwendung derartiger Copolymere, insbesondere keine kontinuierlichen Verfahren zum Aufbringen integrierter Korrosionsschutzschichten auf Bandmetalle.

WO 2005/078025 offenbart integrierte Vorbehandlungsschichten sowie ein Verfahren zum Aufbringen integrierter Vorbehandlungsschichten, welche als Korrosionsschutzmittel Dithiophosphorsäureester enthalten. Unsere noch unveröffentlichte Anmeldung WO 2006/084879 offenbart ein Verfahren zum Aufbringen integrierter Vorbehandlungsschichten, welche als Korrosionsschutzmittel Dithiophosphinsäuren enthalten. Die Verwendung polymerer Korrosionsschutzmittel wird nicht offenbart.

Aufgabe der Erfindung war es, ein verbessertes Verfahren zum Aufbringen von Korrosionsschutzschichten, insbesondere von integrierten Vorbehandlungsschichten sowie Schichten zum atmosphärischen Korrosionsschutz, verbesserte Korrosionsschutzschichten sowie verbesserte Korrosionsschutzmittel bereitzustellen.

Dementsprechend wurde ein Verfahren zum Aufbringen von Korrosionsschutzschichten auf metallische Oberflächen gefunden, bei dem man die metallische Oberfläche mit einer Zubereitung mindestens umfassend ein härtbares oder vernetzbares Bindemittelsystem (A), eine Komponente (B), ausgewählt aus der Gruppe von feinteiligen Füllstoffen, Pigmenten oder Farbstoffen, sowie ein polymeres Korrosionsschutzmittel (C) behandelt, wobei es sich bei dem polymeren Korrosionsschutzmittel um ein Copolymer (C) handelt, welches aus folgenden monomeren Bausteinen aufgebaut ist:

(C1) 25 bis 65 Gew. % N-Vinylimidazol,

(C2) 15 bis 45 Gew. % mindestens eines monoethylenisch ungesättigten Monomers, welches mindestens eine Säuregruppe umfasst,

(C3) 15 bis 45 Gew. % mindestens eines monoethylenisch ungesättigten, aromatischen Kohlenwasserstoffes, sowie

(C4) optional 0 bis 15 Gew. % von weiteren -von (C1) bis (C3) verschiedenen- ethylenisch ungesättigten Monomeren,

wobei die Menge jeweils auf die Gesamtmenge aller monomeren Baueinheiten im Copolymer bezogen ist.

In einer bevorzugten Ausführungsform der Erfindung handelt es sich um ein Verfahren zum Aufbringen integrierter Vorbehandlungsschichten, welche unter Verwendung eines thermisch und/oder fotochemisch vernetzbaren Bindemittelsystems aufgebracht werden, und die Schicht danach thermisch und/oder fotochemisch vernetzt wird.

In einer weiteren bevorzugten Ausführungsform der Erfindung handelt es sich um ein Verfahren zum atmosphärischen Korrosionsschutz, bei dem man ein unter atmosphärischen Bedingungen härtbares Bindemittelsystems einsetzt, und die Schicht nach dem Aufbringen unter atmosphärischen Bedingungen gehärtet wird.

In einem weiteren Aspekt betrifft die Erfindung Copolymere der eingangs genanten Definition sowie Formulierungen zum Aufbringen von Korrosionsschutzschichten, welche die eingangs genanten Copolymere umfassen.

Überraschenderweise wurde gefunden, dass die erfindungsgemäßen Copolymere zu verbesserten Korrosionsschutzschichten führen. Die Copolymere verleihen der Oberfläche einen guten Korrosionsschutz, eine gute Haftung und können auch die mechanischen Eigenschaften der Lacke signifikant verbessern. Durch Einbau zusätzlicher Hydroxy- und/oder Amino-Funktionalitäten kann die Anbindung der Copolymere an das Bindemittelsystem verbessert werden. Zusätzlich hat das Copolymer eine gewisse Amphilie, es ist also fähig Grenzflächen wie Metall-Lack, Lack-Umgebung, hydrophobhydrophile Grenzflächen im Lack zu stabilisieren.

Verzeichnis der Abbildungen

Abbildung.1:    Schnitt durch ein beschichtetes Metallband bei zweistufiger Vorbehandlung gemäß Stand der Technik

Abbildung 2:    Schnitt durch beschichtetes Metallband mit erfindungsgemäßer, integrierter Vorbehandlung.

Zu der Erfindung ist im Einzelnen das Folgende auszuführen:

Copolymer (C)

Das erfindungsgemäße Copolymer (C) ist aus den Monomeren (C1), (C2), (C3) sowie optional (C4) aufgebaut, wobei selbstverständlich jeweils mehrere verschiedene Monomere (C1), (C2), (C3) bzw. optional (C4) eingesetzt werden können. Außer (C1), (C2), (C3) und gegebenenfalls (C4) sind keine weiteren Monomere vorhanden.

Monomere (C1)

Bei Monomer (C1) handelt es sich um 1-Vinylimidazol.

Die Menge des Monomers (C1) beträgt erfindungsgemäß 25 bis 65 Gew.-%, bezogen auf die Gesamtmenge aller monomeren Baueinheiten in Copolymer (C). Bevorzugt beträgt die Menge 30 bis 60 Gew. % und ganz besonders bevorzugt 35 bis 55 Gew. %.

Monomere (C2)

Bei den Monomeren (C2) handelt es sich um monoethylenisch ungesättigte Monomere, welche mindestens eine Säuregruppe aufweisen. Die Säuregruppe kann als freie Säuregruppe oder aber auch ganz oder teilweise als Salz vorliegen.

Bevorzugt handelt es sich bei den Säuregruppen um mindestens eine ausgewählt aus der Gruppe von Carboxylgruppen, Phosphorsäuregruppen, Phosphonsäuregruppen und Sulfonsäuregruppen.

Beispiele von Monomeren mit COOH-Gruppen umfassen (Meth)acrylsäure, Vinylessigsäure, Crotonsäure oder Isocrotonsäure. Es kann sich auch um Monomere mit 2 COOH-Gruppen handeln. Beispiele umfassen Maleinsäure, Fumarsäure, Methylfumarsäure, Methylmaleinsäure, Dimethylmaleinsäure sowie gegebenenfalls die entsprechenden cyclischen Anhydride. Bevorzugte Monomere mit COOH-Gruppen sind (Meth)acrylsäure sowie Itaconsäure.

Beispiele von Monomeren, welche Phosphorsäure- und/oder Phosphonsäuregruppen aufweisen umfassen Vinylphosphonsäure, Phosphorsäuremonovinylester, Allylphosphonsäure, Phosphorsäuremonoallylester, 3-Butenylphosphonsäure, Phosphorsäure-(mono-3-butenyl)ester, Phosphorsäuremono-(4-vinyloxybutyl)ester, Acrylsäure(phosphonoxyethyl)ester, Methacrylsäure(phosphonoxyethyl)ester, Phosphorsäure mono-(-2-hydroxy-3-vinyloxy-propyl)ester, Phosphorsäuremono-(1-phosphonoxymethyl-2-vinyloxy-ethyl)-ester, Phosphorsäuremono-(3-allyloxy-2-hydroxy-propyl)ester, Phosphorsäure mono-2-(allylox-1-phosphonoxymethyl-ethyl)ester, 2-Hydroxy-4-vinyloxymethyl-1,3,2-dioxaphosphol oder 2-Hydroxy-4-allyloxymethyl-1,3,2-dioxaphosphol. Bevorzugt als Phosphorsäure- und/oder Phosphonsäuregruppen aufweisendes Monomer ist Vinylphosphonsäure.

Beispiele sulfonsäuregruppenhaltiger Monomere umfassen Allylsulfonsäure, Methallylsulfonsäure, Styrolsulfonat, Vinylsulfonsäure, Allyloxybenzolsulfonsäure, 2-Acrylamido-2-methylpropansulfonsäure oder 2-(Methyacryloyl) ethylsulfonsäure. Bevorzugt als sulfonsäuregruppenhaltiges Monomer ist Acrylamido-2-methylpropansulfonsäure.

Für Verfahren zum Aufbringen von integrierten Korrosionsschutzschichten werden als Monomer (C2) besonders bevorzugt Phosphorsäure- und/oder Phosphonsäuregruppen aufweisende Monomere eingesetzt, ganz besonders bevorzugt ist Vinylphosphonsäure.

Beim atmosphärischen Korrosionsschutz werden als Monomer (C2) besonders bevorzugt COOH- und Sulfonsäuregruppen-haltige Monomere eingesetzt, ganz besonders bevorzugt ist Itaconsäure.

Die Menge aller Monomere (C2) zusammen beträgt erfindungsgemäß 15 bis 45 Gew. %, bezogen auf die Gesamtmenge aller monomeren Baueinheiten in Copolymer (C). Bevorzugt beträgt die Menge 20 bis 40 Gew. % und ganz besonders bevorzugt 22 bis 36 Gew. %.

Monomere (C3)

Bei den Monomeren (C3) handelt es sich um mindestens einen monoethylenisch ungesättigten, aromatischen Kohlenwasserstoff.

Beispiele derartiger Kohlenwasserstoffe umfassen insbesondere Styrol sowie Derivate von Styrol, wie $\alpha$-Methylstyrol, 2-Vinyltoluol, 4-Vinyltoluol oder Allylbenzol.

Besonders bevorzugt handelt es sich um Stryol.

Die Menge aller Monomere (C3) zusammen beträgt erfindungsgemäß 15 bis 45 Gew. %, bezogen auf die Gesamtmenge aller monomeren Baueinheiten in Copolymer (C). Bevorzugt beträgt die Menge 20 bis 40 Gew. % und ganz besonders bevorzugt 25 bis 35 Gew. %.

Monomere (C4)

Die erfindungsgemäß verwendeten Copolymere (C) können darüber hinaus noch bevorzugt 0 bis 15 Gew. % und besonders bevorzugt 0 bis 10 Gew. % anderer mono ethylenisch ungesättigter Monomere (C4), die von (C1), (C2) und (C3) verschieden, aber mit (C1), (C2) und (C3) copolymerisierbar sind, als Baueinheiten enthalten. Derartige Monomere können -falls erforderlich- zu Feinjustierung der Eigenschaften des Copolymers (C) eingesetzt werden.

Der Fachmann trifft hinsichtlich Art und Menge derartiger Monomere (C) je nach den gewünschten Eigenschaften sowie der gewünschten Anwendung des Polymers eine geeignete Auswahl.

Beispiele für Monomere (C) umfassen $C_1$- bis $C_{18}$-Alkylester der (Meth)acrylsäure, wie Methyl(meth)acrylat, Ethyl(meth)acrylat, Butyl(meth)acrylat oder 2-Ethylhexyl (meth)acrylat. Weitere Beispiele umfassen Vinyl- oder Allylether wie z.B. Methylvinylether, Ethylvinylether oder Vinylester wie beispielsweise Vinylacetat oder Vinylpropionat. Weiterhin können auch basische Monomere wie Acrylamide oder alkylsubstituierte Acrylamide, wie beispielsweise Acrylamid, Methacrylamid, N-tert.-Butylacrylamid oder N-Methyl(meth)acrylamid eingesetzt werden.

In einer besonders bevorzugten Ausführungsform der Erfindung handelt es sich bei Monomer (C4) um ein OH-Gruppen aufweisendes Monomer. Insbesondere kann es sich um $C_1$- bis $C_4$-Hydroxyalkylester der (Meth)acrylsäure handeln, wie beispielsweise 2-Hydroxyethyl(meth)acrylat, 2-Hydroxypropyl(meth) acrylat oder Butandiol-1,4-mono-acrylat. Bevorzugt ist 2-Hydroxyethylacrylat.

Weiterhin bevorzugt kann es sich um ein -$NH_2$-Gruppen aufweisendes Monomer handeln, bzw. ein Monomer, welches bei Hydrolyse -$NH_2$-Gruppen bilden kann. Ein Beispiel für ein derartiges Monomer ist N-Vinylformamid.

OH- und/oder $NH_2$-Gruppen können zur besseren Anbindung des Copolymers (C) an das Bindemittelsystem dienen, indem sie mit geeigneten Komponenten des Bindmittelsystems reagieren.

Sofern vorhanden, beträgt die Menge der Monomere (C4) in der Regel 1 bis 15 Gew. %, bezogen auf die Gesamtmenge aller monomeren Baueinheiten in Copolymer (C). Bevorzugt beträgt die Menge 2 bis 10 Gew. % und ganz besonders bevorzugt 3 bis 7 Gew. %.

Bei den Monomeren (C4) kann es sich auch um vernetzend wirkende Monomere mit zwei oder mehreren isolierten ethylenisch ungesättigten Doppelbindungen handeln. Beispiele umfassen Di- bzw. Poly(meth)acrylate wie Ethylenglykoldi(meth)acrylat oder Butandiol-1,4-di(meth)acrylat, Di-, Tri- oder Tetraethylenglykoldi(meth)acrylat oder Tri-methylolpropantri(meth)acrylat. Die Copolymere (C) sollten aber nicht zu stark vernetzt werden. Falls vernetzende Monomere anwesend sind, sollte deren Menge in der Regel 4 Gew. % bezüglich der Summer aller Monomerer, bevorzugt 3 Gew. % und besonders bevorzugt 2 Gew. % nicht überschreiten.

Herstellung der Copolymere (C)

Die Herstellung der erfindungsgemäß verwendeten Copolymere (C) wird bevorzugt mittels radikalischer Polymerisation vorgenommen. Die Durchführung einer radikalischen Polymerisation einschließlich dazu notwendiger Apparaturen ist dem Fachmann prinzipiell bekannt. Die Polymerisation wird bevorzugt unter Verwendung thermisch zerfallender Polymerisationsinitiatoren durchgeführt werden. Bevorzugt können Peroxide als thermische Initiatoren verwendet werden. Die Polymerisation kann aber selbstverständlich auch photochemisch vorgenommen werden.

Als Lösemittel können bevorzugt Monoalkohole eingesetzt werden. Beispiele geeigneter Monoalkohole umfassen C1- bis C8-Alkoxyalkohole und insbesondere 2-Butoxyethanol.

Die radikalische Polymerisation mit thermischen Initiatoren kann bei 60 bis 250°C, bevorzugt 70 bis 220°C, besonders bevorzugt bei 80 bis 200°C und insbesondere bei 100 bis 170°C vorgenommen werden. Die Menge an Initiator beträgt 0,1 bis 15 Gew. % bzgl. der Menge der Monomeren, bevorzugt 3 bis 12 Gew. % und besonders bevorzugt 5 bis 9 Gew. %. In der Regel ist eine Menge von etwa 6 Gew. % empfehlenswert. Die Polymerisationsdauer beträgt üblicherweise 1 bis 40 h, bevorzugt 3 bis 25 h und besonders bevorzugt 7 bis 15 h. Falls erforderlich, können die Copolymere nach dem Fachmann bekannten Methoden aus dem Lösemittel isoliert werden.

Die sauren Gruppen des Polymers können vor, während oder nach der Polymerisation auch ganz oder bevorzugt teilweise neutralisiert werden. Eine Teilneutralisation führt zu einem besseren Einbau der Monomere in das Polymer, d.h. es werden Polymere mit niedrigem Restmonomergehalt erhalten.

Beispiele geeigneter Basen zum Neutralisieren umfassen insbesondere lineare, cyclische und/oder verzweigte $C_1$ - $C_8$-Mono-, Di- und Trialkylamine, lineare oder verzweigte $C_1$ - $C_8$-Mono-, Di- oder Trialkanolamine, inbesondere Mono-, Di- oder Trialkanoamine, lineare oder verzweigte $C_1$ - $C_8$-Alkylether linearer oder verzweigter $C_1$ - $C_8$-Mono-, Di- oder Trialkanolamine, Oligo- und Polyamine wie beispielsweise Diethylentriamin.

Die Neutralisierung kann bevorzugt vor oder während der Polymerisation vorgenommen werden. Die optimale Menge an Base richtet sich nach dem jeweils eingesetzten sauren Monomer. Je nach dem verwendetem sauren Monomer kann man den Neutralisierungsgrad während der Polymerisation so einstellen, dass man den optimalen Restmonomerengehalt erhält. Bei Verwendung von Monomeren mit Phosphor-und/oder Phosphonsäuregruppen, insbesondere von Vinylphosphonsäure, ergeben Mengen von 5 bis 100 mol % Base, bevorzugt 15 bis 75 mol %, und besonders bevorzugt 25 mol %, bezogen auf die eingesetzte Menge den besten Restmonomergehalt. Bei Verwendung von Itaconsäure ergeben 0 bis 40 mol % Base, bevorzugt 0 bis 25 mol %, bezogen auf die eingesetzte Menge den besten Restmonomergehalt.

Die erhaltenen organischen Lösungen der modifizierten Copolymere können direkt zur Formulierung organischer vernetzbarer Zubereitungen eingesetzt werden. Selbstverständlich kann das Polymer hieraus aber auch nach dem Fachmann bekannten Methoden isoliert werden.

Zur Einarbeitung in wässrige Formulierungen kann der Lösung zweckmäßigerweise Wasser zugesetzt und das organische Lösungsmittel mittels dem Fachmann bekannter Methoden abgetrennt werden.

Das Molekulargewicht $M_w$ des Copolymers wird vom Fachmann je nach dem gewünschten Verwendungszweck gewählt. Bewährt hat sich ein $M_w$ von 3000 g/mol bis 1 000 000 g/mol, bevorzugt 4000 bis 200 000 g/mol und besonders bevorzugt 5000 bis 1000 000 g/mol.

Verfahren zum Aufbringen von Korrosionsschutzschichten

Mittels des erfindungsgemäßen Verfahrens können im Prinzip beliebige metallische Körper vor Korrosion geschützt werden, indem man die metallische Oberfläche mit einer Zubereitung umfassend mindestens ein härtbares und/oder vernetzbares Bindemittelsystem (A), eine Komponente (B), ausgewählt aus der Gruppe von feinteiligen Füllstoffen, Pigmenten oder Farbstoffen sowie ein Copolymer (C) behandelt. Die Formulierung kann weiterhin optional noch ein Lösemittel oder ein Lösemittelsystem (D) umfassen, in dem die Komponenten gelöst bzw. dispergiert sind. Bevorzugt ist ein Lösemittel vorhanden.

Es können im Prinzip alle Arten von Metallen beschichtet werden. Bevorzugt handelt es sich aber um unedle Metalle oder Legierungen, welche üblicherweise als metallische Konstruktionswerkstoffe eingesetzt werden, und die vor Korrosion geschützt werden müssen. Beispiele umfassen insbesondere Eisen, Stahl, Zink, Zinkegierungen, Aluminium oder Aluminiumlegierungen.

Bindemittelsysteme (A), Komponenten (B) sowie geeignete Lösemittel zum Formulieren von Korrosionsschutzformulierungen sind dem Fachmann bekannt. Er trifft je nach den gewünschten Eigenschaften der Schicht eine geeignete Auswahl. Das Beschichten der Oberfläche kann mittels üblicher, dem Fachmann geläufiger Techniken erfolgen, beispielsweise durch Aufspritzen, Streichen oder mittels Coil-Coating.

Je nach Art der metallischen Oberfläche bzw. des metallischen Körpers kommen vor allem zwei verschiedene bevorzugte Ausführungsformen des erfindungsgemäßen Verfahrens in Frage.

Integrierter Korrosionsschutz

Die Vorteile der erfindungsgemäß verwendeten Copolymere (C) kommen besonders zum Tragen, wenn man zum Aufbringen der Korrosionsschutzschichten vernetzbare Bindemittelsysteme einsetzt, bei denen die Härtung bei höheren Temperaturen, beispielsweise in geeigneten Öfen, oder photochemisch unter Verwendung geeigneter Strahlungsquellen vorgenommen wird. Diese Technik eignet sich insbesondere für flächige metallische Werkstücke, wie beispielsweise Bleche oder Metallbänder oder auch für ausgeformte, aber mobile metallische Werkstücke, wie beispielsweise Automobilkarosserien oder Karosserieteile.

In einer besonders bevorzugten Ausführungsform der Erfindung lassen sich mittels des erfindungsgemäßen Verfahrens metallische Oberflächen mit einer integrierten Vorbehandlungsschicht versehen. Die erfindungsgemäßen integrierten Vorbehandlungsschichten weisen eine Dicke von 1 bis 25 $\mu$m auf.

Der Begriff integrierte Vorbehandlungsschicht" im Sinne dieser Erfindung bedeutet, dass die erfindungsgemäße Beschichtung direkt auf die Metalloberfläche aufgebracht wird, ohne dass vorher eine korrosionshemmende Vorbehandlung wie Passivierung, Aufbringen einer Konversionsschicht oder Phosphatierung, insbesondere keine Behandlung mit Cr(VI)-Verbindungen vorgenommen wird. Die integrierte Vorbehandlungsschicht kombiniert die Passivierungsschicht mit der organischen Grundierung sowie ggf. noch weiteren Schichten in einer einzigen Schicht. Der Begriff "Metalloberfläche" ist hierbei selbstverständlich nicht mit absolut blankem Metall gleichzusetzen, sondern bedeutet diejenige Oberfläche, die sich beim üblichen Umgang mit dem Metall in atmosphärischer Umgebung oder auch beim Reinigen des Metalls vor dem Aufbringen der integrierten Vorbehandlungsschicht unvermeidlich ausbildet. Das eigentliche Metall kann beispielsweise noch einen Feuchtigkeitsfilm oder eine dünne Oxid- oder Oxidhydrathaut aufweisen.

Prinzipiell kann die Oberfläche beliebig geformter metallischer Körper mit integrierten Vorbehandlungsschichten versehen werden. Es kann sich hierbei um vollständig aus Metallen bestehende Körper handeln, die Körper können aber auch nur mit Metallen beschichtet sein und selbst aus andersartigen Materialien bestehen, beispielsweise aus Polymeren oder Verbundwerkstoffen.

Besonders vorteilhaft kann es sich aber um flächenförmige Formkörper mit metallischer Oberfläche handeln, d.h. Formkörper deren Dicke erheblich geringer ist als die Ausdehnung in den anderen Dimensionen. Beispiele umfassen Bleche, Folien, Platten und insbesondere Metallbänder, sowie daraus -beispielsweise durch Trennen, Umformen und Fügen- gefertigte Bauteile mit metallischer Oberfläche, wie beispielsweise Automobilkarosserien oder Teile davon. Die Dicke bzw. die Wandstärke derartiger metallischer Materialien beträgt bevorzugt weniger als 4 mm und beispielsweise 0,25 bis 2 mm.

Bevorzugt kann das erfindungsgemäße Verfahren eingesetzt werden, um integrierte Vorbehandlungsschichten auf die Oberflächen von Eisen, Stahl, Zink, Zinkegierungen, Aluminium oder Aluminiumlegierungen aufzubringen. Insbesondere kann es sich um die Oberfläche von verzinktem Eisen oder Stahl handeln. In einer bevorzugten Ausführungsform des Verfahrens handelt es sich um die Oberfläche eines Bandmetalls, insbesondere um elektrolytisch verzinkten oder heißverzinkten Stahl. Es kann sich dabei sowohl um einseitig wie um zweiseitig verzinktes Stahlband handeln.

Zink- oder Aluminiumlegierungen sowie deren Verwendung zum Beschichten von Stahl sind dem Fachmann bekannt. Je nach dem gewünschten Anwendungszweck wählt der Fachmann Art und Menge von Legierungsbestandteilen aus. Typische Bestandteile von Zink-Legierungen umfassen insbesondere Al, Pb, Si, Mg, Sn, Cu oder Cd. Typische Bestandteile von Aluminium-Legierungen umfassen insbesondere Mg, Mn, Si, Zn, Cr, Zr, Cu oder Ti. Der Begriff "Zinklegierung" soll auch Al/Zn-Legierungen einschließen, bei denen Al- und Zn in annähernd gleicher Menge vorhanden sind. Mit derartigen Legierungen beschichteter Stahl ist kommerziell erhältlich. Der Stahl selbst kann die Üblichen, dem Fachmann bekannten Legierungskomponenten enthalten.

Auf die integrierte Vorbehandlungsschicht können vorteilhaft weitere Lackschichten unmittelbar aufgebracht werden, ohne dass vorher noch eine zusätzliche organische Grundierung aufgebracht werden muss. Selbstverständlich ist eine zusätzliche organische Grundierung aber in Spezialfällen möglich, obwohl bevorzugt darauf verzichtet wird. Die Art weiterer Lackschichten richtet sich nach der vorgesehenen Verwendung des Metalls.

Bindemittelsystem (A')

Bei den erfindungsgemäß eingesetzten Zubereitungen zum Aufbringen integrierter Vorbehandlungsschichten kann es sich sowohl um Zubereitungen auf Basis organischer Lösemittel, wässrige oder überwiegend wässrige Zubereitungen oder um lösemittelfreie Zubereitungen handeln. Die Zubereitungen umfassen mindestens ein thermisch und/oder photochemisch vernetzbares Bindemittelsystem (A'), mindestens einen feinteiligen anorganischen Füllstoff (B') sowie mindestens ein Copolymer (C) als Korrosionsschutzmittel.

Der Begriff" Vernetzbares Bindemittelsystem" bezeichnet im Folgenden in prinzipiell bekannter Art und Weise diejenigen Anteile der Formulierung, die für die Filmbildung verantwortlich sind. Sie bilden beim thermischen und/oder photochemischen Aushärten ein polymeres Netzwerk. Sie umfassen thermisch und/oder photochemisch vernetzbare Komponenten. Die vernetzbaren Komponenten können niedermolekular, oligomer oder polymer sein. Sie weisen in der Regel mindestens zwei vernetzbare Gruppen auf. Bei vernetzbaren Gruppen kann es sich sowohl um reaktive funktionelle Gruppen handeln, die mit Gruppen ihrer Art ("mit sich selbst") oder mit komplementären, reaktiven funktionellen Gruppen reagieren können. Hierbei sind in prinzipiell bekannter Art und Weise verschiedene Kombinationsmöglichkeiten denkbar. Das Bindemittelsystem kann beispielsweise ein selbst nicht vernetzbares polymeres Bindemittel sowie einen oder mehrere niedermolekulare oder oligomere Vernetzer (V) umfassen. Alternativ kann auch das polymere Bindemittel selbst vernetzbare Gruppen aufweisen, die mit anderen vernetzbaren Gruppen am Polymer und/oder an einem zusätzlich eingesetzten Vernetzer reagieren können. Besonders vorteilhaft können auch vernetzbare Gruppen aufweisende Oligomere oder Präpolymere eingesetzt werden, die unter Verwendung von Vernetzern miteinander vernetzt werden.

Thermisch vernetzbare bzw. härtende Bindemittelsysteme vernetzen beim Erwärmen der aufgebrachten Schicht auf Temperaturen oberhalb Raumtemperatur. Derartige Lacksysteme werden vom Fachmann auch als "Einbrennlacke" bezeichnet. Sie weisen vernetzbare Gruppen auf, die bei Raumtemperatur nicht oder zumindest nicht mit wesentlicher Geschwindigkeit, sondern erst bei höheren Temperaturen reagieren. Zur Ausführung des erfindungsgemäßen Verfahrens eignen sich insbesondere solche vernetzbaren Bindemittelsysteme, die erst bei Temperaturen oberhalb von 60°C, bevorzugt 80°C, besonders bevorzugt 100°C und besonders bevorzugt 120°C vernetzen. Vorteilhaft können solche Bindemittelsysteme eingesetzt werden, die bei 100 bis 250°C, bevorzugt 120 bis 220°C und besonders bevorzugt bei 150 bis 200°C vernetzen.

Bei den thermisch und/oder fotochemisch vernetzbaren Bindemittelsystemen (A') kann es sich um die auf dem Gebiet der Coil-Coating-Lacke üblichen Bindemittelsysteme handeln. Die mit Hilfe von Coil-Coating-Lacken aufgebrachten Schichten müssen eine ausreichende Flexibilität aufweisen. Bindemittelsysteme für Coil-Coating-Lacke weisen daher bevorzugt Weichsegmente auf. Geeignete Bindemittel bzw. Bindemittelsysteme sind dem Fachmann prinzipiell bekannt. Selbstverständlich können auch Mischungen verschiedener Polymerer eingesetzt werden, vorausgesetzt es treten durch die Mischung keine unerwünschten Effekte auf. Beispiele geeigneter Bindemittel umfassen (Meth)acrylat(co)polymerisate, partiell verseifte Polyvinylester, Polyester, Alkydharze, Polylactone, Polycarbonate, Polyether, Epoxidharz-Amin-Addukte, Polyharnstoffe, Polyamide, Polyimide oder Polyurethane. Der Fachmann trifft je nach dem gewünschten Verwendungszweck des beschichteten Metalls eine geeignete Auswahl. Für den Fachmann ist klar, dass nicht jede Art von Bindemittelsystemen für jede Art von metallischen Oberflächen geeignet ist.

Für thermisch aushärtende Systeme können zur Ausführung der Erfindung bevorzugt Bindemittelsysteme auf Basis von Polyestern (A1'), Epoxidharzen (A2'), Polyurethanen (A3') oder Acrylaten (A4') eingesetzt werden.

Polyester (A1')

Bindemittel auf Basis von Polyestern können in prinzipiell bekannter Art und Weise aus niedermolekularen Dicarbonsäuren und Dialkoholen sowie gegebenenfalls weiteren Monomeren aufgebaut werden. Weitere Monomere umfassen insbesondere verzweigend wirkende Monomere, beispielsweise Tricarbonsäuren oder Trialkohole. Für den Einsatz zum Coil-Coating werden im Allgemeinen Polyester mit vergleichsweise niedrigem Molekulargewicht eingesetzt, bevorzugt solche mit $M_n$ von 500 bis 10000 g/mol, bevorzugt 1000 bis 5000 g/mol und besonders bevorzugt 2000 bis 4000 g/mol.

Die Härte und Flexibilität der Schichten auf Basis von Polyestern können in prinzipiell bekannter Art und Weise durch die Auswahl von "harten" oder "weichen" Monomeren beeinflusst werden. Beispiele "harter" Dicarbonsäuren umfassen aromatische Dicarbonsäuren und/oder deren hydrierte Derivate wie beispielsweise Isophthalsäure, Terephthalsäure, Phthalsäure, Hexahydrophthalsäure bzw. Derivate davon, insbesondere deren Anhydride oder Ester. Beispiele "weicher" Dicarbonsäuren umfassen insbesondere aliphatische 1,ω-Dicarbonsäuren mit mindestens 4C-Atomen wie Adipinsäure, Azelainsäure, Sebacinsäure oder Dodecandisäure. Beispiele "harter" Dialkohole umfassen Ethylenglykol, 1,2-Propandiol, Neopentylglykol oder 1,4-Cyclohexandimethanol. Beispiele "weicher" Dialkohole umfassen Diethylenglykol, Triethylenglykol, aliphatische 1,ω-Dialkohole mit mindestens 4C-Atomen wie 1,4-Butandiol, 1,6-Hexandiol, 1,8-Oktandiol oder 1,12-Dodecandiol. Bevorzugte Polyester zur Ausführung der vorliegenden Erfindung umfassen mindestens ein "weiches" Monomer.

Polyester für Beschichtungen sind kommerziell erhältlich. Einzelheiten zu Polyestern sind beispielsweise dargestellt in "Paints and Coatings - Saturated Polyester Coatings" in Ullmann's Encyclopedia of Industrial Chemistry, 6th Edt., 2000, Electronic Release.

Epoxidharze (A2')

Bindemittelsysteme auf Basis von Epoxiden können für Formulierungen auf organischer oder auch wässriger Basis eingesetzt werden. Epoxyfunktionelle Polymere können in prinzipiell bekannter Art und Weise durch die Reaktion von epoxyfunktionellen Monomeren wie Bisphenol-A-Diglycidylether, Bisphenol-F-Diglycidylether oder Hexandioldiglycidylether mit Alkoholen wie beispielsweise Bisphenol A oder Bisphenol F hergestellt werden. Als Weichsegmente eignen sich insbesondere Polyoxyethylen und/oder Polyoxypropylensegmente. Diese können vorteilhaft durch die Verwendung von ethoxyliertem und/oder propoxyliertem Bisphenol A eingebaut werden. Die Bindemittel sollten bevorzugt chloridfrei sein. Epoxifunktionelle Polymere sind kommerziell erhältlich, beispielsweise unter den Namen Epon® oder Epikote®.

Die epoxyfunktionellen Bindemittel können auch noch weiter funktionalisiert werden. Epoxidharz-Amin-Addukte können beispielsweise durch Reaktion der besagten epoxyfunktionellen Polymeren mit Aminen, insbesondere sekundären Aminen wie beispielsweise Diethanolamin oder N-Methylbutanolamin erhalten werden.

Einzelheiten zu epoxyfunktionellen Polymeren sind beispielsweise dargestellt in dargestellt in "Epoxy Resins" in Ullmann's Encyclopedia of Industrial Chemistry, 6th Edt., 2000, Electronic Release

Polyacrylate (A3')

Bindemittel auf Basis von Polyacrylaten eignen sich insbesondere für wasserbasierende Formulierungen. Beispiele geeigneter Acrylate umfassen Emulsionspolymerisate oder -copolymerisate, insbesondere anionisch stabilisierte Acrylatdispersionen, erhältlich in üblicher Art und Weise aus Acrylsäure und/oder Acrylsäurederivaten, beispielsweise Acrylsäureestern wie Methyl(meth)acrylat, Ethyl(meth)acrylat, Butyl(meth)acrylat oder 2-Ethylhexyl(meth)acrylat und/oder vinylaromatischen Monomeren wie Styrol sowie gegebenenfalls vernetzenden Monomeren. Die Härte der Bindemittel kann vom Fachmann in prinzipiell bekannter Art und Weise durch das Verhältnis von "harten" Monomeren wie Styrol oder Methmethacrylat und "weichen" Monomeren wie Butylacrylat oder 2-Ethylhexylacrylat eingestellt werden. Besonders bevorzugt zur Herstellung von Acrylatdispersionen werden weiterhin Monomere eingesetzt, welche funktionelle Gruppen aufweisen, die mit Vernetzern reagieren können. Hierbei kann es sich insbesondere um OH-Gruppen handeln. OH-Gruppen können durch die Verwendung von Monomeren wie Hydroxyethylacrylat, Hydroxyproylacrylat, Hydroxybutylacrylat oder N-Methylolacrylamid oder auch von Epoxyacrylaten gefolgt von Hydrolyse in die Polyacrylate eingebaut werden. Geeignete Polyacrylat-Dispersionen sind kommerziell erhältlich.

Polyurethane (A4')

Bindemittel auf Basis von Polyurethan-Dispersionen eignen sich insbesondere für wasserbasierende Formulierungen. Dispersionen von Polyurethanen lassen sich in prinzipiell bekannter Art und Weise erhalten, indem man zur Stabilisierung der Dispersion in die PU-Kette ionische und/oder hydrophile Segmente einbaut. Als Weichsegmente können bevorzugt 20 bis 100 mol %, bezogen auf die Menge aller Diole, an höhermolekularen Diolen, bevorzugt Polyesterdiolen, mit einem $M_n$ von ca. 500 bis 5000 g/mol, bevorzugt 1000 bis 3000 g/mol eingesetzt werden. Besonders vorteilhaft können zur Ausführung der vorliegenden Erfindung Polyurethan-Dispersion eingesetzt werden, welche Bis(4-Isocyanatocyclohexyl)methan als Isocyanat-Komponente enthalten. Derartige Polyurethan-Dispersionen sind beispielsweise in DE-A 199 14 896 offenbart. Geeignete Polyurethan-Dispersionen sind kommerziell erhältlich.

Geeignete Vernetzer zur thermischen Vernetzung sind dem Fachmann prinzipiell bekannt.

Geeignet sind beispielsweise Vernetzer auf Basis von Epoxiden, bei denen zwei oder mehrere Epoxygruppen mittels einer verknüpfenden Gruppe miteinander verbunden sind. Beispiele umfassen niedermolekulare Verbindungen mit zwei Epoxygruppen wie Hexandioldiglycidylether, Phthalsäurediglycidylether oder cycloaliphathische Verbindungen wie 3,4-Epoxicyclohexancarbonsäure-3',4'-epoxycyclohexylmethylester.

Weiterhin geeignet als Vernetzer sind hochreaktive Melaminderivate, wie beispielsweise Hexamethylolmelamin oder entsprechende veretherte Produkte wie Hexamethoxymethylmelamin, Hexabutoxymethylmelamin oder auch ggf. modifizierte Aminoplastharze. Derartige Vernetzer sind kommerziell erhältlich, beispielsweise als Luwipal® (Fa. BASF AG).

Besonders bevorzugt zur Ausführung der Erfindung werden blockierte Polyisocyanate als Vernetzer eingesetzt. Bei der Blockierung wird die Isocyanatgruppe reversibel mit einem Blockierungsmittel umgesetzt. Das Blockierungsmittel wird beim Erhitzen auf höhere Temperaturen wieder abgespalten. Beispiele geeigneter Blockierungsmittel sind in DE-A 199 14 896, Spalte 12, Zeile 13 bis Spalte 13, Zeile 2 offenbart. Besonders bevorzugt können mit ε-Caprolactam blockierte Polyisocyanate eingesetzt werden.

Vernetzung des Bindemittelsystems

Zur Beschleunigung der Vernetzung können den Zubereitungen in prinzipiell bekannter Art und Weise geeignete Katalysatoren zugesetzt werden.

Der Fachmann trifft je nach dem eingesetzten Bindemittel und dem gewünschten Ergebnis eine geeignete Auswahl unter den Vernetzern. Selbstverständlich können auch Gemische verschiedener Vernetzer eingesetzt werden, vorausgesetzt, die Eigenschaften der Schicht werden dadurch nicht negativ beeinflusst. Die Menge an Vernetzer kann vorteilhaft 10 bis 35 Gew. % bezüglich der Gesamtmenge des Bindemittels betragen.

Die Vernetzung der epoxyfunktionellen Polymere kann beispielsweise mit Vernetzern auf Basis von Polyaminen, wie beispielsweise Diethylentriamin, Aminaddukten oder Polyaminoamiden erfolgen. Vorteilhaft sind beispielsweise Vernetzer auf Basis von Carbonsäureanhydriden oder die bereits erwähnten Vernetzer auf Basis von Melamin. Bevorzugt sind insbesondere auch die bereits erwähnten blockierten Polyisocyanate.

Zur thermischen Vernetzung der Acrylatdispersionen können beispielsweise die bereits erwähnten Vernetzer auf Basis von Melamin oder blockierte Isocyanate eingesetzt werden. Weiterhin eignen sich auch epoxyfunktionelle Vernetzer.

Zur thermischen Vernetzung von Polyurethandispersionen oder Polyestern können beispielsweise die bereits erwähnten Vernetzer auf Basis von Melamin, blockierte Isocyanate oder epoxyfunktionelle Vernetzer eingesetzt werden.

Die Bindemittelsysteme (A') umfassen bei photochemisch vernetzbaren Zubereitungen photochemisch vernetzbare Gruppen. Der Begriff "photochemische Vernetzung" soll die Vernetzung mit allen Arten energiereicher Strahlung, wie beispielsweise UV-, VIS-, NIR- oder Elektronenstrahlung umfassen. Es kann sich prinzipiell um alle Arten photochemisch vernetzbarer Gruppen handeln, bevorzugt handelt es sich hierbei aber um ethylenisch ungesättigte Gruppen.

Photochemisch vernetzbare Bindemittelsysteme umfassen in der Regel oligomere oder polymere Verbindungen mit photochemisch vernetzbaren Gruppen sowie gegebenenfalls daneben noch Reaktivverdünner, in der Regel Monomere. Reaktivverdünner weisen eine niedrigere Viskosität als die oligo- oder polymeren Vernetzer, und nehmen daher in einem strahlenhärtbaren Systeme die Rolle eines Verdünners ein. Zur photochemischen Vernetzung umfassen derartige Bindemittelssysteme weiterhin in der Regel einen oder mehrere Photoinitiatoren.

Beispiele photochemisch vernetzbarer Bindemittelsysteme umfassen beispielsweise multifunktionelle (Meth) acrylate, Urethan(meth)acrylate, Polyester(meth)acrylate, Epoxy(meth)acrylate, Carbonat(meth)acrylate, Polyether (meth)acrylate, gegebenfalls in Kombination mit Reaktivverdünnern wie Methyl(meth)acrylat, Butandioldiacrylat, Hexandioldiacrylat oder Trimethylolpropantriacrylat. Genauere Einzelheiten zu geeigneten strahlenhärtbaren Bindemitteln sind in WO 2005/080484 Seite 3, Zeile 10 bis Seite 16, Zeile 35 dargestellt. Geeignete Photoinitiatoren finden sich in der besagten Schrift Seite 18, Zeile 8 bis Seite 19, Zeile 10.

Selbstverständlich können zur Ausführung der vorliegenden Erfindung auch Bindemittelsysteme eingesetzt werden, die kombiniert thermisch und photochemisch ausgehärtet werden können (auch als dual-cure-Systeme bekannt).

Die erfindungsgemäß zum Aufbringen integrierter Vorbehandlungsschichten eingesetzte Zubereitung umfasst 20 bis 70 Gew. % des Bindemittelsystems (A), bevorzugt (A'). Die Mengenangaben beziehen sich auf die Summe aller Komponenten der Zubereitung mit Ausnahme des Lösemittels oder des Lösemittelgemisches. Bevorzugt beträgt die Menge 30 bis 60 Gew. % und besonders bevorzugt 40 bis 50 Gew. %.

Füllstoffe und/oder Pigmente (B')

Die für das erfindungsgemäße Verfahren zum Aufbringen integrierter Vorbehandlungsschichten eingesetzte Zubereitung umfasst weiterhin mindestens einen feinteiligen anorganischen Füllstoff und/oder ein Pigment (B'). Der Füllstoff kann auch eine zusätzliche organische Beschichtung, beispielsweise zur Hydrophobierung oder Hydrophilierung umfassen. Der Füllstoff weist eine durchschnittliche Partikelgröße von weniger als 10 $\mu$m auf. Bevorzugt beträgt die durchschnittliche Partikelgröße 10 nm bis 9 $\mu$m und besonders bevorzugt 100 nm bis 5 m. Bei runden oder annähernd runden Partikeln bezieht sich diese Angabe auf den Durchmesser, bei unregelmäßig geformten, wie bspw. bei nadelförmigen Partikeln auf die längste Achse. Mit der Partikelgröße ist die Primärpartikelgröße gemeint. Dem Fachmann ist selbstverständlich bekannt, dass sich feinteilige Feststoffe häufig zu größeren Partikeln agglomerieren, die zur Verwendung intensiv in der Formulierung dispergiert werden müssen. Die Partikelgröße wird vom Fachmann je nach den gewünschten Eigenschaften der Schicht gewählt. Sie richtet sich beispielsweise auch nach der gewünschten Schichtdicke. Im Regelfalle wird der Fachmann bei einer geringen Schichtdicke kleinere Partikel wählen.

Als Füllstoffe kommen einerseits elektrisch leitfähige Pigmente bzw. Füllstoffe in Frage. Derartige Zusätze dienen der Verbesserung der Schweißbarkeit und der Verbesserung einer nachfolgenden Beschichtung mit Elektrotauchlacken. Beispiele geeigneter elektrisch leitender Füllstoffe bzw. Pigmente umfassen Phosphide, Vanadiumcarbid, Titannitrid, Molybdänsulfid, Graphit, Ruß oder dotiertes Bariumsulfat. Bevorzugt werden Metallphosphide von Zn, Al, Si, Mn, Cr, Fe oder Ni eingesetzt, insbesondere Eisenphosphide eingesetzt. Beispiele bevorzugter Metallphosphide umfassen $CrP$, $MnP$, $Fe_3P$, $Fe_2P$, $Ni_2P$, $NiP_2$ oder $NiP_3$.

Es können auch nicht leitende Pigmente oder Füllstoffe eingesetzt werden, wie beispielsweise feinteilige amorphe Silicium-, Aluminium- oder Titanoxide, die auch noch mit weiteren Elementen dotiert sein können. Beispielsweise kann mit Calciumionen modifiziertes amorphes Siliziumdioxid eingesetzt werden.

Weitere Beispiele von Pigmenten umfassen Korrosionsschutzpigmente wie Zinkphosphat, Zinkmetaborat oder Bariummetaborat-Monohydrat.

Selbstverständlich können auch Gemische verschiedener Pigmente und/oder Füllstoffe eingesetzt werden.

Die Pigmente werden in einer Menge von 20 bis 70 Gew. % eingesetzt. Die genaue Menge wird vom Fachmann je nach den gewünschten Eigenschaften der Schicht festgelegt. Bei Verwendung von Leitfähigkeitspigmenten sind die eingesetzten Mengen üblicherweise größer als bei Verwendung nicht leitender Füllstoffe. Bevorzugte Mengen bei leitfähigen Pigmenten und Füllstoffen betragen 40 bis 70 Gew. %, bevorzugte Mengen bei nicht leitfähigen Pigmenten 20 bis 50 Gew. %.

Copolymer (C)

Zur Herstellung der integrierten Vorbehandlungsschichten können ein einziges Copolymer (C) oder auch mehrere voneinander verschiedene Copolymere (C) eingesetzt werden. Der Fachmann trifft unter den prinzipiell möglichen Copolymeren (C) je nach den gewünschten Eigenschaften der integrierten Vorbehandlungsschicht eine bestimmte Auswahl. Für den Fachmann ist selbstverständlich, dass nicht alle Arten von Copolymeren (C) für alle Arten von Bindemittelsystemen, Lösungsmitteln oder metallische Oberflächen gleichermaßen gut geeignet sind. Bevorzugt zum Aufbringen integrierter Vorbehandlungsschichten sind insbesondere Phosphor- bzw. Phosphonsäuregruppen aufweisende Copolymere (C).

Die erfindungsgemäß verwendeten Copolymere (C) werden üblicherweise in einer Menge von 0,25 bis 40 Gew. %, bevorzugt 0,5 bis 30 Gew. %, besonders bevorzugt 0,7 bis 20 Gew. % und ganz besonders bevorzugt 1,0 bis 10 Gew. % eingesetzt, bezogen auf die Menge aller Komponenten der Formulierung mit Ausnahme des Lösemittels.

Lösemittel (D')

Als Komponente (D') umfasst die Zubereitung im Regelfalle ein geeignetes Lösemittel, in dem die Komponenten gelöst und/oder dispergiert sind, um einen gleichmäßigen Auftrag der Zubereitung auf die Oberfläche zu ermöglichen. Die Lösemittel werden vor dem Härten der Beschichtung im Regelfalle entfernt. Es ist aber auch prinzipiell möglich, die Zubereitung lösemittelfrei oder im Wesentlichen lösemittelfrei formulieren. Hierbei kann es sich beispielsweise um Pulverlacke oder um photochemisch härtbare Zubereitungen handeln.

Geeignete Lösemittel sind solche, welche in der Lage sind, die erfindungsgemäßen Verbindungen zu lösen, zu dispergieren, zu suspendieren oder zu emulgieren. Es kann sich dabei um organische Lösemittel oder um Wasser handeln. Selbstverständlich können auch Gemische verschiedener organischer Lösemittel oder Gemische organischer Lösemittel mit Wasser eingesetzt werden. Der Fachmann trifft unter den prinzipiell möglichen Lösemitteln je nach dem gewünschten Verwendungszweck und nach der Art der eingesetzten erfindungsgemäßen Verbindung eine geeignete Auswahl.

Beispiele organischer Lösemittel umfassen Kohlenwasserstoffe wie Toluol, Xylol oder Gemische, wie sie bei der Raffination von Rohöl erhalten werden, wie beispielsweise Kohlenwasserfraktionen bestimmter Siedebereiche, Ether wie THF oder Polyether wie Polyethylenglykol, Etheralkohole wie Butylglykol, Etherglykolacetate wie Butylgklykolacetat, Ketone wie Aceton, Alkohole wie Methanol, Ethanol oder Propanol.

Weiterhin können auch Zubereitungen eingesetzt werden, die Wasser oder ein überwiegend wässriges Lösungsmittelgemisch umfassen. Darunter sollen solche Gemische verstanden werden, die zumindest 50 Gew. %, bevorzugt mindestens 65 Gew. % und besonders bevorzugt mindestens 80 Gew. % Wasser umfassen. Weitere Komponenten sind mit Wasser mischbare Lösungsmittel. Beispiele umfassen Monoalkohole wie Methanol, Ethanol oder Propanol, höhere Alkohole wie Ethylenglykol oder Polyetherpolyole und Etheralkohole wie Butylglykol oder Methoxypropanol.

Die Menge der Lösemittel wird vom Fachmann je nach den gewünschten Eigenschaften der Zubereitung und der'gewünschten Applikationsmethode gewählt. Im Regelfalle beträgt das Gewichtsverhältnis der Schichtkomponenten zu dem Lösemittel 10:1 bis 1:10, bevorzugt ca. 2:1 ohne dass die Erfindung hierauf beschränkt sein soll. Es ist selbstverständlich auch möglich, zunächst ein Konzentrat herzustellen und erst vor Ort auf die gewünschte Konzentration zu verdünnen.

Die Zubereitung wird durch intensives Mischen der Komponenten der Zubereitung mit den Lösemitteln -sofern eingesetzt- hergestellt. Dem Fachmann sind geeignete Misch-oder Dispergieraggregate bekannt. Die Copolymere werden bevorzugt in Form der Lösungen bzw. Emulsionen eingesetzt, die bei der hydrolytischen Öffnung der Anhydridgruppen bzw. der Derivatisierung sowie ggf. Lösungsmitteltausch anfallen. Lösemittel in diesen Synthesestufen sollten so gewählt werden, dass sie mit dem Bindemittelsystem, welches verwendet werden soll, zumindest verträglich sind, besonders vorteilhaft wird das gleiche Lösemittel verwendet.

Hilfsstoffe und/oder Additive (E')

Über die Komponenten (A'), (B'), (C) sowie optional (D') kann die Zubereitung darüber hinaus noch einen oder mehrere Hilfsstoffe und/oder Additive (E') umfassen. Derartige Hilfsstoffe und/oder Additive dienen zur Feinsteuerung der Eigenschaften der Schicht. Ihre Menge übersteigt im Regelfalle nicht 20 Gew. % bzgl. der Summe aller Komponenten mit Ausnahme der Lösemittel, bevorzugt nicht 10 %.

Beispiele geeigneter Zusatzstoffe sind farb- und/oder effektgebende Pigmente, Rheologiehilfsmittel, UV-Absorber, Lichtschutzmittel, Radikalfänger, Initiatoren für die radikalische Polymerisation, Katalysatoren für die thermische Vernetzung, Photoinitiatoren und -coinitiatoren, Slipadditive, Polymerisationsinhibitoren, Entschäumer, Emulgatoren, Entgasungsmittel, Netz- und Dipergiermittel, Haftvermittler, Verlaufsmittel, filmbildende Hilfsmittel, rheologiesteuernde Additive (Verdicker), Flammschutzmittel, Sikkative, Hautverhinderungsmittel, sonstige Korrosionsinhibitoren, Wachse und Mattierungsmittel, wie sie aus dem Lehrbuch »Lackadditive« von Johan Bieleman, Wiley-VCH, Weinheim, New York, 1998, oder der deutschen Patentanmeldung DE 199 14 896 A 1, Spalte 13, Zeile 56, bis Spalte 15, Zeile 54, bekannt sind.

Aufbringen integrierter Vorbehandlungsschichten

Zur Ausführung des bevorzugten Verfahrens zum Aufbringen integrierter Vorbehandlungsschichten wird die Zubereitung auf die metallische Oberfläche aufgebracht.

Optional kann die metallische Oberfläche vor der Behandlung gereinigt werden. Erfolgt die erfindungsgemäße Behandlung unmittelbar nach einer metallischen Oberflächenbehandlung, beispielsweise einer elektrolytischen Verzinkung oder einer Schmelztauchverzinkung von Stahlbändern, so können die Bänder im Regelfalle ohne vorherige Reinigung mit der erfindungsgemäßen Behandlungslösung in Kontakt gebracht werden. Wurden die zu behandelnden Metallbänder vor der erfindungsgemäßen Beschichtung jedoch gelagert und/oder transportiert, so sind in der Regel mit Korrosionsschutzölen versehen oder verschmutzt, so dass eine Reinigung vor der erfindungsgemäßen Beschichtung erforderlich ist. Die Reinigung kann nach dem Fachmann bekannten Methoden mit üblichen Reinigungsmitteln erfolgen.

Das Aufbringen der Zubereitung kann beispielsweise durch Sprühen, Tauchen, Gießen oder Aufwalzen erfolgen. Nach einem Tauchprozess kann man zum Entfernen überschüssiger Zubereitung das Werkstück abtropfen lassen; bei Blechen, Metallfolien oder dergleichen lässt sich überschüssige Zubereitung auch abquetschen oder abrakeln. Das Aufbringen mit der Zubreitung erfolgt im Regelfalle bei Raumtemperatur ohne dass damit höhere Temperaturen prinzipiell ausgeschlossen werden sein sollen.

Bevorzugt werden mittels des erfindungsgemäßen Verfahrens Metallbänder beschichtet (häufig als "Coil-Coating" bezeichnet). Hierbei kann die Beschichtung sowohl einseitig wie beidseitig vorgenommen werden. Es ist auch möglich, die Ober- und Unterseite mittels verschiedener Formulierungen zu beschichten.

Ganz besonders bevorzugt erfolgt die Bandeschichtung mittels eines kontinuierlichen Verfahrens. Kontinuierlich arbeitende Bandbeschichtungsanlagen sind prinzipiell bekannt. Sie umfassen in der Regel mindestens eine Beschichtungsstation, eine Trocken- bzw. Einbrennstation und/oder UV-Station sowie ggf. weitere Stationen zur Voroder Nachbehandlung, wie beispielsweise Spül- oder Nachspülstationen. Beispiele für Bandbeschichtungsanlagen finden sich in in Römpp Lexikon Lacke und Druckfarben, Georg Thieme Verlag, Stuttgart, New York, 1998, Seite 55, "Bandbeschichtung", oder in der deutschen Patentanmeldung DE 196 32 426 A 1. Selbstverständlich können auch anders konstruierte Anlagen eingesetzt werden.

Die Geschwindigkeit des Metallbandes wird vom Fachmann entsprechend den Applikations- und Härtungseigenschaften der eingesetzten Zubereitung gewählt. In der Regel bewährt haben sich Geschwindigkeiten von 10 bis 200 m/min, bevorzugt 12 bis 120 m/min, besonders bevorzugt 14 bis 100 m/min, ganz besonders bevorzugt 16 bis 80 und insbesondere 20 bis 70 m/min.

Zum Aufbringen auf das Metallband kann die erfindungsgemäß eingesetzte, vernetzbare Zubereitung aufgesprüht, aufgegossen oder bevorzugt aufgewalzt werden. Beim bevorzugten Walzlackieren taucht die sich drehende Aufnahmewalze (Pick-up-Walze) in einen Vorrat der erfindungsgemäß eingesetzten Zubereitung ein und übernimmt so die zu applizierende Zubereitung. Diese wird von der Aufnahmewalze direkt oder über mindestens eine Übertragungswalze auf die sich drehende Applikationswalze übertragen. Von dieser aus wird der Lack durch gleichgerichtetes oder gegenläufiges Abstreifen auf das Band übertragen. Erfindungsgemäß ist das gegenläufige Abstreifen oder das Reverse-Roller-Coating-Verfahren von Vorteil und wird deshalb bevorzugt angewandt. Vorzugsweise hat die Applikationswalze eine Umlaufgeschwindigkeit, die 110 bis 125% der Bandgeschwindigkeit beträgt, und die Aufnahmewalze eine Umlaufgeschwindigkeit, die 20 bis 40% der Bandgeschwindigkeit beträgt. Die erfindungsgemäß eingesetzte Zubereitung kann aber auch direkt in einen Spalt zwischen zwei Walzen gepumpt werden, was von der Fachwelt auch als Nip-Feed bezeichnet wird.

Im Anschluss an das Aufbringen der erfindungsgemäß eingesetzten Zubereitung wird eventuell in der Schicht vorhandenes Lösemittel entfernt und die Schicht vernetzt. Dies kann in zwei separaten Schritten oder auch gleichzeitig erfolgen. Zum Entfernen des Lösemittels wird die Schicht vorzugsweise mittels einer geeigneten Vorrichtung erwärmt. Das Trocknen kann auch durch Kontaktieren mit einem Gasstrom erfolgen. Beide Methoden können kombiniert werden.

Die Aushärtemethode richtet sich nach der Natur des eingesetzten Bindemittelsystems. Sie kann thermisch und/oder photochemisch erfolgen.

Bei thermischen Vernetzen wird die aufgebrachte Beschichtung erwärmt. Dies kann vorzugsweise durch Konvektionswärmeübertragung, Bestrahlen mit nahem oder fernem Infrarot und/oder bei Bändern auf der Basis von Eisen durch elektrische Induktion erfolgen.

Die zum Aushärten erforderliche Temperatur richtet sich insbesondere nach dem eingesetzten vernetzbaren Bindemittelsystem. Sehr reaktive Bindemittelsysteme können bei niedrigeren Temperaturen ausgehärtet werden als weniger reaktive Bindemittelsysteme. In aller Regel wird die Vernetzung bei Temperaturen von mindestens 60°C, bevorzugt mindestens 80°C, besonders bevorzugt mindestens 100°C und besonders bevorzugt mindestens 120°C vorgenommen. Insbesondere kann die Vernetzung bei 100 bis 250°C, bevorzugt 120 bis 220°C und besonders bevorzugt bei 150 bis 200°C vorgenommen werden. Gemeint ist jeweils die auf dem Metall gefundene Spitzentemperatur (Peak metal temperature (PMT)), die durch dem Fachmann geläufige Verfahren (beispielsweise berührungslose Infrarotmessung oder Bestimmung der Temperatur mit aufgeklebten Teststreifen) gemessen werden kann.

Die Aufheizzeit, d.h. die Zeitdauer der thermischen Härtung variiert in Abhängigkeit von dem erfindungsgemäß eingesetzten Lack. Vorzugsweise liegt sie bei 10 bis 2 min. Wird im wesentlichen die Konvektionswärmeübertragung angewandt, werden bei den bevorzugten Bandlaufgeschwindigkeiten Umluftöfen einer Länge von 30 bis 50, insbesondere 35 bis 45 m, benötigt. Die Umlufttemperatur liegt naturgemäß höher als die Temperatur der Schicht und kann bis zu bei 350 °C betragen.

Das photochemische Aushärten erfolgt mittels aktinischer Strahlung. Unter aktinischer Strahlung wird hier und im Folgenden elektromagnetische Strahlung, wie nahes Infrarot, sichtbares Licht, UV-Strahlung oder Röntgenstrahlung oder Korpuskularstrahlung, wie Elektronenstrahlung verstanden. Bevorzugt wird zum photochemischen Aushärten UV/VIS-Strahlung eingesetzt. Die Bestrahlung kann gegebenenfalls auch unter Ausschluß von Sauerstoff, z. B. unter Inertgas-Atmosphäre, durchgeführt werden. Das photochemische Aushärten kann unter normalen Temperaturbedingungen, d.h. ohne Erhitzung der Beschichtung erfolgen, es kann jedoch auch bei erhöhten Temperaturen z.B. bei 40 bis 150°C vorzugsweise 40 bis 130°C und insbesondere bei 40 bis 100°C photochemisch vernetzt werden.

Durch das erfindungsgemäße Verfahren ist eine integrierte Vorbehandlungsschicht auf einer metallischen Oberfläche, insbesondere der Oberfläche von Eisen, Stahl, Zink oder Zinklegierungen, Aluminium oder Aluminiumlegierungen erhältlich. Die exakte Struktur und Zusammensetzung der integrierten Vorbehandlungsschicht ist uns nicht bekannt. Sie umfasst neben dem vernetzten Bindemittelsystem (A) die Füllstoffe, die Copolymere (C) sowie optional weitere Komponenten. Daneben können auch noch aus der Metalloberfläche herausgelöste und wieder abgeschiedenen Komponenten, wie übliche amorphe Oxide des Aluminiums oder Zinks sowie ggf. weiterer Metalle vorhanden sein.

Die Dicke der integrierten Vorbehandlungsschicht beträgt 1 bis 25 $\mu$m und wird vom Fachmann je nach den gewünschten Eigenschaften und dem Einsatzzweck der Schicht festgelegt. Im Regelfalle hat sich für integrierte Vorbehandlungsschichten eine Dicke von 3 bis 15 $\mu$m bewährt. Bevorzugt ist eine Dicke von 4 bis 10 $\mu$m und besonders bevorzugt sind 5 bis 8 $\mu$m. Die Dicke ergibt sich aus der Menge der jeweils aufgebrachten Zusammensetzung.

Bei Anwendungen im Automobilbereich kann nach dem Aufbringen der erfindungsgemäßen integrierten Vorbehandlungsschicht unter Umständen sogar auf eine kathodische Tauchlackierung (KTL) verzichtet werden. Falls die integrierte Vorbehandlungsschicht auch noch den KTL ersetzen soll, empfehlen sich etwas dickere integrierte Vorbehandlungsschichten, beispielsweise mit einer Dicke von 10 bis 25 $\mu$m, bevorzugt 12 bis 25 $\mu$m.

Auf die mit einer integrierten Vorbehandlungsschicht versehene metallische Oberfläche können noch weitere Lackschichten aufgebracht werden. Art und Anzahl der erforderlichen Lackschichten werden vom Fachmann je nach der gewünschten Verwendung des beschichteten Metalls bzw. metallischen Formteils bestimmt. Die erfindungsgemäßen integrierten Vorbehandlungsschichten lassen sich gut überlackieren und haben eine gute Haftung mit den nachfolgenden Lackschichten. Bei weiteren Lackschichten kann es sich beispielsweise um Schichten aus Farblacken, Klarlacken oder Funktionslacken handeln. Ein Beispiel für einen Funktionslack ist ein weicher Lack mit einem relativ hohen Füllstoffanteil. Dieser kann vorteilhaft vor dem Farb- und/oder Decklack aufgebracht werden, um das Metall und die integrierte Vorbehandlungsschicht vor mechanischen Beschädigungen, beispielsweise durch Steinschlag oder Kratzen zu schützen.

Das Aufbringen weiterer Lackschichten kann in der beschriebenen Bandbeschichtungsanlage vorgenommen werden. Es werden dann mehrere Applikations- sowie optional Härtungsstationen hintereinander geschaltet. Alternativ kann aber nach der Applikation und der Härtung der Korrosionsschutzschicht das beschichtete Band wieder aufgerollt und weitere Schichten erst zu einem späteren Zeitpunkt in anderen Anlagen aufgebracht werden. Die Weiterverarbeitung der beschichteten Metallbänder kann vor Ort erfolgen, oder sie können zur Weiterverarbeitung an einen anderen Ort transportiert werden. Hierzu können.sie beispielsweise mit abziehbaren Schutzfolien versehen werden.

Mit einer integrierten Vorbehandlungsschicht versehene Bänder können aber auch zunächst -beispielsweise mittels Trennen, Umformen und Fügen- zu metallischen Formteilen verarbeitet werden. Das Fügen kann auch mittels Schweißen erfolgen. Der erhaltene Formkörper kann danach wie oben beschrieben mit weiteren Lackschichten versehen werden.

Gegenstand der Erfindung sind daher auch Formkörper mit einer metallischen Oberfläche, welche mit einer integrierten Vorbehandlungsschicht mit einer Dicke von 1 bis 25 $\mu$m beschichtet sind, sowie Formkörper, die darüber hinaus noch weitere Lackschichten aufweisen. Der Begriff "Formkörper" soll hier sowohl beschichtete Bleche, Folien oder Bänder sowie auch die daraus erhaltenen metallische Bauteile umfassen.

Bei derartigen Bauteilen handelt es sich insbesondere um solche, die zur Verkleidung, Verblendung oder Auskleidung verwendet werden können. Beispiele umfassen Automobilkarosserien oder Teile davon, LKW-Aufbauten, Rahmen für Zweiräder wie Motorräder oder Fahrräder oder Teile für derartige Fahrzeuge wie beispielsweise Schutzbleche oder Verkleidungen, Verkleidungen für Haushaltgeräte wie beispielsweise Waschmaschinen, Geschirrspülmaschinen, Wäschetrockner, Gas- und Elektroherde, Mirkowellengeräte, Tiefkühltruhen oder Kühlschränke, Verkleidungen für technische Geräte oder Einrichtungen wie beispielsweise Maschinen, Schaltschränke, Computergehäuse oder dergleichen, Bauelemente im Architekturbereich wie Wandteile, Fassadenelemente, Deckenelemente, Fenster- oder Türprofile oder Trennwände, Möbel aus metallischen Materialien wie Metallschränke, Metallregale, Teile von Möbeln oder auch Beschläge. Weiterhin kann es sich auch um Hohlkörper zu Lagerung von Flüssigkeiten oder andern Stoffen handeln, wie beispielsweise um Dosen, Büchsen oder auch Tanks.

Atmosphärischer Korrosionsschutz

In einer zweiten bevorzugten Ausführungsform der Erfindung handelt es sich bei dem Verfahren zum Aufbringen von Korrosionsschutzschichten um ein Verfahren zum atmosphärischen Korrosionsschutz.

Bei den metallischen Oberflächen, die mittels des Verfahrens zum atmosphärischen Korrosionsschutz geschützt werden können, kann es sich prinzipiell um beliebige Oberflächen handeln. Bevorzugt handelt es sich aber um die Oberflächen von metallischen Bauwerken oder Metallkonstruktionen bzw. den dazu benötigten Bauteilen. Metallkonstruktionen bzw. Bauwerke werden üblicherweise aus Baustahl, wie Stahlträgern, Stahlrohren oder Stahlblechen durch Nieten, Schweißen oder Schrauben zu entsprechenden Konstruktionen verbunden. Die Oberflächen können hierbei während des Gebrauchs in Kontakt mit atmosphärischer Luft stehen, es kann.sich aber auch um Oberflächen handeln, die während des Gebrauchs in Kontakt mit Wasser, Erdreich oder anderen korrosiven Medien stehen. Beispiele umfassen Brücken, Strommasten, Tanks, Container, chemische Anlagen, Gebäude, Dächer, Rohre, Kupplungen, Flansche, Schiffe, Kräne, Pfähle oder Spundwände.

Insbesondere handelt es sich um die Oberflächen von Eisen, Stahl, Zink, Zinklegierungen, Aluminium oder Aluminiumlegierungen. Stahl kann die Üblichen, dem Fachmann bekannten Legierungskomponenten enthalten. Beispiele wurden bereits oben genannt.

Beispiele geeigneter Legierungsbestandteile für Zn- oder Aluminiumlegierungen wurden bereits oben genannt. Zn- oder Aluminiumbeschichtungen können auf Stahl beispielsweise durch Schmelztauchverfahren, z.B. Feuerverzinken, oder durch Sherardisieren aufgebracht werden. Sofern das Bauteil immobil ist oder die Bauteilgeometrie es nicht zulässt, können entsprechende Schichten auch mittels thermischem Spritzen (Spritzverzinken, Spritzaluminieren) aufgebracht werden.

Beim atmosphärischen Korrosionsschutz werden Korrosionsschutzbeschichtungen üblicherweise an Ort und Stelle aufgestrichen oder aufgespritzt. Die Trocknung und Härtung derartiger Korrosionsschutzbeschichtungen erfolgt in der Regel unter atmosphärischen Bedingungen, also etwa bei Umgebungstemperatur sowie in Gegenwart von Luft bzw. Luftsauerstoff und üblicher Luftfeuchtigkeit. Je nach dem erforderlichen Schutzgrad wird der Korrosionsschutz von Oberflächen durch Korrosionsschutzanstriche auch als leichter, mittlerer oder schwerer Korrosionsschutz bezeichnet.

Besonders bevorzugt kann das Verfahren zum atmosphärischen Korrosionsschutz für solche metallischen Oberflächen eingesetzt werden, die einer Korrosionsbelastung der Korrosivitätskategorien C2 (gemäß DIN EN ISO 12944) oder höher ausgesetzt sind, bevorzugt Korrosivitätskategorien C3 oder höher und besonders bevorzugt Korrosivitätskategorien C4 oder höher.

Dabei werden die Korrosivitätskategorien gemäß DIN EN ISO 12944 durch den flächenbezogenen Massenverlust bzw. die Dickenabnahme von unlegiertem Stahl bzw. bei Zink definiert, deren Oberflächen 1 Jahr lang einer bestimmten korrosiven Belastung ausgesetzt sind.

| C2 (gering korrosiv): | unlegierter Stahl: | Massenverlust > 10 - 200 g/m$^2$ |
| | | Dickenabnahme > 1,3 - 25 $\mu$m |
| | Zink: | Massenverlust > 0,7 - 5 g/m$^2$ |
| | | Dickenabnahme > 0,1 - 0,7 $\mu$m |
| C3 (mäßig korrosiv): | unlegierter Stahl: | Massenverlust > 200 - 400 g/m$^2$ |
| | | Dickenabnahme > 25 - 50 $\mu$m |
| | Zink: | Massenverlust > 5 -15 g/m$^2$ |
| | | Dickenabnahme > 0,7 - 2,1 $\mu$m |

(fortgesetzt)

| C4 (stark korrosiv): | unlegierter Stahl: | Massenverlust > 400 - 650 g/m$^2$ |
| | | Dickenabnahme > 50 - 80 $\mu$m |
| | Zink: | Massenverlust > 15 - 30 g/m$^2$ |
| | | Dickenabnahme > 2,1 -4,2 $\mu$m |
| C5-I/M (sehr stark): | unlegierter Stahl: | Massenverlust > 650 - 1500 g/m$^2$ |
| | | Dickenabnahme > 80 - 200 $\mu$m |
| | Zink: | Massenverlust > 30 - 60 g/m$^2$ |
| | | Dickenabnahme > 4,2 - 8,4 $\mu$m |

Beim vorliegenden Verfahren handelt es sich bevorzugt um ein chrom(VI)freies Verfahren, besonders bevorzugt um ein chromfreies Verfahren. Der Begriff "chrom(VI)frei" bzw. "chromfrei" im Sinne dieser Erfindung bedeutet, dass die eingesetzte Zubereitung selbst keine Chrom(VI)-Verbindungen bzw. überhaupt keine Chromverbindungen enthält, und dass auch keine korrosionshemmende Vorbehandlung der Metalloberfläche mit Chrom(V1)-Verbindungen bzw. Chromverbindungen durchgeführt wird. Dies schließt selbstverständlich nicht aus, dass sich -an sich unbeabsichtigt- Spuren von Chrom in der Schicht befinden können. Hierbei kann es sich beispielsweise um Chromspuren handeln, die im Zuge der Beschichtung eines chromhaltigen Stahles aus dem Stahl herausgelöst werden.

Zur Ausführung des erfindungsgemäßen Verfahrens zum atmosphärischen Korrosionsschutz wird erfindungsgemäß eine Zubereitung eingesetzt, welche mindestens ein unter atmosphärischen Bedingungen härtbares Bindemittelsystem (A"), mindestens eine Komponente (B") ausgewählt aus der Gruppe von feinteiligen Füllstoffen, Pigmenten oder Farbstoffen, mindestens ein Copolymer (C), sowie mindestens ein Lösemittels (D") umfasst.

Bindemittelsystem (A")

Bei den unter atmosphärischen Bedingungen härtbaren Bindemittelsystemen (A") kann es sich um die auf dem Gebiet der Korrosionsschutzanstriche und Beschichtungen üblichen Bindemittelsysteme handeln. Derartige Bindemittel bzw. Bindemittelsysteme sind dem Fachmann prinzipiell bekannt. Selbstverständlich können auch Mischungen verschiedener Bindemittelsysteme eingesetzt werden, vorausgesetzt es treten durch die Mischung keine unerwünschten Effekte auf.

Der Begriff "Bindemittelsystem" bezeichnet im Folgenden in prinzipiell bekannter Art und Weise diejenigen Anteile der Formulierung, die für die Filmbildung verantwortlich sind.

Der Begriff "unter atmosphärischen Bedingungen härtbar" bedeutet, dass die Bindemittelsysteme die Eigenschaft aufweisen, nach dem Aufbringen auf die Oberfläche unter üblichen Umgebungsbedingungen, d.h. etwa bei Raumtemperatur, in Gegenwart von Luft sowie üblicher Luftfeuchtigkeit ohne die Verwendung zusätzlicher Apparaturen oder Einrichtungen auszuhärten. Typische Härtungstemperaturen betragen je nach der Umgebung mehr als 0 bis 40°C, bevorzugt 5 bis 35°C und beispielsweise 15 bis 25°C. Es ist für den Fachmann klar, dass die Zeit bis zum vollständigen Härten ein und desselben Bindemittelsystems je nach den tatsächlich herrschenden Umgebungsbedingungen unterschiedlich sein kann.

Je nach der Art des eingesetzten Bindemittelsystems kann die Härtung nach verschiedenen Mechanismen verlaufen. Beispielsweise kann es sich um eine rein physikalische Härtung, verursacht durch das Verdunsten des verwendeten Lösemittels handeln. Es kann sich weiterhin um eine oxidative Härtung durch Reaktion des Bindemittelsystems mit dem Sauerstoff der Luft handeln. Schließlich kann es sich auch um eine chemische Vernetzung (Reaktivvernetzung) handeln. Reaktive Bindemittelsysteme umfassen vernetzbare Komponenten. Die vernetzbaren Komponenten können niedermolekular, oligomer oder polymer sein. Es kann sich hierbei bevorzugt um 1 K- oder auch um 2 K-Systeme handeln. Reaktiv vernetzende Systeme umfassen auch feuchtigkeitshärtende Bindemittelsysteme, bei denen die Luftfeuchtigkeit als Härterkomponente fungiert. Selbstverständlich kann ein Bindemittelsystem auch durch eine Kombination verschiedener Härtungsverfahren aushärten. Bei 2-K-Systemen werden die Binder- und die Härterkomponente in prinzipiell bekannter Art und Weise vor dem Verwenden der Formulierung gemischt.

Zur Ausführung der Erfindung können wässrig lösliche oder organisch lösliche Bindemittelsysteme eingesetzt werden. Bevorzugt handelt es sich um Bindemittelsysteme auf wässriger Basis.

Bindemittelsysteme für Korrosionsschutzbeschichtungen, insbesondere Korrosionsschutzsysteme auf wässriger Basis sind dem Fachmann prinzipiell bekannt. Es kann sich beispielsweise um Epoxyharze, Polyacrylate, Styrol-Acrylat-Polymere, Polyester, Alkydharze, Polyurethane der Styrol-Butadien-Polymere handeln.

Die Menge der Bindemittel (A) in der Formulierung beträgt 15 bis 70 Gew. %, bezogen auf die Menge aller Komponenten der Formulierung einschließlich des Lösemittels. Sie wird vom Fachmann je nach den gewünschten Eigenschaften der Beschichtung festgelegt. Bevorzugt beträgt die Menge 20 bis 60 Gew. % und besonders bevorzugt 25 bis 50 Gew. %.

Bevorzugte Bindemittelsysteme zur Ausführung der Erfindungen sind nachfolgend beschrieben.

Polyacrylate bzw. Styrol-Acrylat-Copolymere (A1")

In einer bevorzugten Ausführungsform der Erfindung handelt es sich bei dem Bindemittelsystem um eine wässrige oder überwiegend wässrige Dispersion von Polyacrylaten bzw. Styrol-Acrylat-Copolymeren (A1").

Wässrige Dispersionen von Polyacrylaten bzw. Styrol-Acrylat-Copolymeren (A1") zur Herstellung von Korrosionsschutzanstrichen sind dem Fachmann prinzipiell bekannt. Bei den wässrigen Dispersionen der Polyacrylate (A1) kann es sich sowohl um Primärdispersionen wie um Sekundärdispersionen handeln. Geeignete Polyacrylate enthalten als Hauptmonomere mindestens ein Alkyl(meth)acrylat wie beispielsweise Methyl-(meth)acrylat, Ethyl(meth)acrylat, Butyl(meth)acrylat oder 2-Ethylhexyl(meth)acrylat. Sie können bevorzugt als weitere Hauptmonomere Vinylaromaten, insbesondere Styrol aufweisen. Die Menge der Hauptmonomeren zusammen beträgt in der Regel mindestens 60 Gew. %, bevorzugt mindestens 80 Gew. %. Styrol-Acrylat-Copolymere umfassen neben den genannten Alkyl(meth)acrylaten als Hauptmonomer in der Regel mindestens 30 Gew. %, bevorzugt mindestens 40 Gew. % und besonders bevorzugt etwa 50 Gew. % Styrol. Die Polyacrylate bzw. Styrol-Acrylat-Copolymere (A1") können daneben noch weitere Comonomere aufweisen, insbesondere solche mit funktionellen Gruppen wie Hydroxy-, Carboxy- oder Carboxamidgruppen. Beispiele umfassen (Meth)acrylsäure, Itaconsäure, Maleinsäure, Fumarsäure, (Meth)acrylamid oder Hydroxyalkyl(meth) acrylate. Bevorzugt handelt es sich bei weiteren Comonomeren um saure Comonomere. Weiterhin können optional auch noch vernetzenende Monomere in geringen Mengen, üblicherweise weniger als 4 Gew. %, bevorzugt weniger als 2 Gew. %, anwesend sein. Beispiele umfassen Butandiol(meth)acrylat, Hexandiol-di(meth)acrylat oder Allylacrylat.

Polyacrylate (A1") können in prinzipiell bekannter Art und Weise mittels Emulsionspolymerisation hergestellt werden. Weitere Einzelheiten zu derartigen Polymeren sowie deren Herstellung sind beispielsweise in EP-A 157 133, WO 99/46337, oder in "Paints and Coatings, 2.5. Acrylic Coatings" in Ullmann's Encyclopedia of Technical Chemistry, 6th Edition 2000, Electronic Release offenbart. Der Fachmann trifft unter den prinzipiell möglichen Polyacrylaten (A1) je nach den gewünschten Eigenschaften der Schicht eine geeignete Auswahl.

Zur Ausführung der Erfindung insbesondere geeignet sind Styrol-Acrylat-Copolymere, welche als Hauptmonomere mindestens ein elastomeres Acrylat wie beispielsweise n-Butyl(meth)acrylat, n-Hexyl(meth)acrylat, n-Octylacrylat oder 2-Ethylhexyl(meth)acrylat im Gemisch mit Styrol sowie als Nebenmonomer mindestens ein saures Monomer, wie beispielsweise (Meth)acrylsäure umfassen. Zur Verwendung als Bindemittel für die Formulierung können die Säuregruppen ganz oder teilweise mit geeigneten Basen wie beispielsweise Ammoniak neutralisiert werden.

Die eingesetzten Polyacrylate sollten in der Regel eine Glasübergangstemperatur Tg im Bereich von 0 bis 60°C, bevorzugt im Bereich von 5 bis 40°C aufweisen (gemessen nach der DSC-Methode nach DIN EN ISO 11357). Die Glasübergangstemperatur kann vom Fachmann in prinzipiell bekannter Art und Weise durch die Auswahl und das mengenverhältnis von Hart- und Weichmonomeren gewählt werden.

Bevorzugt zur Ausführung der Erfindung können weiterhin Polyacrylate (A1) mit einer mittleren Teilchengröße von 50 nm bis 400 nm, besonders bevorzugt 80 nm bis 250 nm eingesetzt werden (gemessen mit dem Malvern® Autosizer 2 C).

Geeignete Acrylat- bzw. Styrol-Acrylat-Dispersionen zur Herstellung von Korrosionsschutzanstrichen sind kommerziell erhältlich, beispielsweise als Acronal® S 760 oder Acronal® LR 8977 (Fa. BASF Aktiengesellschaft) oder Acronal® Optive 410 (Fa. BASF Corporation).

Styrol-Alkadien-Polymere (A2")

In einer zweiten, bevorzugten Ausführungsform der Erfindung handelt es sich bei dem Bindemittelsystem um eine wässrige oder überwiegend wässrige Dispersion von Styrol-Alkadien-Polymeren (A2").

Wässrige Dispersionen von Styrol-Alkadien-Polymeren (A2") zur Herstellung von Korrosionsschutzanstrichen sind dem Fachmann prinzipiell bekannt und beispielsweise in EP-A 47380 beschrieben. Es kann es bevorzugt um Primärdispersionen aber auch um Sekundärdispersionen handeln.

Geeignete Polymere (A2") umfassen als Hauptmonomere Styrol sowie mindestens ein konjugiertes aliphatisches Dien (Alkadien). Bei den Alkadienen kann es sich beispielsweise um Butadien, Isopren, 1,3-Pentadien oder Dimethylbutadien handeln. Das Styrol kann auch noch mit Alkylgruppen substituiert sein. Beispiele umfassen $\alpha$-Methylstyrol oder 4-Methylstyrol. Bevorzugt handelt es sich bei den Hauptmonomeren um Styrol und Butadien. In der Regel enthalten die Polymere zumindest 20 Gew. % Styrol und 20 Gew. % Alkadiene, wobei die Menge der Hauptmonomere zusammen in der Regel mindestens 60 Gew. %, bevorzugt mindestens 80 Gew. % beträgt. Die Mengenangaben beziehen sich jeweils auf die Summe aller Monomere. Sie können darüber hinaus noch weitere Comonomere aufweisen. Zu nennen sind hier einerseits ethylenisch ungesättige Carbonsäuren und/oder Discarbonsäuren wie beispielsweise (Meth)acrylsäure, Maleinsäure oder Itaconsäure. Weiterhin kann es sich um ethylenisch ungesättigte Carbonsäurenitrile wie (Meth)acrylnitril sowie Alkyl(meth)acrylate wie Methyl-(meth)acrylat, n-Butyl(meth)acrylat, n-Hexyl(meth)acrylat, n-Octylacrylat oder 2-Ethylhexyl(meth)acrylat handeln.

Styrol-Alkadien-Polymere (A2") können in prinzipiell bekannter Art und Weise mittels Emulsionspolymerisation hergestellt werden. Weitere Einzelheiten zu Styrol-Butadien-Polymeren für Beschichtungsstoffe sowie deren Herstellung sind beispielsweise in "Paints and Coatings, 2.4.8. Polystyrene and Styrene Copolymers" in Ullmann's Encyclopedia of Technical Chemistry, 6th Edition 2000, Electronic Release offenbart.

Zur Ausführung der Erfindung insbesondere geeignet sind Styrol-Butadien-Polymere, welche als Nebenmonomer ein oder mehrere saure Monomere, wie beispielsweise (Meth)acrylsäure umfassen, bevorzugt in einer Menge von 0,5 bis 5 Gew. %. Zur Verwendung als Bindemittel für die Formulierung können die Säuregruppen bevorzugt ganz oder teilweise mit geeigneten Basen wie beispielsweise Ammoniak neutralisiert werden.

Die eingesetzten Styrol-Butadien-Polymere (A2") sollten in der Regel eine Glasübergangstemperatur Tg im Bereich von 0 bis 60°C, bevorzugt im Bereich von 5 bis 40°C aufweisen. Die Glasübergangstemperatur kann vom Fachmann in prinzipiell bekannter Art und Weise durch die Auswahl und das Mengenverhältnis von Hart- und Weichmonomeren gewählt werden.

Bevorzugt zur Ausführung der Erfindung können weiterhin Styrol-Butadien-Polymere (A2") mit einer mittleren Teilchengröße von 50 nm bis 400 nm, besonders bevorzugt 80 nm bis 250 nm eingesetzt werden (wie oben gemessen).

Polyurethane (A3")

In einer dritten, bevorzugten Ausführungsform der Erfindung handelt es sich bei dem Bindemittelsystem um eine wässrige oder überwiegend wässrige Dispersion von Polyurethanen (A3").

Wässrige Dispersionen von Polyurethanen (A3") zur Herstellung von Korrosionsschutzanstrichen sind dem Fachmann prinzipiell bekannt. Einzelheiten zu Polyurethanen für Beschichtungsstoffe sowie deren Herstellung sind beispielsweise in "Paints and Coatings, 2.9 Polyurethane Coatings in "Ullmann's Encyclopedia of Technical Chemistry, 6th Edition 2000, Electronic Release offenbart. Bei den wässrigen Dispersionen der Polyurethanen (A3") kann es sich sowohl um Primärdispersionen wie um Sekundärdispersionen handeln.

Polyurethane für wässrige Dispersionen können in prinzipiell bekannter Art und Weise aus üblichen Diisocyanaten sowie Diolen aufgebaut werden. Im Hinblick auf gute Filmbildung und Elastizität kommen hierzu insbesondere Diole mit einem zahlenmittleren Molekulargewicht $M_n$ von etwa 500 bis 5000 g/mol, bevorzugt etwa 1000 bis 3000 g/mol in Frage. Hierzu können sowohl Polyether- wie Polyesterdiole eingesetzt werden. Die Menge derartiger Diole mit höherem Molekulargewicht beträgt üblicherweise 10 bis 100 mol % bezüglich der Summe aller Diole. Die gewünschte Härte und Elastizität des Films lässt sich steuern, indem man neben dem bereits genannten Diol noch niedermolekulare Diole mit einem zahlenmittleren Molekulargewicht $M_n$ von etwa 60 bis 500 g/mol einsetzt.

Zum Aufbau von Polyurethanen für wässrige Dispersionen werden darüber hinaus Monomere eingesetzt, welche wenigstens eine Isocyanatgruppe oder eine gegenüber Isocyanatgruppen reaktive Gruppe sowie zusätzlich mindestens eine hydrophile Gruppe umfassen. Hierbei kann es sich um nichtionische Gruppen wie beispielsweise Polyoxyethylengruppen, um saure Gruppen wie COOH-, Sulfonat- oder Phosphonatgruppen oder um basische Gruppen wie Aminogruppen handeln. Bevorzugt handelt es sich um saure Gruppen. Zur Verwendung als Bindemittel für die Formulierung können die Säuregruppen bevorzugt ganz oder teilweise mit geeigneten Basen neutralisiert werden. Bevorzugt hierzu sind Ammoniak oder Amine. Weitere Einzelheiten zu derartigen Polyurethandispersionen sowie deren Herstellung sind in WO 2005/005565, Seite 4, Zeile 13 bis Seite 14, Zeile 14 ausführlich beschrieben. Weitere Beispiele geeigneter Polyurethane sind in US 5,707,941 oder in WO 2004/101638, insbesondere Seite 2, Zeile 31 bis Seite14, Zeile 11 offenbart.

Es kann sich auch um modifizierte Polyurethane handeln. Beispielsweise kann es sich um oxidativ härtende Urethanalkyde handeln. Zur Herstellung können beispielsweise Triglyceride ungesättigter Fettsäuren teilweise hydrolysiert werden. Die entstehende OH-Gruppe kann bei der Polyurethanherstellung mit den Isocyanatgruppen reagieren.

Bevorzugt zur Ausführung der Erfindung können weiterhin Polyurethane (A3") mit einer mittleren Teilchengröße von nicht mehr als 1000 nm, bevorzugt weniger als 500, besonders bevorzugt weniger als 200 nm, und insbesondere 20 bis 200 nm eingesetzt werden.

Alkydharze (A4")

In einer vierten, bevorzugten Ausführungsform der Erfindung handelt es sich bei dem Bindemittelsystem um eine wässrige oder überwiegend wässrige Dispersion von Alkydharzen (A4").

Wässrige Dispersionen von Alkydharzen (A4") zur Herstellung von Korrosionsschutzanstrichen sind dem Fachmann prinzipiell bekannt. Bei Alkydharzen (A4") handelt es sich um oxidativ härtende Polykondensationsharze aus Polyolen und mehrwertigen Carbonsäuren, bei denen mindestens eine OH-Gruppe des Polyols mit fetten Ölen und/oder natürlichen und/oder synthetischen einfach oder mehrfach ungesättigten Fettsäuren verestert ist, wobei mindestens eines der eingesetzten Polyole tri- oder höherfunktionell sein muss.

Beispiele bevorzugter mehrwertiger Alkohole umfassen Glycerin, Pentaerythrit, Trimethylolethan, Trimethylolpropan, verschiedene Diole wie Ethan-/Propandiol, Diethylenglykol, Neopentylglykol.

Bevorzugte mehrwertige Carbonsäuren sind Phthalsäure(anhydrid) (PSA), Isophthalsäure, Terephthalsäure, Trimellitsäureanhydrid, Adipinsäure, Azelainsäure, Sebacinsäure, besonders bevorzugt ist Phthalsäure(anhydrid).

Als Ölkomponente bzw. Fettsäure kommen beispielsweise trocknende Öle, wie Leinöl, Oiticicaöl oder Holzöl, halbtrocknende Öle, wie Sojaöl, Sonnenblumenöl, Safloröl, Ricinenöl oder Tallöl, nicht-trocknende Öle, wie Ricinusöl, Kokosöl oder Erdnußöl oder freie Fettsäuren obiger Öle in Betracht.

Die Molmasse $M_n$ typischer Alkydharze liegt zwischen 1500 und 20000 g/mol, bevorzugt zwischen 3500 und 6000 g/mol. Die Säurezahl beträgt bevorzugt 2 bis 30 mg KOH/g, bei wasserverdünnbaren Harzen auch 35-65 mg KOH/g. Die OH-Zahl beträgt in der Regel bis zu 300, bevorzugt bis zu 100 mg KOH/g.

Der Begriff "Alkydharze" soll auch modifizierte Alkydharze wie styrolmodifizierte Alkydharze, Urethanalkyde, Urethanöle oder epoxyharzmodifizierte Alkydharze umfassen. Derartige modifizierte Alkydharze sind dem Fachmann bekannt.

Weitere Einzelheiten zu Alkydharzen (A4") für Beschichtungsstoffe sowie deren Herstellung sind beispielsweise in "Paints and Coatings, 2.6. Alkyd Coatings" in Ullmann's Encyclopedia of Technical Chemistry, 6th Edition 2000, Electronic Release sowie in "Lackformulierung und Lackrezeptur", Hrsg. Ulrich Zorll, S. 188 ff, Curt R. Vinzentz Verl., Hannover, 2003 offenbart.

Die eingesetzten Alkydharze (A4") sollten in der Regel eine Glasübergangstemperatur $T_g$ im Bereich von 0 bis 60°C, bevorzugt von 5 bis 40°C aufweisen.

Füllstoff / Pigment /Farbstoff (B")

Die erfindungsgemäß verwendete Zubereitung umfasst weiterhin mindestens eine Komponente (B") ausgewählt aus der Gruppe von feinteiligen Füllstoffen, Pigmenten oder Farbstoffen.

Bei dem feinteiligen Füllstoff handelt es sich in der Regel um einen anorganischen Füllstoff. Füllstoffe und/oder Pigmente können selbstverständlich eine zusätzliche organische Beschichtung, beispielsweise zur Hydrophobierung oder Hydrophilierung umfassen.

Der Füllstoff sollte eine durchschnittliche Partikelgröße von 10 $\mu$m nicht überschreiten. Bevorzugt beträgt die durchschnittliche Partikelgröße 10 nm bis 8 $\mu$m, besonders bevorzugt 100 nm bis 5 $\mu$m und beispielsweise 2 bis 4 $\mu$m. Bei runden oder annähernd runden Partikeln bezieht sich diese Angabe auf den Durchmesser, bei unregelmäßig geformten, wie bspw. bei nadelförmigen Partikeln auf die längste Achse. Mit der Partikelgröße ist die Primärpartikelgröße gemeint. Dem Fachmann ist selbstverständlich bekannt, dass sich feinteilige Feststoffe häufig zu größeren Partikel agglomerieren, die zur Verwendung intensiv dispergiert werden müssen. Die Partikelgröße wird vom Fachmann je nach den gewünschten Eigenschaften der Schicht gewählt.

Bei den Pigmenten kann es sich insbesondere um Korrosionsschutzpigmente handeln. Es kann sich sowohl um aktive wie um passive Korrosionsschutzpigmente handeln.

Beispiele von aktiven Korrosionsschutzpigrüenten umfassen insbesondere Phosphate, phosphathaltige oder modifizierte Phosphate wie Pigmente auf Basis von Zinkphosphat, Zinkaluminiumorthophosphat, Zink-Molybdän-Orthophosphat, Zink-Aluminium-Molybdän-Orthophosphat, Calciumhydrogenphosphat, Zink-Calcium-Strontium Orthophosphat-Silicat, Zink-Aluminium-Polyphosphat, Strontium-Aluminium-Polyphosphat, Zink-Calcium-Aluminium-Strontium-Orthophosphat-Polyphosphat-Silikat, Calcium-Aluminium-Polyphosphat-Silikat. Weitere Beispiele umfassen Kombinationen anorganischer Phosphate mit schwerlöslichen, elektrochemisch aktiven organischen Korrosioninhibitoren wie mit Zn- oder Ca-Salzen von 5-Nitroisophthalsäure modifiziertes Zinkphosphat. Weiterhin können auch Eisenphosphid, Zinkhydroxyphosphid, Borosilikat-Pigmente wie Bariummetaborat oder Zinkborophosphate, Molybdate wie Zinkmolybdat, Natriumzinkmolybdate oder Calciummolybdat, Pigmente mit ionenaustauschenden Eigenschaften wie mit Calcium-Ionen modifiziertes amorphes $SiO_2$ oder entsprechend modifizierte Silikate, Metalloxide wie beispielsweise ZnO oder auch Metallpulver wie beispielsweise Zinkstaub eingesetzt werden. Selbstverständlich können auch typische organische Korrosionsschutzpigmente wie bspw. Zn- oder Ca-Salze von 5-Nitroisophthalsäure eingesetzt werden.

Passive Korrosionsschutzpigmente verlängern die Diffusionswege für korrosiv wirkende Komponenten und erhöhen dadurch die Korrosionsbeständigkeit. Beispiele umfassen vor allem plättchenförmige oder lamellenförmige Pigmente wie Glimmer, Hämatit, Schichtsilikate, lineare Polysilikate wie beispielsweise Wollastonit, Talk oder Metallplättchen wie Aluminium- oder Eisenplättchen.

Weitere Einzelheiten zu Korrosionsschutzpigmenten sind beispielsweise in "Pigments, 4.2 Anticorrosive Pigments" in Ullmann's Encyclopedia of Technical Chemistry, 6th Edition 2000, Electronic Release.

Bei den Pigmenten kann es sich auch um typische Farb- und/oder Effektpigment handeln.

Unter Effektpigmenten sind alle Pigmente zu verstehen, die einen plättchenförmigen Aufbau zeigen und einer Oberflächenbeschichtung spezielle dekorative Farbeffekte verleihen. Effektpigmente sind dem Fachmann bekannt. Beispiele umfassen reine Metallpigmente, wie z.B. Aluminium-, Eisen- oder Kupferpigmente, Interferenzpigmente, wie z.B. titandioxidbeschichteter Glimmer, eisenoxidbeschichteter Glimmer, mischoxidbeschichteter Glimmer (z.B. mit Titandioxid und $Fe_2O_3$), metalloxidbeschichtetes Aluminium, oder Flüssigkristallpigmente.

Bei Farbpigmenten handelt es sich insbesondere um übliche in der Lackindustrie einsetzbare organische oder anorganische Absorptionspigmente. Beispiele für organische Absorptionspigmente sind Azopigmente, Phthalocyanin-, Chinacridon- und Pyrrolopyrrolpigmente. Beispiele für anorganische Absorptionspigmente sind Eisenoxidpigmente, Titandioxid und Ruß.

Beispiele für Farbstoffe sind Azo-, Azin-, Anthrachinon-, Acridin-, Cyanin-, Oxazin-, Polymethin-, Thiazin-, Triarylmethan-Farbstoffe. Diese Farbstoffe können Anwendung finden als basische oder kationische Farbstoffe, Beizen-, Direkt-, Dispersions-, Entwicklungs-, Küpen-, Metallkomplex-, Reaktiv-, Säure-, Schwefel-, Kupplungs- oder substantive Farbstoffe.

Mit Füllstoffen lassen sich die Eigenschaften der Beschichtung, wie beispielsweise Härte, Rheologie oder die Orientierung der Effektpigmente beeinflussen. Füllstoffe sind häufig coloristisch unwirksam; d.h. sie weisen eine geringe Eigenabsorption auf und die Brechzahl ist ähnlich der Brechzahl des Beschichtungsmediums. Beispiele für Füllstoffe umfassen Talkum, Calciumcarbonat, Kaolin, Bariumsulfat, Magnesiumsilikat, Aluminiumsilikat, kristallines Siliziumdioxid, amorphe Kieselsäure, Aluminiumoxid, Mikrokugeln oder Mikrohohlkugeln z.B. aus Glas, Keramik oder Polymeren mit Größen von beispielsweise 0,1-10 $\mu$m. Weiterhin können als Füllstoffe beliebige feste inerte organische Partikel, wie z.B. Harnstoff-Formaldehyd-Kondensationsprodukte, mikronisiertes Polyolefinwachs oder mikronisiertes Amidwachs, eingesetzt werden. Die inerten Füllstoffe können jeweils auch in Mischung eingesetzt werden. Bevorzugt wird jedoch jeweils nur ein Füllstoff eingesetzt.

Die Komponenten (B") werden in einer Menge von 1 bis 70 Gew. % eingesetzt. Die genaue Menge wird vom Fachmann je nach den gewünschten Eigenschaften der Schicht festgelegt. Bevorzugt beträgt die Menge 5 bis 60 Gew. % und besonders bevorzugt 10 bis 50 Gew. %.

Bei der Verwendung von Pigmenten und/oder Füllstoffen haben sich dabei Pigment-Volumen-Konzentrationen (PVK) von 15 bis 40 Vol. %, bevorzugt 20 bis 40 Vol. % und besonders bevorzugt 20 bis 35 Vol % bewährt, ohne dass die Erfindung darauf beschränkt sein soll.

Die Art und Menge von Komponenten (B") werden vom Fachmann je nach dem Verwendungszweck der Schicht bestimmt. In einer besonders bevorzugten Ausführungsform der Erfindung werden keine chromhaltigen Komponenten (B") eingesetzt. Selbstverständlich können auch Gemische verschiedener Komponenten (B") eingesetzt werden.

Zum Grundierung vorgesehene Zubereitungen werden üblicherweise höher pigmentiert als zur Zwischen- oder Deckbeschichtung vorgesehene Zubereitungen.

Zur Grundierung vorgesehene Zubereitungen umfassen üblicherweise mindestens ein aktives Korrosionsschutzpigment, für Zwischenbeschichtungen vorgesehen Zubereitungen mindestens ein passives Korrosionsschutzpigment und Zubereitungen für Deckbeschichtungen mindestens ein Farbpigment und/oder einen Farbstoff.

In einer besonders bevorzugten Ausführungsform umfassen zur Grundierung vorgesehene Zubereitungen mindestens ein aktives Korrosionschutzpigment, mindestens einen Füllstoff sowie bevorzugt weiterhin mindestens ein Farbpigment.

Copolymer (C)

Zur Herstellung der erfindungsgemäß verwendeten Zubereitung für den atmosphärischen Korrosionsschutz können ein einziges Copolymer (C) oder auch mehrere unterschiedliche Copolymere (C) eingesetzt werden. Der Fachmann trifft unter den prinzipiell möglichen Copolymeren (C) je nach den gewünschten Eigenschaften der Korrosionsschutzschicht eine bestimmte Auswahl. Für den Fachmann ist selbstverständlich, dass nicht alle Arten von Copolymeren (C) für alle Arten von Bindemittelsystemen, Lösungsmitteln oder Oberflächen gleichermaßen gut geeignet sind.

Für den atmosphärischen Korrosionsschutz können bevorzugt Copolymere (C) mit COOH- und/oder Sulfonsäuregruppen eingesetzt werden. Ganz besonders bevorzugt sind Copolymere, welche Itaconsäure als Monomer (C2) umfassen.

Die erfindungsgemäß eingesetzten Copolymere (C) werden in einer Menge von 0,1 bis 40 Gew. %, bevorzugt 0,2 bis 20 Gew. % und besonders bevorzugt 0,5 bis 10 Gew. % eingesetzt, jeweils bezogen auf die Menge aller Komponenten der Formulierung.

Lösemittel (D")

Als Komponente (D") umfasst die Zubereitung für den atmosphärischen Korrosionsschutz ein geeignetes Lösemittel. Geeignete Lösemittel sind solche, welche in der Lage sind, die erfindungsgemäß verwendeten Komponenten zu lösen, zu dispergieren, zu suspendieren oder zu emulgieren, um einen gleichmäßigen Auftrag der Zubereitung auf die Oberfläche zu ermöglichen. Es kann sich dabei um organische Lösemittel oder um Wasser handeln. Selbstverständlich auch um Gemische verschiedener Lösemittel handeln.

Beispiele organischer Lösemittel umfassen Kohlenwasserstoffe wie Toluol, Xylol sowie insbesondere Gemische von Kohlenwasserstoffen bestimmter Siedebereiche, wie sie bei der Raffination von Rohöl erhalten werden, Ether wie THF oder Polyether wie Polyethylenglykol, Etheralkohole wie Butylglykol, Etherglykolacetate wie Butylgklykolacetat, Ketone wie Aceton, Alkohole wie Methanol, Ethanol oder Propanol.

Bevorzugt handelt es sich bei dem Lösemittel um Wasser oder ein überwiegend wässriges Lösungsmittelgemisch. Darunter sollen solche Gemische verstanden werden, die zumindest 75 Gew. %, bevorzugt mindestens 85 Gew. %, besonders bevorzugt mindestens 90 Gew. % und ganz besonders bevorzugt mindestens 95 Gew. % Wasser umfassen.

Bei weiteren Komponenten überwiegend wässriger Lösemittelgemische kann es sich um mit Wasser mischbare Lösungsmittel handeln. Beispiele umfassen insbesondere typische Colösemittel wie n-Butanol, Butylglykol, Butyldiglykol, N-Methyl-2-pyrrolidon oder N-Ethyl-2-pyrrolidon. Bei weiteren Komponenten kann es sich aber auch um mit Wasser nicht mischbare Lösemittel handeln. Derartige Lösemittel werden häufig als Filmbildehilfsmittel eingesetzt. Beispiele umfassen Butylglykolacetat, Butylglykoldiacetat oder 2,2,4-Trimethyl-1,3-pentandiol-1-isobutyrat (Texanol®).

Die Menge des Lösemittels oder Lösemittelgemisches (D") beträgt 5 bis 83,9 Gew. % bezüglich der Summe aller Komponenten der Formulierung. Sie wird vom Fachmann je nach den gewünschten Eigenschaften der Anstrichformulierung bestimmt. Bevorzugt beträgt die Menge 10 bis 74,8 Gew. %, besonders bevorzugt 20 bis 64,5 Gew. % und beispielsweise 30 bis 50 Gew. %.

Weitere Komponenten (E")

Über die Komponenten (A") bis (D") hinaus kann die erfindungsgemäß verwendete Zubereitung für den atmosphärischen Korrosionsschutz noch einen oder mehrere Hilfsstoffe und/oder Additive (E") umfassen. Derartige Hilfsstoffe und/oder Additive dienen zur Feinsteuerung der Eigenschaften der Schicht. Ihre Menge übersteigt im Regelfalle nicht 20 Gew. % bzgl. der Summe aller Komponenten mit Ausnahme der Lösemittel, bevorzugt nicht 10 %.

Beispiele geeigneter Zusatzstoffe zur Anwendung im atmosphärischen Korrosionsschutz umfassen Rheologiehilfsmittel, UV-Absorber, Lichtschutzmittel, Radikalfänger, Katalysatoren für die thermische Vernetzung, Slipadditive, Polymerisationsinhibitoren, Entschäumer, Emulgatoren, Entgasungsmittel, Netz- und Dipergiermittel, Haftvermittler, Verlaufsmittel, filmbildende Hilfsmittel, rheologiesteuernde Additive (Verdicker), Flammschutzmittel, Sikkative, Hautverhinderungsmittel, sonstige Korrosionsinhibitoren oder Wachse und Mattierungsmittel. Derartige Zusatzstoffe sind beispielsweise in »Lackadditive«, Hrsg. Johan Bieleman, Wiley-VCH, Weinheim, New York, 1998, oder DE-A 199 14 896, Spalte 13, Zeile 56, bis Spalte 15, Zeile 54 offenbart.

Die Zubereitung zur Ausführung des Verfahrens kann durch intensives Mischen aller Komponenten der Zubereitung hergestellt. Dem Fachmann sind geeignete Misch- oder Dispergieraggregate bekannt.

In einer bevorzugten Ausführungsform der Erfindung kann zunächst eine Dispersion aus dem Bindemittelsystem (A"), dem Copolymer (C) sowie zumindest einem Teil des Lösemittels (D") hergestellt werden. Sofern es sich bei dem Bindemittel (A") um eine Primärdispersion handelt, ist das Bindemittel naturgemäß vordispergiert. Sofern das Bindemittel als Feststoff vorliegt, wird zunächst eine Lösung bzw. eine Sekundärdispersion hergestellt. Das Copolymer (C) wird ebenfalls bevorzugt in einem Lösemittel gelöst, emulgiert oder dispergiert eingesetzt. Vorteilhaft werden hierzu die Lösungen bzw. Emulsionen der Copolymere (C) verwendet, die bei der Herstellung der Copolymere (C) anfallen, ohne dass die Copolymere vorher noch isoliert werden.

Die Komponenten (B") sowie ggf. weitere Komponenten (E") können anschließend in der Vordispersion gelöst bzw. dispergiert werden.

Ausführung des Verfahrens zum atmosphärischen Korrosionsschutz

Bei den Korrosionsschutzschichten kann es sich um alle Arten von Korrosionsschutzbeschichtungen handeln, wie beispielsweise Grundierungen (I), Zwischenbeschichtungen (II) und Deckbeschichtungen (III). Selbstverständlich kann es sich auch um Korrosionsschutzbeschichtungen handeln, welche die Eigenschaften von mindestens zwei dieser Schichten oder aller drei Schichten kombinieren, und somit zu einem vereinfachten Schichtaufbau beitragen. Weiterhin kann es sich um eine Fertigungsbeschichtung handeln. Hierunter versteht der Fachmann eine Schicht, die auf frisch gestrahlten Stahl aufgebracht werden kann, um Korrosionsschutz noch während der Fertigung von Stahlbauteilen, also beispielsweise während der Zusammenschweißens von Teilen, zu gewährleisten.

Das erfindungsgemäße Verfahren kann dem Erstschutz oder auch der Instandsetzung dienen.

Im Regelfalle empfiehlt es sich, die metallische Oberfläche für die Durchführung des erfindungsgemäßen Verfahrens in einem Verfahrensschritt (0) vorzubereiten, auch wenn dies nicht in jedem Fall absolut zwingend ist. Unter Oberflächenvorbereitung für die Durchführung von Korrosionsschutzmaßnahmen versteht der Fachmann die Reinigung der Oberfläche von allen Verunreinigungen sowie das Einstellen einer auf die Korrosionsschutzmaßnahme abgestimmten Oberflächenrauigkeit. Beispiele für Reinigungsverfahren umfassen das Reinigen mit Wasser oder Lösemitteln, Beizen mit geeigneten Formulierungen oder Hochdruckreinigen. Beispiele weiterer Maßnahmen umfassen Schleifen und insbesondere Strahlen der Oberfläche, beispielsweise Sandstrahlen sowie weiterhin Flammstrahlen. Es können hierbei alle anhaftenden Schichten bis hinunter zum blanken Metall abgetragen werden. Es ist aber auch möglich, unter Anwendung weniger intensiver Methoden nur schlecht haftende Schichten abzutragen, während intakte Schichten auf der Oberfläche verbleiben. Eine mögliche Technik hierzu ist das sogenannte Sweep-Strahlen.

Zur Ausführung des Verfahrens wird mindestens eine Korrosionsschutzschicht mit einer Dicke von mindestens 15 $\mu$m auf die metallische Oberfläche aufgebracht, wobei man die beschriebene, unter atmosphärischen Bedingungen vernetzbare Zubereitung einsetzt.

Die Korrosionsschutzschicht kann dabei unmittelbar auf die blanke metallische Oberfläche aufgebracht werden oder aber auf eine bereits mit einer Korrosionsschutzschicht vorbeschichtete Oberfläche.

Bevorzugt handelt es sich bei der mindestens einen Korrosionsschutzschicht um eine Grundierungsschicht (I), welche entweder direkt auf das blanke Metall oder auf eine eine Fertigungsbeschichtung aufweisende Metalloberfläche aufgebracht wird. Die optional vorhandene Fertigungsbeschichtung kann ebenfalls mit der erfindungsgemäßen Formulierung oder aber auch mittels einer anderen Formulierung erhalten werden.

Zum Aufbringen können die üblichen, dem Fachmann bekannten Techniken eingesetzt werden. Bevorzugt wird die Zubereitung aufgestrichen oder aufgespritzt.

Nach dem Aufbringen auf die Oberfläche härtet die aufgebrachte Beschichtung in Verfahrensschritt (2") unter atmosphärischen Bedingungen aus. Dies kann im einfachsten Falle durch das allmähliche Verdampfen des Lösemittels erfolgen. Je nach der Natur des eingesetzten Bindemittels können noch andere Vernetzungsprozesse ablaufen. Einzelheiten hierzu wurden bereits oben dargestellt.

Je nach der Dicke der gewünschten Korrosionsschutzschicht, kann die gesamte Schicht in einem einzigen Arbeitsgang aufgebracht werden, oder aber es können auch mehrere gleichartige Schichten nacheinander aufgebracht und jeweils gehärtet werden, um die gewünschte Gesamtschichtdicke der Korrosionsschutzschicht zu erreichen.

Auf die Grundierung (I) können noch weitere Korrosionsschutzschichten aufgebracht werden. Art und Anzahl der weiteren Schichten werden vom Fachmann bestimmt. Insbesondere kann die Grundierung (I) in weiteren Arbeitsgängen mit einer Zwischenschicht (II) und mit einer Deckschicht (III) versehen werden. Hierzu können im Prinzip beliebige Lacksysteme verwendet werden, vorausgesetzt, es treten in Kombination mit der Grundierung (I) keine unerwünschten Effekte auf. Durch das erfindungsgemäß verwendete Copolymer (C) wird die Haftung weiterer Schichten auf der Grundierung verbessert. Vorteilhaft können zur Grundierung (I), für die Zwischenschicht (II) sowie für die Deckschicht erfindungsgemäße Zubereitungen eingesetzt werden.

In einer weiteren, bevorzugten Ausführungsform des Verfahrens wird zunächst eine integrierte Grundierung (Ia) aufgebracht, welche direkt mit einem Decklack (III) überlackiert werden kann. Eine integrierte Grundierung kombiniert also die Eigenschaften der Grundierung (I) und der Zwischenschicht (III).

In einer weiteren, bevorzugten Ausführungsform der Erfindung wird nur eine einzige integrierte Korrosionsschutzschicht (Ib) aufgebracht, welche nicht überlackiert zu werden braucht. Eine integrierte Korrosionsschutzschicht kombiniert also die Eigenschaften aller drei Schichten.

Die Dicke der ausgehärteten, mindestens einen Korrosionsschutzschicht, beträgt erfindungsgemäß mindestens 15 $\mu$m, bevorzugt mindestens 25 $\mu$m, besonders bevorzugt mindestens 40 $\mu$m, ganz besonders bevorzugt mindestens 60 $\mu$m und beispielsweise mindestens 100 $\mu$m. Sie wird vom Fachmann je nach den gewünschten Eigenschaften und dem Einsatzzweck der Schicht festgelegt.

Fertigungsbeschichtungen sind üblicherweise dünn, beispielsweise 15 bis 25 $\mu$m. Die Dicke von Korrosionsschutzschichten, bei denen es sich nicht um Fertigungsschichten handelt, beträgt in der Regel mindestens 25 $\mu$m, bevorzugt mindestens 40 $\mu$m, besonders bevorzugt mindestens 60 $\mu$m und ganz besonders bevorzugt mindestens 100 $\mu$m. Die obere Grenze für die Gesamtschichtdicke im atmosphärischen Korrosionsschutz, d.h. die Dicke aller aufgebrachten Korrosionsschutzschichten zusammen, beträgt 2 mm, bevorzugt weniger als 1,5 mm, besonders bevorzugt weniger als 1 mm, ganz besonders bevorzugt weniger als 800 $\mu$m und insbesondere weniger als 500 $\mu$m.

Die folgenden Beispiele sollen die Erfindung näher erläutern.

Teil I - Synthese der eingesetzten Copolymere

Polymer 1:

Copolymer aus 45 Gew. % N-Vinylimidazol, 25 Gew. % Vinylphosphonsäure und 30 Gew. % Styrol

In einem 2I-Pilotrührwerk mit Ankerrührer und Innenthermometer werden 79 g Vinylphosphonsäure (95%-ige Lösung) und 30,9 Dimethylethanolamin in 171,6 g Butylglykol mit Stickstoff begast und auf 125 °C geheizt. Innerhalb von 5h werden ein Zulauf 1 aus 135 g Vinylimidazol und 90 g Styrol und innerhalb 6 h ein Zulauf 2 aus 36 g 2,2-Di(tert-butylperoxy)butan (Trigonox® D-C50; 50%-ige Lösung in einem aromatenfreiem Kohlenwasserstoff) in 100 g Butylglykol zugegeben. Die Reaktionsmischung wird weitere 2h bei 125 °C gerührt. Danach werden innerhalb 1 h 6 g 2,2-Di(tert-butylperoxy)-butan (Trigonox® D-C50; 50%-ige Lösung in Mineralöl) in 30 g Butylglykol zugegeben und weitere 3 h gerührt. Während dem Abkühlen werden 61,9 g Dimethylethanolamin, 30 g Butylglykol und 110 g vollentsalztem Wasser zugegeben. Man erhält eine braune Lösung.

$^1$H-NMR: Rest Vinylimidazolgehalt von 5% bezogen auf eingesetzt Vinylimidazol $^{31}$P-NMR: Rest Vinylphosphonsäuregehalt von < 1 % bezogen auf eingesetzte Vinylphosphonsäure.
Neutralisierungsgrad der sauren Gruppen: 25 %

Polymer 2:

Copolymer aus 55 Gew. % N-Vinylimidazol, 25 Gew. % Vinylphosphonsäure und 20 Gew. % Styrol

Es wurde wie in Beispiel 1 vorgegangen, nur wurden die Monomermengen an Vinylimidazol und Styrol in Zulauf 1 angepasst.
$^1$H-NMR: Rest Vinylimidazolgehalt von < 1 % bezogen auf eingesetzt Vinylimidazol $^{31}$P-NMR: Rest Vinylphosphonsäuregehalt von < 1 % bezogen auf eingesetzte Vinylphosphonsäure.
Neutralisierungsgrad der sauren Gruppen: 50 %

Polymer 3:

Copolymer aus 35 Gew. % N-Vinylimidazol, 35 Gew. % Vinylphosphonsäure und 30 Gew. % Styrol

Es wurde wie in Beispiel 1 vorgegangen, nur wurden die Monomermengen an Vinylimidazol und Vinylphosphonsäure in Zulauf 1 angepasst.
$^1$H-NMR: Rest Vinylimidazolgehalt von 2,5% bezogen auf eingesetzt Vinylimidazol $^{31}$P-NMR: Rest Vinylphosphonsäuregehalt von 0,8% bezogen auf eingesetzte Vinylphosphonsäure.
Neutralisierungsgrad der saueren Gruppen: 50 %

Polymer 4:

Copolymer aus 45 Gew. % N-Vinylimidazol, 25 Gew. % Itaconsäure und 30 Gew. % Styrol

In einem 2l-Pilotrührwerk mit Ankerrührer und Innenthermometer werden 75 g Itaconsäure und 171,6 g Butylglykol mit Stickstoff begast und auf 125 °C geheizt. Innerhalb von 5 h werden ein Zulauf 1 aus 135 g Vinylimidazol und 90 g Styrol und innerhalb 6 h ein Zulauf 2 aus 36 g 2,2-Di(tert-butylperoxy)butan (Trigonox® D-C50; 50%-ige Lösung in aromatenfreiem Kohlenwasserstoff) in 100 g Butylglykol zugegeben. Die Reaktionsmischung wird weitere 2h bei 125 °C gerührt. Danach werden innerhalb 1h 6 g 2,2-Di-(tert-butylperoxy)butan (Trigonox® D-C50; 50%-ige Lösung in Mineralöl) in 30 g Butylglykol zugegeben und weitere 3 h gerührt. Während dem Abkühlen werden 102,8 g Dimethylethanolamin, 50 g Butylglykol und 80 g vollentsalztem Wasser zugegeben. Man erhält eine braune Lösung mit einem Feststoffgehalt von 41,5%.
$^1$H-NMR: Rest Vinylimidazolgehalt von < 1% bezogen auf eingesetzt Vinylimidazol $^1$H-NMR: Rest Itaconsäuregehalt von < 1 % bezogen auf eingesetzte Itaconsäure.
Neutralisierungsgrad der saueren Gruppen: 0 %

Polymer 5:

Copolymer aus 40 Gew. % N-Vinylimidazol, 25 Gew. % Vinylphosphonsäure, 30 Gew. % Styrol und 5 Gew. % 2-Hydroxyethylacrylat

Es wurde wie in Beispiel 1 vorgegangen, nur wurde die Monomermenge an Vinylimidazol in Zulauf 1 angepasst und 15 g Hydroxyethylacrylat in Zulauf 1 zugefügt.
$^1$H-NMR: Rest Vinylimidazolgehalt von 1,1 % bezogen auf eingesetzt Vinylimidazol $^{31}$P-NMR: Rest Vinylphosphonsäuregehalt von < 0,1% bezogen auf eingesetzte Vinylphosphonsäure.
Neutralisierungsgrad der saueren Gruppen: 50 %

Polymer 6:

Copolymer aus 45 Gew. % N-Vinylimidazol, 25 Gew. % Acrylsäure und 30 Gew. % Styrol

In einem 2l-Pilotrührwerk mit Ankerrührer und Innenthermometer werden 171,6 g Butylglykol mit Stickstoff begast und auf 125 °C geheizt. Innerhalb von 5h werden ein Zulauf 1 aus 135 g Vinylimidazol, 90 g Styrol und 46,4 g Dimethylethanolamin und ein Zulauf 2 aus 75 g Acrylsäure und innerhalb 6 h ein Zulauf 3 aus 36 g 2,2-Di(tert-butyl-peroxy)butan (Trigonox® D-C50; 50%-ige Lösung in aromatenfreiem Kohlenwasserstoff) in 100 g Butylglykol zugegeben. Die Reaktionsmischung wird weitere 2h bei 125 °C gerührt. Danach werden innerhalb 1 h 6 g 2,2-Di(tert-butylperoxy) butan (Trigonox® D-C50; 50%-ige Lösung in Mineralöl) in 30 g Butylglykol zugegeben und weitere 3 h gerührt. Während dem Abkühlen werden 46,4 g Dimethylethanolamin, 30 g Butylglykol und 40 g vollentsalztem Wasser zugegeben. Man erhält eine braune Lösung.

$^1$H-NMR: Rest Vinylimidazolgehalt von < 0,1 % bezogen auf eingesetzt Vinylimidazol $^{31}$P-NMR: Rest Acryl-säuregehalt von < 0,1% bezogen auf eingesetzte Acrylsäure.

Neutralisierungsgrad der saueren Gruppen: 50 %

Polymer 7:

Copolymer aus 45 Gew. % N-Vinylimidazol, 25 Gew. % 2-Acrylamido-2-methyl-1-pro-pansulfonsäure und 30 Gew. % Styrol

In einem 2l-Pilotrührwerk mit Ankerrührer und Innenthermometer werden 171,6 g Butylglykol mit Stickstoff begast und auf 125 °C geheizt. Innerhalb von 5h werden ein Zulauf 1 aus 75 g 2-Acrylamido-2-methyl-1-propansulfonsäure, 135 g Vinylimidazol, 90 g Styrol, 30 g Butylglykol und 32,2 g Dimethylethanolamin und ein Zulauf 2 aus 36 g 2,2-Di-(tert-butylperoxy)butan (Trigonox® D-C50; 50%-ige Lösung in aromatenfreiem Kohlenwasserstoff) in 100 g Butylglykol zugegeben. Die Reaktionsmischung wird weitere 2h bei 125 °C gerührt. Danach werden innerhalb 1 h 6 g 2,2-Di(tert-butylperoxy)butan (Trigonox® D-C50; 50%-ige Lösung in Mineralöl) in 30 g Butylglykol zugegeben und weitere 3 h gerührt. Während dem Abkühlen werden 46,4 g Dimethylethanolamin, 60 g Butylglykol und 40 g vollentsalztem Wasser zugegeben. Man erhält eine braune Lösung.

$^1$H-NMR: Rest Vinylimidazolgehalt von < 1 % bezogen auf eingesetzt Vinylimidazol $^{31}$P-NMR: Rest 2-Acryl-amido-2-methyl-1-propansulfonsäuregehalt von < 1% bezogen auf eingesetzte 2-Acrylamido-2-methyl-1-propansulfonsäure

Neutralisierungsgrad der saueren Gruppen: 100%

Die Beispiele 1 und 4 wurden auch mit anderen Neutralisationsgraden wiederholt. Der Restmonomergehalt in Abhängigkeit vom Neutralisationsgrad für die Beispiele 1 bis 7 ist in Tabelle 1 zusammengefasst.

Zu Vergleichszwecken wurden die folgenden Polymere eingesetzt:

Polymer V1:

Polyvinylimidazol

In einem 1 Liter Rundkolben werden 276 g vollentsalztem Wasser vorgelegt und auf 80°C erhitzt. Über 3,5 h werden gleichzeitig ein Zulauf 1 aus 200 g Vinylimidazol, ein Zulauf 2 aus 8,0 g 2,2'-Azobis(2-methylpropanimidamid) dihydrochlorid in 100 g vollentsalztem Wasser und ein Zulauf 3 aus 4,0 g Mercaptoethanol in 100 g vollentsalztem Wasser zugefahren.. Es wird 1 h bei 80°C gerührt und anschließend über 1 h ein Zulauf 4 aus 1,0 g 2,2'-Azobis(2-methylpropanimidamid) dihydrochlorid in 20 g vollentsalztem Wasser zugegeben. Man rührt weitere 2h auf Reaktionstemperatur und erhält nach dem Abkühlen eine bräunlich klare Polymerlösung mit Feststoffgehalt 30,4 % und einem K-Wert von 18,3.

Polymer V2:

Polyvinylimidazol-Polyethylenoxid-Pfropfcopolmyer

In einem 2l-Pilotrührwerk mit Ankerrührer und Innenthermometer werden 420 g Polyethylenglykol mit $M_n$ 4000 g/mol (Pluriol® E 4000) mit Stickstoff begast und auf 100 °C erhiztzt. Innerhalb von 6h werden ein Zulauf 1 aus 280 g Vinylimidazol und innerhalb 7 h ein Zulauf 2 aus 6,3 g tert-Butylperoctoat in 20 g Dipropylenglykol zugegeben. Die Reaktionsmischung wird weitere 2h bei 100 °C gerührt. Danach werden dreimal 2,1 g tert-Butylperoctoat zugegeben und jeweils 2 h gerührt. Nach dem Abkühlen wird die Lösung auf Feststoffgehalt 25% eingestellt mit 700 g vollentsalztem Wasser. Man erhält eine leicht trübe braune Lösung. K-Wert = 24,4 (1 %ig in vollentsalztetem Wasser

Polymer V3:

Amidiertes Polyethylenimin

60,45 g Polyethylenimin ($M_n$ 800 g/mol) wurden unter Stickstoff bis 120°C erhitzt und 84,74 g Olsäure zugetropft. Die Reaktionsmischung wurde bei 160°C 12 Stunden gerührt und das entstehende Wasser abdestilliert. Umsatz 97% (bestimmt mittels Säurezahl und Aminzahl).

Tabelle 1: Variation des Neutralisierungsgrades während der Polymerisation und der Effekt auf das Restmonomergehalt

| Copolymer gemäß | Monomere | | | | Neutralisierungsgrad während der Polymerisation (%) | Rest VI bezogen auf eingesetzt VI | Rest VPS bezogen auf eingesetzt VPS |
|---|---|---|---|---|---|---|---|
| | A | B | C | D | | | |
| Beispiel 1 | 45 % VI | 25 % VPS | 30 % S | - | 100 | 16 | 1,6 |
| | dto. | dto. | dto. | - | 50 | 5 | < 1 |
| | dto. | dto. | dto. | - | 25 | < 1 | < 1 |
| | dto. | dto. | dto. | - | 0 | 6 | 8 |
| Beispiel 2 | 55% VI | 25 % VPS | 20 % S | - | 50 | < 1 | < 1 |
| Beispiel 3 | 35 % VI | 35 % VPS | 30 % S | - | 50 | 2,5 | < 1 |
| Beispiel 4 | 45 % VI | 25 % IS | 30 % S | - | 50 | 32 | < 1 |
| | dto. | dto. | dto. | - | 0 | < 1 | < 1 |
| Beispiel 5 | 40 % VI | 25 % VPS | 30 % S | 5 % HEA | 50 | 1 | <1 |
| Beispiel 6 | 45 % VI | 25 % AS | 30 % S | - | 50 | < 1 | < 1 |
| Beispiel 7 | 45 % VI | 25 % AMPS | 30 % S | - | 100 | < 1 | < 1 |
| Erläuterung der Abkürzungen: VI: Vinylimidazol; VPS : Vinylphosphonsäure; S: Styrol; IS: Itaconsäure; AS: Acrylsäure; AMPS: 2-Acrylamido-2-methyl-1-propansulfonsäure; HEA : Hydroxyethylacrylat | | | | | | | |

Teil II - Anwendungstechnische Prüfungen

Mit den erhaltenen Copolymeren wurden anwendungstechnische Versuche durchgeführt.

II-1: Integrierte Korrosionsschutzschichten

Es wurden Tests in 3 verschiedenen Coil-Coating-Lacken auf Basis von Epoxiden, Acrylaten sowie Polyurethanen durchgeführt.

Basisrezeptur für Coil-Coating-Lack (organisch) auf Basis Epoxybindemitteln

Für die Formulierung zur Herstellung einer integrierten Vorbehandlungsschicht wurden die folgenden Komponenten eingesetzt:

| Komponente | Beschreibung | Menge [Gewichtsteile] |
|---|---|---|
| Bindemittel mit vernetzenden Gruppen | Epoxybindemittel auf Basis Bisphenol A (Molekulargewicht 1000 g/mol, Viskosität 13dPas/s und 50% Festkörpergehalt) | 26,9 |
| Füllstoffe | Hydrophile pyrogene Kieselsäure (Aerosil® 200V, Firma Degussa) | 0,16 |
| | Talkum Finntalk M5 | 2,9 |
| | Weißpigment Titan Rutil 2310 | 10,8 |
| | mit Calciumionen modifiziertes Siliziumdioxid (Shieldex®, Grace Division) | 3,0 |
| | Zinkphosphat (Sicor® ZP-BS-M, Waardals Kjemiske Fabriken) | 4,1 |
| | Schwarzpigment (Sicomix® Schwarz, BASF AG) | 1,0 |
| Lösemittel | Butylglykol, | 5,0 |

Die Komponenten wurden in einem geeigneten Rührgefäß in der angegebenen Reihenfolge vermischt und mit einem Dissolver während zehn Minuten vordispergiert. Die resultierende Mischung wurde in einer Perlmühle mit Kühlmantel überführt und mit 1,8-2,2 mm-SAZ-Glasperlen vermischt. Das Mahlgut wurde während 1 h 30' Minuten gemahlen. Anschließend wurde das Mahlgut von den Glasperlen abgetrennt.

Dem Mahlgut wurden unter Rühren in der angegebenen Reihenfolge mit 5,9 Gewichtsteilen eines blockierten Hexamethylendiisocyanates (Desmodur® VP LS 2253, Fa. Bayer AG) und 0,4 Gewichtsteilen eines handelsüblichen zinnfreien Vernetzungskatalysators (Borchi® VP 0245, Fa. Borchers GmbH) zugegeben.

Basisrezeptur für Coil-Coating-Lack (wässrig) auf Basis Acrylatbindemittel

Als vernetzbares Bindemittel wurde eine anionisch mit Aminen stabilisierte, wässrige Acrylatdispersion (Feststoffgehalt 30 Gew. %) aus den Hauptmonomeren n-Butylacrylat, Styrol, Acrylsäure und Hydroxypropylmethacrylat eingesetzt.

In einem geeigneten Rührgefäß wurden in der angegebenen Reihenfolge 18,8 Gewichtsteile der Acrylatdispersion, 4,5 Gewichtsteile eines Dispergieradditives, 1,5 Gewichtsteile eines Verlaufsmittels mit Entschäumerwirkung, 5,5 Gewichtsteile eines Melaminharzes als Vernetzer (Luwipal® 072, BASF AG), 0,2 Gewichtsteile einer hydrophilen pyrogenen Kieselsäure (Aerosil ® 200V der Firma Degussa), 3,5 Gewichtsteile Talkum Finntalk M5, 12,9 Gewichtsteile Weißpigment Titan Rutil 2310, 8,0 Gewichtsteile der Acrylatdisperpsion, 3,5 Gewichtsteile mit Calciumionen modifiziertes Siliziumdioxid (Shieldex® der Firma Grace Division), 4,9 Gewichtsteile Zinkphosphat (Sicor® ZP-BS-M der Firma Waardals Kjemiske Fabriken), 1,2 Gewichtsteile Schwarzpigment (Sicomix® Schwarz der Firma BASF AG) vermischt und mit einem Dissolver während zehn Minuten vordispergiert. Die resultierende Mischung wurde in einer Perlmühle mit Kühlmantel überführt und mit 1,8-2,2 mm-SAZ-Glasperlen vermischt. Das Mahlgut wurde während 45 Minuten gemahlen. Anschließend wurde das Mahlgut von den Glasperlen abgetrennt.

Das Mahlgut wurde unter Rühren in der angegebenen Reihenfolge mit 27 Gewichtsteilen der Acrylatdispersion, 1,0 Gewichtsteilen eines Entschäumers, 3,2 Prozent einer blockierten Sulfonsäure, 1,5 Gewichtsteilen eines Entschäumers und 1,0 Gewichtsteilen eines Verlaufshilfsmittels versetzt.

Zusatz der erfindungsgemäß verwendeten Copolymere (C) zum Lack

Den beschriebenen Coil-Coating-Lacken wurden jeweils 5 Gew. % der gemäß den Beispielen 1 bis 7 synthetisierten Copolymere (C) (gerechnet als festes Copolymer bzgl. der festen Komponenten der Formulierung) zugesetzt. Es wurden jeweils direkt die gemäß den Beispielen erhaltenen, Butylglykol-haltigen Lösungen eingesetzt.

Beschichtung von Stahl und Aluminiumblechen

Für die Beschichtungsversuche wurden verzinkte Stahlplatten der Sorte Z, Dicke 0,9 mm (OEHDG 2, Firma Chemetall) und Aluminiumplatten AlMgSi (AA6016, Firma Chemetall) eingesetzt. Diese wurden vorher nach bekannten Methoden gereinigt. Die beschriebenen Coil-Coating-Lacke mit Hilfe von Stabrakeln auf in einer solchen Nassschichtdicke appliziert, dass nach der Härtung in einem Durchlauftrockner bei einer Umlufttemperatur von 185 °C und einer Objekttemperatur von 171 °C Beschichtungen einer Trockenschichtdicke von 6 μm resultierten.

Zu Vergleichszwecken wurden auch Beschichtungen ohne den Zusatz der Copolymere hergestellt.

Test der korrosionsinhibierenden Wirkung

Um die korrosionsinhibierende Wirkung der erfindungsgemäßen Beschichtungen zu testen, wurden die verzinkten Stahlplatten 10 Wochen dem VDA Klimawechseltest (VDA Prüfblatt 621 - 415 Feb 82) unterzogen.

Bei diesem Test (siehe graphische Darstellung unten) werden die Proben zunächst für einen Tag einem Salzsprühtest ausgesetzt (5 % NaCl-Lösung, 35°C) und anschließend 3 x wechselweise Feuchtklima (40°C, 100% rel. Feuchte) und Trockenklima (22°C, 60% rel. Feuchte) ausgesetzt. Ein Zyklus wird durch eine 2-tägige Trockenklimaphase beendet. Ein Zyklus ist im folgenden schematisch dargestellt.

Es werden insgesamt 10 solcher Belastungs-Zyklen nacheinander durchgeführt.

Nach Beendigung der Korrosionsbelastung wurden Stahlplatten visuell durch Vergleich mit vorgegebenen Standards ausgewertet. Es wurde sowohl die Bildung von Korrosionsprodukten auf der unbeschädigten Lackfläche als auch die Unterwanderungsneigung an Kante und Ritz beurteilt.

Die Bewertung der Proben erfolgt aufgrund eines Vergleichs mit der Vergleichsprobe ohne Zusatz der korrosionsinhibierenden Copolymere.

Die korrosionsinhibierende Wirkung der Stahlplatten wurde weiterhin durch einen Salzsprühtest nach DIN 50021 vorgenommen.

An Aluminiumplatten wurde der essigsaure Salzsprühtest ESS (DIN 50021, Jun 88) durchgeführt. Nach Beendigung der Korrosionsbelastung die Tafeln visuell ausgewertet. Dabei wurden die kreisförmigen Enthaftungen auf der gesamten Lackfläche bewertet.

Für alle Tests wurden die Lackschichten eingeritzt; im Falle der Stahlplatten durch die Zinkschicht hindurch bis auf die Stahlschicht.

Zur Bewertung der Proben wurden die folgenden Noten vergeben:

0    Korrosionsschäden wie bei der Nullprobe
+    weniger Korrosionsschäden als bei der Nullprobe
++    wesentlich weniger Korrosionsschäden als bei der Nullprobe
-    mehr Korrosionsschäden als bei der Nullprobe

Die Ergebnisse des Tests sind in den Tabellen 2 bis 4 schematisch dargestellt.

Mechanische Tests der Lackschicht:

Die mechanischen Tests wurden mit den oben beschriebenen, beschichteten Stahlblechen durchgeführt.

T-Biegeprüfung (T-Bend-Test):

Durchführung gemäß DIN EN 13523-7. Das Prüfverfahren dient zur Ermittlung der Widerstandsfähigkeit einer organischen Beschichtung auf einem metallischen Substrat gegen Rissbildung, wenn dieses um bestimmte Radien gebogen wird.

Die Tests werden bei Raumtemperatur durchgeführt. Dazu werden aus dem beschichteten Metall Teststreifen geschnitten. Die Streifen werden -mit der beschichteten Seite nach Außen- nach den in der Norm beschriebenen Prozeduren nach und nach zur einer Schnecke gebogen, wie im Folgenden schematisch gezeigt.

Das Blech wird also mehrfach gebogen, wobei die Biegeradien mit jedem zusätzlichen Biegevorgang abnehmen. Die Biegestellen werden jeweils unmittelbar nach dem Biegen auf Risse untersucht.

Als Ergebnis wird der kleinste Biegeradius angegeben, um den das Metallblech ohne Auftreten von Rissen gebogen werden kann. Die Ergebnisse werden in T, jeweils auf halbe oder ganze T aufgerundet, angegeben. Für die Messwerte T gilt der Zusammenhang:

$$T = r / d$$

r =     Biegeradius (innen) in cm
d =     Blechdicke in cm

Je kleiner der T-Wert, desto besser die Biegefestigkeit des Lackes.

Lackhaftung beim Biegen (T-Tape Test):

Durchführung gemäß DIN EN 13523-7. Das Prüfverfahren dient zur Ermittlung der Haftung von Lacken unter Biegebeanspruchung bei Raumtemperatur (20°C).
Hierzu wird ein Testblech wie oben beschrieben schrittweise zu einer Schecke gebogen.

Auf die Biegestellen wird jeweils unmittelbar nach dem Biegen ein transparentes Klebeband mit einer definierten Klebekraft geklebt. (25 mm breit, mit einer Klebkraft von (10 ± 1) N je 25 mm Breite, geprüft nach IEC 60454-2:1994, z. B. Tesa® 4104).

Das Klebeband wird danach wieder abgezogen und untersucht, ob durch das Klebeband Lack von der Metalloberfläche gerissen wurden. Als Ergebnis wird der kleinste Biegeradius angegeben, um den das Metallblech ohne Abreißen von Lack beim Test mit Klebeband gebogen werden kann. Die Ergebnisse werden in T, jeweils auf halbe oder ganze T aufgerundet, angegeben. Für die Messwerte T gilt der obige Zusammenhang.

Je kleiner der T-Tape-Wert, desto besser die Haftfestigkeit des Lackes beim Biegen.

MEK-Test:

Durchführung gemäß EN ISO 13523-11. Diese Methode charakterisiert den Vernetzungsgrad von Lackfilmen durch Beanspruchung mit Lösemitteln.

Dabei wird eine mit Methylethylketon getränkte Mullkompresse mit definiertem Auflagegewicht über den Lackfilm gerieben. Die Anzahl der Doppelhübe bis zur ersten visuellen Schädigung des Lackfilm ist der anzugebende MEK-Wert.

Die Ergebnisse der mechanischen Tests sind auch in den Tabellen 2 bis 4 enthalten.

Tabelle 2: Test der Copolymere in wässrigem Polyurethan-Lack

| Beispiel Nr. | Eingesetztes Copolymer | Monomere | | | | Stahlblech, verzinkt | | | | | Aluminiumblech |
|---|---|---|---|---|---|---|---|---|---|---|---|
| | | A | B | C | D | T-Bend | T-Tape | MEK | Klimawechseltest | Salzsprühtest | Essigsaurer Salzsprühtest |
| Beispiel 1 | Polymer 1 | 45 % VI | 25 % VPS | 30 % S | - | 2 | 0,5 | 90 | + | 0 | + |
| Beispiel 2 | Polymer 2 | 55% VI | 25 % VPS | 20 % S | - | 2 | 1 | 85 | + | + | + |
| Beispiel 3 | Polymer 3 | 35 % VI | 35 % VPS | 30 % S | - | 2 | 1 | 98 | + | + | - |
| Beispiel 4 | Polymer 4 | 45 % VI | 25 % IS | 30 % S | - | 2 | 0 | 80 | + | + | - |
| Beispiel 5 | Polymer 5 | 40 % VI | 25 % VPS | 30 % S | 5 % HEA | 2 | 1 | 75 | - | 0 | + |
| Beispiel 6 | Polymer 6 | 45 % VI | 25 % AS | 30 % S | - | 2 | 1,5 | 85 | + | 0 | - |
| Beispiel 7 | Polymer 7 | 45 % VI | 25 % AMPS | 30 % S | - | 2 | 1,5 | 30 | 0 | 0 | - |
| Vergleich 1 | ohne | - | - | - | - | 2,5 | 1,5 | 100 | 0 | 0 | 0 |
| Vergleich 2 | Polymer V1 | 100 % VI | - | - | - | > 3 | > 3 | 18 | - | nicht getestet | nicht getestet |
| Erläuterung der Abkürzungen: VI : Vinylimidazol; VPS : Vinylphosphonsäure; S: Styrol; IS: Itaconsäure; AS: Acrylsäure; AMPS: 2-Acrylamido-2-methyl-1-propansulfonsäure; HEA : Hydroxyethylacrylat | | | | | | | | | | | |

EP 2 013 297 B1

Tabelle 3: Test der Copolymere in wässrigem Acrylat-Lack

| Beispiel Nr. | Eingesetztes Copolymer | Monomere | | | | Stahlblech, verzinkt | | | | | Aluminiumblech |
| | | A | B | C | D | T-Bend | T-Tape | MEK | Klimawechseltest | Salzsprühtest | Essigsaurer Salzsprühtest |
|---|---|---|---|---|---|---|---|---|---|---|---|
| Beispiel 8 | Polymer 1 | 45 % VI | 25 % VPS | 30 % S | - | 3 | 2,5 | 20 | 0 | + | + |
| Beispiel 9 | Polymer 2 | 55 % VI | 25 % VPS | 20 % S | - | 3 | 2,5 | 15 | + | + | + |
| Beispiel 10 | Polymer 3 | 35 % VI | 35 % VPS | 30 % S | - | 3 | 2,5 | 10 | 0 | + | + |
| Beispiel 11 | Polymer 4 | 45 % VI | 25 % IS | 30 % S | - | 3 | 3 | 15 | 0 | - | + |
| Beispiel 12 | Polymer 5 | 40 % VI | 25 % VPS | 30 % S | 5 % HEA | 3 | 2,5 | 20 | + | + | + |
| Beispiel 13 | Polymer 6 | 45 % VI | 25 % AS | 30 % S | - | 3 | 2,5 | 40 | - | - | + |
| Beispiel 14 | Polymer 7 | 45 % VI | 25 % AMPS | 30 % S | - | 3 | 3 | 50 | - | - | - |
| Vergleich 3 | Ohne | - | - | - | - | 3 | 3 | 15 | 0 | 0 | 0 |
| Vergleich 4 | Polymer V2 | VI-PEO-Propfcopolymer | | | | > 3 | 3 | 10 | - | 0 | - |
| Erläuterung der Abkürzungen: VI : Vinylimidazol; VPS : Vinylphosphonsäure; S: Styrol; IS: Itaconsäure; AS: Acrylsäure; AMPS: 2-Acrylamido-2-methyl-1-propansulfonsäure; HEA : Hydroxyethylacrylat | | | | | | | | | | | |

Tabelle 4: Test der Copolymere in organischem Epoxy-Lack

| Beispiel Nr. | Eingesetztes Copolymer | Monomere | | | | Stahlblech, verzinkt | | | | | Aluminiumblech |
| | | A | B | C | D | T-Bend | T-Tape | MEK | Klimawechseltest | Salzsprühtest | Essigsaurer Salzsprühtest |
|---|---|---|---|---|---|---|---|---|---|---|---|
| Beispiel 15 | Polymer 1 | 45 % VI | 25 % VPS | 30%S | - | 2,5 | 2,5 | 10 | + | + | - |
| Beispiel 16 | Polymer 2 | 55 % VI | 25 % VPS | 20%S | - | 2,5 | 1,5 | 9 | + | + | - |
| Beispiel 17 | Polymer 3 | 35 % VI | 35 % VPS | 30%S | - | 2,5 | 1,5 | 14 | + | + | - |
| Beispiel 18 | Polymer 4 | 45 % VI | 25 % IS | 30%S | - | 2,5 | 1,5 | 13 | + | + | - |
| Beispiel 19 | Polymer 5 | 40 % VI | 25 % VPS | 30%S | 5 % HEA | 2,5 | 1,5 | 12 | - | + | - |
| Beispiel 20 | Polymer 6 | 45 % VI | 25 % AS | 30%S | - | 2,5 | 2 | 19 | + | + | - |
| Beispiel 21 | Polymer 7 | 45 % VI | 25 % AMPS | 30%S | - | 2,5 | 1,5 | 13 | + | + | - |
| Vergleich 5 | Ohne | - | - | - | - | 2,5 | 1,5 | 18 | 0 | 0 | 0 |
| Vergleich 6 | Polymer V3 | Amidiertes Polyethylenimin | | | | 3 | 3 | 4 - 9 | - | nicht getestet | - |
| Erläuterung der Abkürzungen: VI : Vinylimidazol; VPS : Vinylphosphonsäure; S: Styrol; IS: Itaconsäure; AS: Acrylsäure; AMPS: 2-Acrylamido-2-methyl-1-propansulfonsäure; HEA : Hydroxyethylacrylat | | | | | | | | | | | |

Die Beispiele zeigen, dass mit den erfindungsgemäß verwendeten Copolymeren deutliche Verbesserungen beim Korrosionsschutz und/oder den mechanischen Eigenschaften der Lackschichten erzielt werden können. Das Ausmaß hängt jeweils von der gewählten metallischen Oberfläche sowie dem gewählten Lacksystem ab.

In einem wässrigen Polyurethanlack (siehe Tabelle 2) werden insbesondere die mechanischen Eigenschaften des Lackes beim Biegen des Bleches signifikant verbessert. Die Rissfestigkeit (T-Bend) und insbesondere die Haftung (T-Tape) des Lackes nehmen mit den erfindungsgemäß verwendeten Polymeren signifikant zu (Kleinere Werte bedeuten jeweils bessere Werte). Mit Polyvinylimidazol alleine (Vergleichsversuch 2) verschlechtern sich die mechanischen Eigenschaften des Lackes. Die Korrosionsschutzeigenschaften verbessern sich im Regelfalle, insbesondere auf verzinktem Stahl.

Bei wässrigen Acrylat-Lacken ist die Verbesserung der Korrosionsschutzeigenschaften besonders auf Aluminium ausgeprägt. Das Polymer bewirkt noch eine leichte Verbesserung der Haftung.

Bei Epoxy-Lacken verändern sich die mechanischen Eigenschaften kaum. Auf Stahl wird eine deutliche Verbesserung des Korrosionsschutzes erreicht.

<u>II-2: Atmosphärischer Korrosionsschutz</u>

Zur anwendungstechnischen Prüfung wurde eine Korrosionsschutzformulierung auf Basis einer handelsüblichen wässrigen Styrol-Acrylat-Dispersion für Anstrichstoffe (Acronal® Optive 410, Fa. BASF Corp.) eingesetzt. Die verwendete Dispersion weist die folgenden Eigenschaften auf:

| | |
|---|---|
| Feststoffgehalt | 49 - 51 % |
| pH | 7,5 - 8,5 |
| Brookfield-Viskosität | 500 - 1000 cps |
| Dichte | 1,06 g/cm3 |
| MFFT (Minimum Film Forming Temperature (nach ASTM D 2354)) | ca. 12°C |
| Partikelgröße | ca. 110 nm |

Zur Herstellung der erfindungsgemäßen Formulierungen wurden der genannten Styrol-Acrylat-Dispersion jeweils 3 Gew. % der Copolymere zugegeben (gerechnet als festes Copolymer bezüglich des Feststoffanteils der Dispersion). Hierzu wurden die oben beschriebenen Butylglykol-haltigen Lösungen der Copolymere eingesetzt.

Zu Vergleichszwecken wurde eine Probe ohne Zusatz eines polymeren Korrosionsinhibitors hergestellt.

<u>Richtformulierung für Korrosionsschutz-Grundierungen</u>

Unter Verwendung der erhaltenen wässrigen Dispersionen aus Styrol-Acrylat-Copolymer mit und ohne Zusatz von Korrosionsschutzpolymeren wurden Zubereitungen gemäß folgender Vorschrift hergestellt:

393,4 g der jeweiligen wässrigen Polymerdispersion werden mit 2,2 g eines handelsüblichen Entschäumers für Lacke (Mischung von Polysiloxanen und hydrophoben Feststoffen in Polyglykol; BYK® 022, Fa. Byk) versetzt, anschließend wird mittels eines Dispermaten eine Mischung bestehend aus 0,6 g eines anionischen Dispergiermittels (saurer Phosphorsäureester eines Fettalkoholalkoxylates; Lutensit® A-EP, Fa. BASF AG), 11,0 g konz. Ammoniak und 58,6 g Wasser zugegeben. Unter Rühren wird weiterhin eine Mischung aus 7,2 g Phenoxypropanol (Filmbildehilfsmittel) und 7,2 g Benzin 180-210°C (Filmbildehilfsmittel) eingearbeitet.

Anschließend werden 85,0 g eines Hämatit-Pigmentes (Bayferrox® 130 M, Fa. Lanxess), 82,1 g eines Korrosionsschutzpigmentes auf Basis Zinkphosphat (Heucophos® ZPZ, modifiziertes Zinkphosphat, Fa. Heubach), 36,0 g Magnesiumsilikat (Füllstoff; Talkum 20 M 2, Fa. Luzenac) sowie 127,8 g eines Füllstoffes auf Basis Bariumsulfat und Zinksulfid (30 Gew. % ZnS) (Litopone® L) zugegeben. Die gesamte Mischung wird für mindestens 30 Minuten mit Glasperlen (ø 3mm) dispergiert.

Daraufhin werden unter weiterem Rühren weitere 166,4 g Polymerdispersion, 1,9 g BYK® 022 sowie 3,7 g einer 1:1-Mischung aus Wasser und einem handelsüblichen Korrosionsinhibitor (Korrosionsinhibitor L 1, Fa. Erbslöh) zugegeben und die Glasperlen abgesiebt.

Zum Abschluss wird der Ansatz mit einer Mischung aus 3,7 g einer 25 % igen Lösung eines handelsüblichen Verdickungsmittels auf Urethan-Basis (Collacral PU 85, Fa. BASF AG) und 13,2 g Butylglykol (Lösungsmittel) versetzt sowie gegebenenfalls der pH-Wert mit konz. Ammoniak auf ca. 9,5 nachgestellt. Man erhält 1000 g einer Korrosionsschutz-Grundierung mit 61 % Feststoffgehalt und einer Pigment/Volumen-Konzentration (PVK) von 23%.

Applikation der Formulierungen auf Stahlbleche, Vorbereitung für den Salzsprühtest

Die zu prüfenden Grundierungen wurden mit vollentsalztem Wasser auf die gewünschte Viskosität (300 bis 1000 mPas (ICI mit Rotothinner Kugel))verdünnt und auf ein gereinigtes unverzinktes Stahlblech (200 x 80 x 0,9 mm) mit einem Kastenrakel aufgezogen; die Spaltgröße wird dabei so gewählt, dass sich eine Trockenschichtdicke von 60-85 $\mu$m ergibt.

Nach sechstägiger Trocknung bei Raumtemperatur sowie einer eintägigen Temperung bei 50°C wurden die Rückseite des Prüfblechs zum Schutz vor Korrosion mit einem lösemittel-basierten Lack beschichtet sowie die Kanten mit Tesa-Film abgeklebt.

Abschließend wurde das Prüfblech auf der mit der zu testenden Grundierung beschichteten Seite mit einem Ritzstachel bis auf das Substrat geritzt.

Salzsprühtest / Auswertung

Mit den Proben wurde ein Salzsprühtest gemäß DIN EN ISO 7253 (Prüfdauer 240 h) durchgeführt.

Die Auswertung erfolgte hierbei durch optischen Vergleich der getesteten Proben mit den von ISO 7253 vorgegebenen Standards.

Zur Bewertung des Korrosionsverhalten:

Flächenkorrosion

Anteil der korrodierten Fläche im Verhältnis zur Gesamtfläche des Prüfbleches in [%].

Gitterschnitt (gemäß DIN EN ISO 2409)

Mittels des Gitterschnitt-Tests wird die Haftung des Lackes auf dem Untergrund ermittelt. Hierzu wird nach dem Salzsprühtest ein Gitter aus mehreren Schnitten (Linienabstand 2 mm) in den Lack eingeschnitten, mit einem Klebeband beklebt und danach das Klebeband abgezogen. Bewertet wurde das Aussehen des Gitters nach Abziehen des Klebebandes. Es werden Noten von 0 bis 5 nach folgender Skala vergeben.

GT 0 Die Schnittränder sind vollkomen glatt und keines der Quadrate des Gitters ist abgeplatzt
GT 1 Die beschichtung ist längst der Schnittränder abgeplatzt, die abgeplatzte Fläche ist aber nicht wesentlich größer als 15% der Gitterschnittfläche.
GT 2 Die abgeplatzte Gitterfläche ist deutlich größer als 15% aber nicht wesentlich größer als 35%.
GT 3 Die Beschichtung ist längst der Schnittränder teilweise oder ganz in breiten Streifen abgeplatzt oder einige Quadrate sind ganz oder teilweise abgeplatzt.
GT 4 Die betroffene Gitterschnittfläche ist aber nicht wesentlich größer als 65%.
GT 5 Jedes Abplatzen, das stärker als GT 4 eingestuft werden kann.

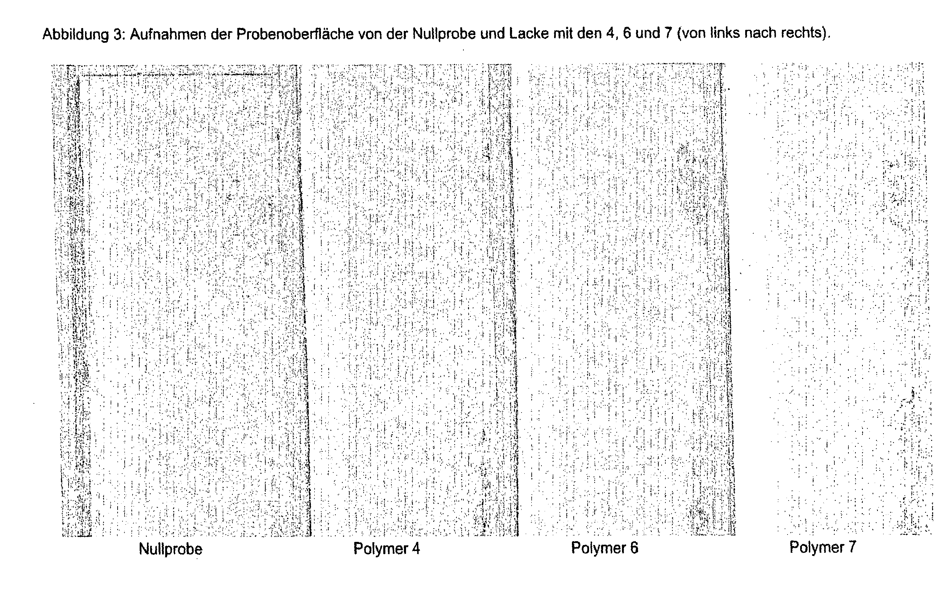

Die Ergebnisse der Tests sind in Tabelle 5 zusammengestellt. Aufnahmen der Probenoberfläche von der Nullprobe und Lacken mit den Polymeren 4, 6 und 7 sind in Abbildung 3 zusammengestellt.

Die Daten in Tabelle 5 sowie Abbildung 3 zeigen, dass die Korrosion durch die erfindungsgemäß verwendeten Copolymere (Polymere 4, 6 und 7) im Vergleich zu einer Probe ohne polymere Korrosionsinhibitoren deutlich gehemmt wird. Während bei der Vergleichsprobe ohne Korrosionsinhibitor 50-80 % der Fläche korrodiert sind, sind es bei den erfindungsgemäßen Beispielen nur 10 bis 20 % der Fläche.

Tabelle 5: Zusammenstellung der Resultate im Salzsprühtest

| | Nullprobe | Polymer 4 | Polymer 6 | Polymer 7 |
|---|---|---|---|---|
| Polymerer Korrosionsinhibitor | Kein | VI/IS/S (45/25/30) | VI/AS/S (45/25/30) | VI/AMPS/S (45/25/30) |
| pH-Wert der Formulierung | 8,5 | 8,8 | 8,9 | 8,6 |
| Schichtdicke [$\mu$m] | 63 - 88 | 65 - 76 | 63-84 | 69 - 80 |
| Flächenkorrosion | 50 - 80% | ca. 10% | 10-20% | ca. 20% |
| Gitterschnitt nach Salzsprühtest | Gt 5 | Gt 0 | Gt 0-1 | Gt 0-1 |

**Patentansprüche**

1. Verfahren zum Aufbringen von Korrosionsschutzschichten auf metallische Oberflächen, bei dem man die metallische Oberfläche mit einer Zubereitung, mindestens umfassend ein härtbares und/oder vernetzbares Bindemittelsystem (A), eine Komponente (B), ausgewählt aus der Gruppe von feinteiligen Füllstoffen, Pigmenten oder Farbstoffen, sowie ein polymeres Korrosionsschutzmittel (C) behandelt, **dadurch gekennzeichnet, dass** es sich bei dem polymeren Korrosionsschutzmittel um ein Copolymer (C) handelt, welches aus folgenden monomeren Bausteinen aufgebaut ist:

   (C1) 25 bis 65 Gew. % N-Vinylimidazol,
   (C2) 15 bis 45 Gew. % mindestens eines monoethylenisch ungesättigten Monomers, welches mindestens eine Säuregruppe umfasst,
   (C3) 15 bis 45 Gew. % mindestens eines monoethylenisch ungesättigten, aromatischen Kohlenwasserstoffes, sowie
   (C4) optional 0 bis 15 Gew. % von weiteren -von (C1) bis (C3) verschiedenenmonoethylenisch ungesättigten Monomeren,

   wobei die Menge jeweils auf die Gesamtmenge aller monomeren Baueinheiten im Copolymer bezogen ist.

2. Verfahren gemäß Anspruch 1, **dadurch gekennzeichnet, dass** es sich bei Monomer (C3) um Styrol handelt.

3. Verfahren gemäß Anspruch 1 oder 2, **dadurch gekennzeichnet, dass** es sich bei den Säuregruppen von Monomer (C2) um mindestens eine ausgewählt aus der Gruppe von Carboxylgruppen, Phosphorsäuregruppen, Phosphonsäuregruppen und Sulfonsäuregruppen handelt.

4. Verfahren gemäß einem der Ansprüche 1 bis 3, **dadurch gekennzeichnet, dass** die Säuregruppen ganz oder teilweise neutralisiert sind.

5. Verfahren gemäß einem der Ansprüche 1 bis 4, **dadurch gekennzeichnet, dass** die Menge von Monomer (C1) 30 bis 60 Gew. %, von Monomer (C2) 20 bis 40 Gew. % und von Monomer (C3) 20 bis 40 Gew. % beträgt.

6. Verfahren gemäß einem der Ansprüche 1 bis 5, **dadurch gekennzeichnet, dass** mindestens ein Monomer (C4) in einer Menge von 1 bis 15 Gew. % vorhanden ist.

7. Verfahren gemäß Anspruch 6, **dadurch gekennzeichnet, dass** es sich bei Monomer (C4) um ein OH-Gruppen umfassendes, monoethylenisch ungesättigtes Monomer handelt.

8. Verfahren gemäß einem der Ansprüche 1 bis 7, **dadurch gekennzeichnet, dass** es sich bei der metallischen Oberfläche um die Oberfläche von Stahl, Zink oder Zinklegierungen, Aluminium oder Aluminiumlegierungen handelt.

9. Verfahren gemäß einem der Ansprüche 1 bis 8, **dadurch gekennzeichnet, dass** es sich um ein Verfahren zum Aufbringen integrierter Vorbehandlungsschichten mit einer Dicke von 1 bis 25 $\mu$m handelt, mindestens umfassend die Schritte

   (1') Aufbringen einer vernetzbaren Zubereitung auf die metallische Oberfläche, wobei die Zubereitung mindestens

   (A) 20 bis 70 Gew. % mindestens eines thermisch und/oder photochemisch vernetzbaren Bindemittelsystems (A'),
   (B) 20 bis 70 Gew. % mindestens eines anorganischen feinteiligen Füllstoffes (B') mit einer mittleren Partikelgröße von weniger als 10 $\mu$m,
   (C) 0,25 bis 40 Gew. % des Copolymers (C), sowie
   (D) ein Lösemittel (D'),

   umfasst, mit der Maßgabe, dass sich die Gew. %-Angaben auf die Summe aller Komponenten mit Ausnahme des Lösemittels beziehen, sowie
   (2') thermisches und/oder photochemisches Vernetzen der aufgebrachten Schicht.

**10.** Verfahren gemäß Anspruch 9, **dadurch gekennzeichnet, dass** es sich bei den Säuregruppen von Monomer (C2) um Phosphorsäuregruppen und/oder Phosphonsäuregruppen handelt.

**11.** Verfahren gemäß Anspruch 10, **dadurch gekennzeichnet, dass** es sich bei Monomer (C2) um Vinylphosphonsäure handelt.

**12.** Verfahren gemäß einem der Ansprüche 9 bis 11, **dadurch gekennzeichnet, dass** es sich bei der metallischen Oberfläche um die Oberfläche von elektrolytisch verzinktem oder heiß verzinktem Stahl handelt.

**13.** Verfahren gemäß einem der Ansprüche 9 bis 12, **dadurch gekennzeichnet, dass** es sich bei der Metalloberfläche um die Oberfläche eines Bandmetalls handelt, und man das Aufbringen der integrierten Vorbehandlungsschicht mittels eines kontinuierlichen Verfahrens vornimmt

**14.** Verfahren gemäß Anspruch 13, **dadurch gekennzeichnet, dass** man die Beschichtung mittels eines Walz-, Sprüh- oder Tauchverfahrens vornimmt.

**15.** Verfahren gemäß einem der Ansprüche 9 bis 14, **dadurch gekennzeichnet, dass** die metallische Oberfläche vor dem Beschichten mit der Zubereitung in einem zusätzlichen Reinigungsschritt (0) gereinigt wird.

**16.** Verfahren gemäß einem der Ansprüche 9 bis 15, **dadurch gekennzeichnet, dass** man die Vernetzung thermisch vornimmt und Bindemittelsysteme ausgewählt aus der Gruppen von Polyestern (A1'), Epoxidharzen (A2'), Polyurethanen (A3') oder Polyacrylaten (A4') sowie mindestens einen zusätzlichen Vernetzer einsetzt.

**17.** Verfahren gemäß Anspruch 16, **dadurch gekennzeichnet, dass** es sich bei dem Vernetzer um ein blockiertes Isocyanat oder um ein reaktives Melaminharz handelt.

**18.** Verfahren gemäß Anspruch 16 oder 17, **dadurch gekennzeichnet, dass** man die Vernetzung bei einer Temperatur von 100°C bis 250°C vornimmt.

**19.** Verfahren gemäß einem der Ansprüche 9 bis 18, **dadurch gekennzeichnet, dass** die Dicke der integrierten Vorbehandlungsschicht 3 bis 15 $\mu$m beträgt.

**20.** Formkörper mit einer metallischen Oberfläche, welche mit einer integrierten Vorbehandlungsschicht mit einer Dicke von 1 bis 25 $\mu$m beschichtet ist, erhältlich durch ein Verfahren gemäß einem der Ansprüche 9 bis 18.

**21.** Formkörper gemäß Anspruch 20, **dadurch gekennzeichnet, dass** es sich bei der metallischen Oberfläche um Stahl, Zink- oder Zinklegierungen, Aluminium oder Aluminiumlegierungen handelt.

**22.** Formkörper gemäß Anspruch 21, **dadurch gekennzeichnet, dass** die integrierte Vorbehandlungsschicht noch mit einer oder mehreren Lackschichten überlackiert ist.

**23.** Formkörper gemäß Anspruch 22, **dadurch gekennzeichnet, dass** es sich bei dem Formkörper um eine Automobilkarosserie oder Karosserieteile handelt.

**24.** Formkörper gemäß Anspruch 23, **dadurch gekennzeichnet, dass** es sich bei dem Formkörper um Bauelemente zur Verkleidung handelt.

**25.** Verfahren gemäß einem der Ansprüche 1 bis 8, **dadurch gekennzeichnet, dass** es sich um ein Verfahren zum atmosphärischen Korrosionsschutz handelt, bei dem man eine Korrosionsschutzschicht mit einer Dicke von mindestens 15 $\mu$m aufbringt, mindestens umfassend die folgenden Schritte

> (1 ") Aufbringen einer unter atmosphärischen Bedingungen härtbaren Zubereitung auf die blanke oder vorbeschichtete metallische Oberfläche, wobei die Zubereitung mindestens

>> (A) 15 bis 70 Gew. % mindestens eines unter atmosphärischen Bedingungen härtbaren Bindemittelsystems (A"),
>> (B) 1 bis 70 Gew. % mindestens einer Komponente (B") ausgewählt aus der Gruppe von feinteiligen Füllstoffen, Pigmenten oder Farbstoffen,

(C) 0,1 bis 40 Gew. % des Copolymers (C), sowie
(D) 5 bis 83,9 Gew. % mindestens eines Lösemittels (D"),

wobei die Mengen jeweils auf die Gesamtmenge aller Komponenten der Formulierung bezogen sind, sowie
(2") Härten der aufgebrachten Schicht unter atmosphärischen Bedingungen.

26. Verfahren gemäß Anspruch 25, **dadurch gekennzeichnet, dass** es sich bei den Säuregruppen von Monomer (C2) um Carboxylgruppen und/oder Sulfonsäuregruppen handelt.

27. Verfahren gemäß Anspruch 26, **dadurch gekennzeichnet, dass** es sich bei Monomer (C2) um Itaconsäure handelt.

28. Verfahren gemäß einem der Ansprüche 25 bis 27, **dadurch gekennzeichnet, dass** es sich bei dem Bindemittelsystem um mindestens eines ausgewählt aus der Gruppe von wässrigen oder überwiegend wässrigen Dispersionen von Polyacrylaten bzw. Styrol-Acrylat-Copolymeren (A1"), Styrol-Alkadien-Polymeren (A2"), Polyurethanen (A3") oder Alkydharzen (A4") handelt.

29. Verfahren gemäß einem der Ansprüche 25 bis 28, **dadurch gekennzeichnet, dass** es sich um die Oberflächen von metallischen Bauwerken oder Metallkonstruktionen handelt.

30. Verfahren gemäß Anspruch 29, **dadurch gekennzeichnet, dass** es sich um die Oberfläche von Brücken, Strommasten, Tanks, Containern, chemischen Anlagen, Gebäuden, Dächern, Rohren, Kupplungen, Flanschen, Schiffen, Kränen, Pfählen oder Spundwänden handelt.

31. Verfahren gemäß einem der Ansprüche 25 bis 30, **dadurch gekennzeichnet dass** die Schichtdicke der ausgehärteten Schicht mindestens 25 $\mu$m beträgt.

32. Copolymer umfassend mindestens drei verschiedene monomere Einheiten,
**dadurch gekennzeichnet, dass** das Copolymer aus folgenden monomeren Bausteinen aufgebaut ist:

(C1) 25 bis 65 Gew. % N-Vinylimidazol,
(C2) 15 bis 45 Gew. % mindestens eines monoethylenisch ungesättigten Monomers, welches mindestens eine Säuregruppe umfasst,
(C3) 15 bis 45 Gew. % mindestens eines monoethylenisch ungesättigten, aromatischen Kohlenwasserstoffes, sowie
(C4) optional 0 bis 15 Gew. % von weiteren -von (C1) bis (C3) verschiedenenmonoethylenisch ungesättigten Monomeren,

wobei die Menge jeweils auf die Gesamtmenge aller monomeren Baueinheiten im Copolymer bezogen ist.

33. Copolymer gemäß Anspruch 32, **dadurch gekennzeichnet, dass** es sich bei Monomer (C3) um Styrol handelt.

34. Copolymer gemäß einem der Ansprüche 32 oder 33, **dadurch gekennzeichnet, dass** es sich bei den Säuregruppen von Monomer (C2) um mindestens eine ausgewählt aus der Gruppe von Carboxylgruppen, Phosphorsäuregruppen, Phosphonsäuregruppen und Sulfonsäuregruppen handelt.

35. Copolymer gemäß Anspruch 34, **dadurch gekennzeichnet, dass** es sich bei den Säuregruppen von Monomer (C2) um Phosphorsäuregruppen und/oder Phosphonsäuregruppen handelt.

36. Copolymer gemäß Anspruch 35, **dadurch gekennzeichnet, dass** es sich bei Monomer (C2) um Vinylphosphonsäure handelt.

37. Copolymer gemäß Anspruch 34, **dadurch gekennzeichnet, dass** es sich bei den Säuregruppen von Monomer (C2) um Carboxylgruppen und/oder Sulfonsäuregruppen handelt.

38. Copolymer gemäß Anspruch 37, **dadurch gekennzeichnet, dass** es sich bei Monomer (C2) um Itaconsäure handelt.

39. Copolymer gemäß einem der Ansprüche 32 bis 38, **dadurch gekennzeichnet, dass** die Säuregruppen ganz oder teilweise neutralisiert sind.

40. Copolymer gemäß einem der Ansprüche 32 bis 39, **dadurch gekennzeichnet, dass** die Menge von Monomer (C1) 30 bis 60 Gew. %, von Monomer (C2) 20 bis 40 Gew. % und von Monomer (C3) 20 bis 40 Gew. % beträgt.

41. Copolymer gemäß einem der Ansprüche 32 bis 40, **dadurch gekennzeichnet**, mindestens ein Monomer (C4) in einer Menge von 1 bis 15 Gew. % vorhanden ist.

42. Copolymer gemäß Anspruch 41, **dadurch gekennzeichnet, dass** es sich bei Monomer (C4) um ein OH-Gruppen umfassendes monoethylenisch ungesättigtes Monomer handelt.

43. Zubereitung zum Aufbringen von Korrosionsschutzschichten auf metallische Oberflächen umfassend mindestens ein härtbares oder vernetzbares Bindemittelsystem (A), eine Komponente (B), ausgewählt aus der Gruppe von feinteiligen Füllstoffen, Pigmenten oder Farbstoffen, sowie ein polymeres Korrosionsschutzmittel (C), **dadurch gekennzeichnet, dass** es sich bei dem Korrosionsschutzmittel um ein Copolymer (C) gemäß einem der Ansprüche 32 bis 42 handelt.

44. Zubereitung gemäß Anspruch 43 zum Aufbringen integrierter Vorbehandlungsschichten umfassend mindestens die folgenden Komponenten:

(A) 20 bis 70 Gew. % mindestens eines thermisch und/oder photochemisch vernetzbaren Bindemittelsystems (A'),
(B) 20 bis 70 Gew. % mindestens eines anorganischen feinteiligen Füllstoffes (B')mit einer mittleren Partikelgröße von weniger als 10 $\mu$m,
(C) 0,25 bis 40 Gew. % des Copolymers (C), sowie
(D) ein Lösemittel,

mit der Maßgabe, dass sich die Gew. %-Angaben auf die Summe aller Komponenten mit Ausnahme des Lösemittels beziehen.

45. Zubereitung gemäß Anspruch 43 zum Aufbringen von Korrosionsschutzschichten auf metallische Oberflächen für den atmosphärischen Korrosionsschutz umfassend mindestens die folgenden Komponenten:

(A) 15 bis 70 Gew. % mindestens eines unter atmosphärischen Bedingungen härtbaren Bindemittelsystems (A"),
(B) 1 bis 70 Gew. % mindestens einer Komponente (B") ausgewählt aus der Gruppe von feinteiligen Füllstoffen, Pigmenten oder Farbstoffen,
(C) 0,1 bis 40 Gew. % des Copolymers (C), sowie
(D) 5 bis 83,9 Gew. % mindestens eines Lösemittels (D"),

wobei die Mengen jeweils auf die Gesamtmenge aller Komponenten der Formulierung bezogen sind.

**Claims**

1. A method of applying a corrosion control coat to a metallic surface by treating the metallic surface with a preparation at least comprising a curable and/or crosslinkable binder system (A), a component (B) selected from the group of finely divided fillers, pigments or dyes, and a polymeric corrosion preventative (C), wherein said polymeric corrosion preventative is a copolymer (C) synthesized from the following monomeric building blocks:

(C1) 25% to 65% by weight of N-vinylimidazole,
(C2) 15% to 45% by weight of at least one monoethylenically unsaturated monomer which comprises at least one acid group,
(C3) 15% to 45% by weight of at least one monoethylenically unsaturated aromatic hydrocarbon, and
(C4) optionally 0% to 15% by weight of further, non-(C1 to C3) monoethylenically unsaturated monomers,

the amount being based in each case on the total amount of all monomeric structural units in the copolymer.

2. The method according to claim 1, wherein monomer (C3) comprises styrene.

3. The method according to claim 1 or 2, wherein the acid groups of monomer (C2) comprise at least one selected from the group of carboxyl groups, phosphoric acid groups, phosphonic acid groups, and sulfonic acid groups.

4. The method according to any one of claims 1 to 3, wherein the acid groups are wholly or partly neutralized.

5. The method according to any one of claims 1 to 4, wherein the amount of monomer (C1) is 30% to 60%, of monomer (C2) is 20% to 40%, and of monomer (C3) is 20% to 40% by weight.

6. The method according to any one of claims 1 to 5, wherein at least one monomer (C4) is present in an amount of 1% to 15% by weight.

7. The method according to claim 6, wherein monomer (C4) comprises a monoethylenically unsaturated monomer comprising OH groups.

8. The method according to any one of claims 1 to 7, wherein said metallic surface is the surface of steel, zinc, zinc alloy, aluminum or aluminum alloy.

9. The method according to any one of claims 1 to 8, which comprises a method of applying an integrated pretreatment layer having a thickness of 1 to 25 $\mu$m, at least comprising the steps of

   (1') applying a crosslinkable preparation to the metallic surface, the preparation comprising at least

   (A) 20% to 70% by weight of at least one thermally and/or photochemically crosslinkable binder system (A'),
   (B) 20% to 70% by weight of at least one inorganic finely divided filler (B') having an average particle size of less than 10 $\mu$m,
   (C) 0.25% to 40% by weight of the copolymer (C), and
   (D) a solvent (D'),

   with the proviso that the weight percentages are based on the sum of all of the components bar the solvent, and also
   (2') thermally and/or photochemically crosslinking the applied layer.

10. The method according to claim 9, wherein the acid groups of monomer (C2) are phosphoric acid groups and/or phosphonic acid groups.

11. The method according to claim 10, wherein monomer (C2) comprises vinylphosphonic acid.

12. The method according to any of claims 9 to 11, wherein said metallic surface is the surface of electrolytically galvanized or hot dip galvanized steel.

13. The method according to any one of claims 9 to 12, wherein said metal surface is the surface of a coil metal and the integrated pretreatment layer is applied by means of a continuous process.

14. The method according to claim 13, wherein coating is performed by means of a rolling, spraying or dipping process.

15. The method according to any one of claims 9 to 14, wherein said metallic surface prior to coating with the preparation is cleaned in an additional cleaning step (0).

16. The method according to any one of claims 9 to 15, wherein the crosslinking is performed thermally and binder systems selected from the groups of polyesters (A1'), epoxy resins (A2'), polyurethanes (A3') or polyacrylates (A4') and also at least one additional crosslinker are employed.

17. The method according to claim 16, wherein the crosslinker is a blocked isocyanate or a reactive melamine resin.

18. The method according to claim 16 or 17, wherein crosslinking is performed at a temperature of 100°C to 250°C.

19. The method according to any one of claims 9 to 18, wherein the thickness of the integrated pretreatment layer is 3 to 15 $\mu$m.

**20.** A shaped article having a metallic surface coated with an integrated pretreatment layer having a thickness of 1 to 25 µm, obtainable by a method according to any one of claims 9 to 18.

**21.** The shaped article according to claim 20, wherein said metallic surface is steel, zinc, zinc alloy, aluminum or aluminum alloy.

**22.** The shaped article according to claim 21, wherein the integrated pretreatment layer has additionally been overcoated with one or more coating films.

**23.** The shaped article according to claim 22, which is an automobile body or bodywork component.

**24.** The shaped article according to claim 23, which is a structural element for paneling.

**25.** The method according to any one of claims 1 to 8, which is a method of atmospheric corrosion control and involves applying a corrosion control coat having a thickness of at least 15 □m, at least comprising the following steps:

(1'') applying a preparation which is curable under atmospheric conditions to the bright or precoated metallic surface, said preparation comprising at least

(A) 15% to 70% by weight of at least one binder system curable under atmospheric conditions (A''),
(B) 1% to 70% by weight of at least one component (B'') selected from the group of finely divided fillers, pigments or dyes,
(C) 0.1% to 40% by weight of the copolymer (C), and
(D) 5% to 83.9% by weight of at least one solvent (D''),

the amounts being based in each case on the total amount of all of the components of the formulation, and
(2'') curing the applied layer under atmospheric conditions.

**26.** The method according to claim 25, wherein the acid groups of monomer (C2) are carboxyl groups and/or sulfonic acid groups.

**27.** The method according to claim 26, wherein monomer (C2) comprises itaconic acid.

**28.** The method according to any one of claims 25 to 27, wherein the binder system is at least one selected from the group of aqueous or predominantly aqueous dispersions of polyacrylates and/or styrene-acrylate copolymers (A1''), styrene-alkadiene polymers (A2''), polyurethanes (A3'') or alkyd resins (A4'').

**29.** The method according to any one of claims 25 to 28, wherein the surface is the surface of metallic structures or metal constructions.

**30.** The method according to claim 29, wherein the surface is the surface of bridges, power masts, tanks, containers, chemical plants, buildings, roofs, pipes, couplings, flanges, ships, cranes, posts or bulkheads.

**31.** The method according to any one of claims 25 to 30, wherein the thickness of the cured coat is at least 25 µm.

**32.** A copolymer comprising at least three different monomeric units, wherein the copolymer is synthesized from the following monomeric building blocks:

(C1) 25% to 65% by weight of N-vinylimidazole,
(C2) 15% to 45% by weight of at least one monoethylenically unsaturated monomer which comprises at least one acid group,
(C3) 15% to 45% by weight of at least one monoethylenically unsaturated aromatic hydrocarbon, and
(C4) optionally 0% to 15% by weight of further, non- (C1 to C3) monoethylenically unsaturated monomers,

the amount being based in each case on the total amount of all monomeric structural units in the copolymer.

**33.** The copolymer according to claim 32, wherein monomer (C3) comprises styrene.

**34.** The copolymer according to either of claims 32 and 33, wherein the acid groups of monomer (C2) comprise at least one selected from the group of carboxyl groups, phosphoric acid groups, phosphonic acid groups, and sulfonic acid groups.

**35.** The copolymer according to claim 34, wherein the acid groups of monomer (C2) are phosphoric acid groups and/or phosphonic acid groups.

**36.** The copolymer according to claim 35, wherein monomer (C2) comprises vinylphosphonic acid.

**37.** The copolymer according to claim 34, wherein the acid groups of monomer (C2) are carboxyl groups and/or sulfonic acid groups.

**38.** The copolymer according to claim 37, wherein monomer (C2) comprises itaconic acid.

**39.** The copolymer according to any one of claims 32 to 38, wherein the acid groups are wholly or partly neutralized.

**40.** The copolymer according to any one of claims 32 to 39, wherein the amount of monomer (C1) is 30% to 60%, of monomer (C2) is 20% to 40%, and of monomer (C3) is 20% to 40% by weight.

**41.** The copolymer according to any one of claims 32 to 40, wherein at least one monomer (C4) is present in an amount of 1% to 15% by weight.

**42.** The copolymer according to claim 41, wherein monomer (C4) comprises a monoethylenically unsaturated monomer comprising OH groups.

**43.** A preparation for applying a corrosion control coat to a metallic surface, comprising at least one curable or crosslinkable binder system (A), a component (B) selected from the group of finely divided fillers, pigments or dyes, and a polymeric corrosion preventative (C), wherein the corrosion preventative is a copolymer (C) according to any one of claims 32 to 42.

**44.** The preparation according to claim 43 for applying an integrated pretreatment layer, comprising at least the following components:

(A) 20% to 70% by weight of at least one thermally and/or photochemically crosslinkable binder system (A'),
(B) 20% to 70% by weight of at least one inorganic finely divided filler (B') having an average particle size of less than 10 $\mu$m,
(C) 0.25% to 40% by weight of the copolymer (C), and
(D) a solvent,

with the proviso that the weight percentages are based on the sum of all of the components bar the solvent.

**45.** A preparation according to claim 43 for applying a corrosion control coat to a metallic surface for atmospheric corrosion control, comprising at least the following components:

(A) 15% to 70% by weight of at least one binder system curable under atmospheric conditions (A''),
(B) 1% to 70% by weight of at least one component (B'') selected from the group of finely divided fillers, pigments or dyes,
(C) 0.1% to 40% by weight of the copolymer (C), and
(D) 5% to 83.9% by weight of at least one solvent (D''),

the amounts being based in each case on the total amount of all of the components of the formulation.

**Revendications**

**1.** Procédé d'application de couches anticorrosion sur des surfaces métalliques, selon lequel la surface métallique est traitée avec une préparation comprenant au moins un système de liant durcissable et/ou réticulable (A), un composant (B) choisi dans le groupe constitué par les charges finement divisées, les pigments ou les colorants, ainsi qu'un agent anticorrosion polymère (C), **caractérisé en ce que** l'agent anticorrosion polymère est un copolymère (C) formé à partir des constituants monomères suivants :

(C1) 25 à 65 % en poids de N-vinylimidazole,
(C2) 15 à 45 % en poids d'au moins un monomère monoéthyléniquement insaturé comprenant au moins un groupe acide,
(C3) 15 à 45 % en poids d'au moins un hydrocarbure aromatique monoéthyléniquement insaturé, et
(C4) éventuellement 0 à 15 % en poids de monomères monoéthyléniquement insaturés supplémentaires différents de (C1) à (C3),

la quantité se rapportant à chaque fois à la quantité totale de toutes les unités constitutives monomères dans le copolymère.

2. Procédé selon la revendication 1, **caractérisé en ce que** le monomère (C3) est le styrène.

3. Procédé selon la revendication 1 ou 2, **caractérisé en ce que** les groupes acides du monomère (C2) sont au moins un groupe choisi dans le groupe constitué par les groupes carboxyle, les groupes acide phosphorique, les groupes acide phosphonique et les groupes acide sulfonique.

4. Procédé selon l'une quelconque des revendications 1 à 3, **caractérisé en ce que** les groupes acides sont neutralisés en totalité ou en partie.

5. Procédé selon l'une quelconque des revendications 1 à 4, **caractérisé en ce que** la quantité de monomère (C1) est de 30 à 60 % en poids, de monomère (C2) de 20 à 40 % en poids et de monomère (C3) de 20 à 40 % en poids.

6. Procédé selon l'une quelconque des revendications 1 à 5, **caractérisé en ce qu'**au moins un monomère (C4) est présent en une quantité de 1 à 15 % en poids.

7. Procédé selon la revendication 6, **caractérisé en ce que** le monomère (C4) est un monomère monoéthyléniquement insaturé comprenant des groupes OH.

8. Procédé selon l'une quelconque des revendications 1 à 7, **caractérisé en ce que** la surface métallique est une surface d'acier, de zinc ou d'alliages de zinc, d'aluminium ou d'alliages d'aluminium.

9. Procédé selon l'une quelconque des revendications 1 à 8, **caractérisé en ce qu'**il s'agit d'un procédé d'application de couches de prétraitement intégrées d'une épaisseur de 1 à 25 $\mu$m, comprenant au moins les étapes suivantes :

(1') l'application d'une préparation réticulable sur la surface métallique, la préparation comprenant au moins :

(A) 20 à 70 % en poids d'au moins un système de liant thermiquement et/ou photochimiquement réticulable (A'),
(B) 20 à 70 % en poids d'au moins une charge inorganique finement divisée (B') d'une taille de particule moyenne inférieure à 10 $\mu$m,
(C) 0,25 à 40 % en poids du copolymère (C), ainsi que
(D) un solvant (D'),

à condition que les % en poids se rapportent à la somme de tous les composants à l'exception du solvant, ainsi que
(2') la réticulation thermique et/ou photochimique de la couche appliquée.

10. Procédé selon la revendication 9, **caractérisé en ce que** les groupes acides du monomère (C2) sont des groupes acide phosphorique et/ou des groupes acide phosphonique.

11. Procédé selon la revendication 10, **caractérisé en ce que** le monomère (C2) est l'acide vinylphosphonique.

12. Procédé selon l'une quelconque des revendications 9 à 11, **caractérisé en ce que** la surface métallique est une surface d'acier électrolytiquement zingué ou thermiquement zingué.

**13.** Procédé selon l'une quelconque des revendications 9 à 12, **caractérisé en ce que** la surface métallique est la surface d'une bande métallique et l'application de la couche de prétraitement intégrée est réalisée par un procédé continu.

**14.** Procédé selon la revendication 13, **caractérisé en ce que** le revêtement est réalisé par un procédé de cylindrage, de pulvérisation ou d'immersion.

**15.** Procédé selon l'une quelconque des revendications 9 à 14, **caractérisé en ce que** la surface métallique est purifiée lors d'une étape de purification (0) supplémentaire avant le revêtement avec la préparation.

**16.** Procédé selon l'une quelconque des revendications 9 à 15, **caractérisé en ce que** la réticulation est réalisée thermiquement et des systèmes de liant choisis dans les groupes constitués par les polyesters (A1'), les résines époxydes (A2'), les polyuréthanes (A3') ou les polyacrylates (A4'), ainsi qu'au moins un agent de réticulation supplémentaire, sont utilisés.

**17.** Procédé selon la revendication 16, **caractérisé en ce que** l'agent de réticulation est un isocyanate bloqué ou une résine de mélamine réactive.

**18.** Procédé selon la revendication 16 ou 17, **caractérisé en ce que** la réticulation est réalisée à une température de 100 °C à 250 °C.

**19.** Procédé selon l'une quelconque des revendications 9 à 18, **caractérisé en ce que** l'épaisseur de la couche de prétraitement intégrée est de 3 à 15 $\mu$m.

**20.** Corps moulé à surface métallique, qui est revêtu avec une couche de prétraitement intégrée d'une épaisseur de 1 à 25 $\mu$m, pouvant être obtenu par un procédé selon l'une quelconque des revendications 9 à 18.

**21.** Corps moulé selon la revendication 20, **caractérisé en ce que** la surface métallique est de l'acier, du zinc ou des alliages de zinc, de l'aluminium ou des alliages d'aluminium.

**22.** Corps moulé selon la revendication 21, **caractérisé en ce que** la couche de prétraitement intégrée est revernie avec une ou plusieurs couches de vernis.

**23.** Corps moulé selon la revendication 22, **caractérisé en ce que** le corps moulé est une carrosserie automobile ou des parties de carrosserie.

**24.** Corps moulé selon la revendication 23, **caractérisé en ce que** le corps moulé consiste en des composants pour l'habillage.

**25.** Procédé selon l'une quelconque des revendications 1 à 8, **caractérisé en ce qu'**il s'agit d'un procédé de protection contre la corrosion atmosphérique, selon lequel une couche anticorrosion d'une épaisseur d'au moins 15 $\mu$m est appliquée, comprenant au moins les étapes suivantes :

(1'') l'application d'une préparation durcissable en conditions atmosphériques sur la surface métallique nue ou pré-revêtue, la préparation comprenant au moins :

(A) 15 à 70 % en poids d'au moins un système de liant durcissable en conditions atmosphériques (A''),
(B) 1 à 70 % en poids d'au moins un composant (B'') choisi dans le groupe constitué par les charges finement divisées, les pigments ou les colorants,
(C) 0,1 à 40 % en poids du copolymère (C), ainsi que
(D) 5 à 83,9 % en poids d'au moins un solvant (D''), les quantités se rapportant à chaque fois à la quantité totale de tous les composants de la formulation, ainsi que

(2'') le durcissement de la couche appliquée en conditions atmosphériques.

**26.** Procédé selon la revendication 25, **caractérisé en ce que** les groupes acides du monomère (C2) sont des groupes carboxyle et/ou des groupes acide sulfonique.

**27.** Procédé selon la revendication 26, **caractérisé en ce que** le monomère (C2) est l'acide itaconique.

**28.** Procédé selon l'une quelconque des revendications 25 à 27, **caractérisé en ce que** le système de liant est au moins un système choisi dans le groupe constitué par les dispersions aqueuses ou essentiellement aqueuses de polyacrylates ou de copolymères de styrène-acrylate (A1''), les polymères de styrène-alcadiène (A2''), les polyuréthanes (A3'') ou les résines alkydes (A4'').

**29.** Procédé selon l'une quelconque des revendications 25 à 28, **caractérisé en ce qu'**il s'agit des surfaces d'ouvrages métalliques ou de constructions métalliques.

**30.** Procédé selon la revendication 29, **caractérisé en ce qu'**il s'agit de la surface de ponts, de poteaux électriques, de réservoirs, de conteneurs, d'installations chimiques, d'édifices, de toits, de tubes, de raccords, de brides, de navires, de grues, de pieux ou de cloisons.

**31.** Procédé selon l'une quelconque des revendications 25 à 30, **caractérisé en ce que** l'épaisseur de couche de la couche durcie est d'au moins 25 $\mu$m,

**32.** Copolymère comprenant au moins trois unités monomères différentes, **caractérisé en ce que** le copolymère est formé à partir des constituants monomères suivants :

(C1) 25 à 65 % en poids de N-vinylimidazole,
(C2) 15 à 45 % en poids d'au moins un monomère monoéthyléniquement insaturé comprenant au moins un groupe acide,
(C3) 15 à 45 % en poids d'au moins un hydrocarbure aromatique monoéthyléniquement insaturé, ainsi que
(C4) éventuellement 0 à 15 % en poids d'autres monomères monoéthyléniquement insaturés différents de (C1) à (C3),

la quantité se rapportant à chaque fois à la quantité totale de toutes les unités constitutives monomères dans le copolymère.

**33.** Copolymère selon la revendication 32, **caractérisé en ce que** le monomère (C3) est le styrène.

**34.** Copolymère selon l'une quelconque des revendications 32 ou 33, **caractérisé en ce que** les groupes acides du monomère (C2) sont au moins un groupe choisi dans le groupe constitué par les groupes carboxyle, les groupes acide phosphorique, les groupes acide phosphonique et les groupes acide sulfonique.

**35.** Copolymère selon la revendication 34, **caractérisé en ce que** les groupes acides du monomère (C2) sont des groupes acide phosphorique et/ou des groupes acide phosphonique.

**36.** Copolymère selon la revendication 35, **caractérisé en ce que** le monomère (C2) est l'acide vinylphosphonique.

**37.** Copolymère selon la revendication 34, **caractérisé en ce que** les groupes acides du monomère (C2) sont des groupes carboxyle et/ou des groupes acide sulfonique.

**38.** Copolymère selon la revendication 37, **caractérisé en ce que** le monomère (C2) est l'acide itaconique.

**39.** Copolymère selon l'une quelconque des revendications 32 à 38, **caractérisé en ce que** les groupes acides sont neutralisés en totalité ou en partie.

**40.** Copolymère selon l'une quelconque des revendications 32 à 39, **caractérisé en ce que** la quantité de monomère (C1) est de 30 à 60 % en poids, de monomère (C2) de 20 à 40 % en poids et de monomère (C3) de 20 à 40 % en poids.

**41.** Copolymère selon l'une quelconque des revendications 32 à 40, **caractérisé en ce qu'**au moins un monomère (C4) est présent en une quantité de 1 à 15 % en poids.

**42.** Copolymère selon la revendication 41, **caractérisé en ce que** le monomère (C4) est un monomère monoéthyléniquement insaturé comprenant des groupes OH.

**43.** Préparation pour l'application de couches anticorrosion sur des surfaces métalliques, comprenant au moins un système de liant durcissable ou réticulable (A), un composant (B) choisi dans le groupe constitué par les charges finement divisées, les pigments ou les colorants, ainsi qu'un agent anticorrosion polymère (C), **caractérisé en ce que** l'agent anticorrosion est un copolymère (C) selon l'une quelconque des revendications 32 à 42.

**44.** Préparation selon la revendication 43, pour l'application de couches de prétraitement intégrées, comprenant au moins les composants suivants :

(A) 20 à 70 % en poids d'au moins un système de liant thermiquement et/ou photochimiquement réticulable (A'),
(B) 20 à 70 % en poids d'au moins une charge inorganique finement divisée (B') d'une taille de particule moyenne inférieure à 10 $\mu$m,
(C) 0,25 à 40 % en poids du copolymère (C), ainsi que
(D) un solvant,

à condition que les % en poids se rapportent à la somme de tous les composants à l'exception du solvant.

**45.** Préparation selon la revendication 43, pour l'application de couches anticorrosion sur des surfaces métalliques pour la protection contre la corrosion atmosphérique, comprenant au moins les composants suivants :

(A) 15 à 70 % en poids d'au moins un système de liant durcissable en conditions atmosphériques (A''),
(B) 1 à 70 % en poids d'au moins un composant (B'') choisi dans le groupe constitué par les charges finement divisées, les pigments ou les colorants,
(C) 0,1 à 40 % en poids du copolymère (C), ainsi que
(D) 5 à 83,9 % en poids d'au moins un solvant (D''),

les quantités se rapportant à chaque fois à la quantité totale de tous les composants de la formulation.

Abb. 1 Stand der Technik

Abb. 2 Erfindungsgemäße integrierte Vorbehandlung

Abbildung 3: Aufnahmen der Probenoberfläche von der Nullprobe und Lacke mit den 4, 6 und 7 (von links nach rechts).

Nullprobe          Polymer 4          Polymer 6          Polymer 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 200481128 A
- EP 1288338 A
- JP 7037034 B
- WO 9307190 A
- JP 2001215712 A
- DE 2547970 A
- DE 1223247
- EP 0699632 A1
- US 5483004 A
- WO 2005078025 A
- WO 2006084879 A
- DE 19914896 A
- WO 2005080484 A
- DE 19914896 A1
- DE 19632426 A1
- EP 157133 A
- WO 9946337 A
- EP 47380 A
- WO 2005005565 A
- US 5707941 A
- WO 2004101638 A

**In der Beschreibung aufgeführte Nicht-Patentliteratur**

- Paints and Coatings - Saturated Polyester Coatings. Ullmann's Encyclopedia of Industrial Chemistry. 2000
- **JOHAN BIELEMAN.** Lackadditive. Wiley-VCH, 1998
- Bandbeschichtung. Römpp Lexikon Lacke und Druckfarben. Georg Thieme Verlag, 1998, 55
- Paints and Coatings, 2.5. Acrylic Coatings. Ullmann's Encyclopedia of Technical Chemistry. 2000
- Paints and Coatings, 2.4.8. Polystyrene and Styrene Copolymers. Ullmann's Encyclopedia of Technical Chemistry. 2000
- Paints and Coatings, 2.9 Polyurethane Coatings. Ullmann's Encyclopedia of Technical Chemistry. 2000
- Paints and Coatings, 2.6. Alkyd Coatings. Ullmann's Encyclopedia of Technical Chemistry. 2000
- **CURT R. VINZENTZ.** Lackformulierung und Lackrezeptur. 2003, 188 ff
- Pigments, 4.2 Anticorrosive Pigments. Ullmann's Encyclopedia of Technical Chemistry. 2000
- Lackadditive. Wiley-VCH, 1998